(19) Europäisches Patentamt
European Patent Office
Office européen des brevets

(11) **EP 4 400 889 A1**

(12) **EUROPEAN PATENT APPLICATION**
published in accordance with Art. 153(4) EPC

(43) Date of publication:
**17.07.2024 Bulletin 2024/29**

(51) International Patent Classification (IPC):
**G02B 13/00** *(2006.01)*   **G02B 13/18** *(2006.01)*

(21) Application number: **22882944.6**

(52) Cooperative Patent Classification (CPC):
**G02B 13/00; G02B 13/18**

(22) Date of filing: **20.10.2022**

(86) International application number:
**PCT/CN2022/126430**

(87) International publication number:
**WO 2023/066339 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.10.2021 CN 202111234324**

(71) Applicant: **Huawei Technologies Co., Ltd.
Shenzhen, Guangdong 518129 (CN)**

(72) Inventors:
• **WANG, Wei**
  **Shenzhen, Guangdong 518129 (CN)**
• **YE, Haishui**
  **Shenzhen, Guangdong 518129 (CN)**
• **ZHANG, Yajing**
  **Shenzhen, Guangdong 518129 (CN)**
• **WANG, Heng**
  **Shenzhen, Guangdong 518129 (CN)**

(74) Representative: **Maiwald GmbH
Engineering
Elisenhof
Elisenstrasse 3
80335 München (DE)**

(54) **OPTICAL LENS, CAMERA MODULE AND ELECTRONIC APPARATUS**

(57)    An optical lens (10), a camera module (1), and an electronic device (100) are provided. The optical lens (10) includes a stop (STO) and at least seven lens elements (L1 to L7) arranged sequentially from an object side to an image side. The stop (STO) is a variable aperture. An f-number of the stop (STO) can be adjusted within a range of 1.2 to 5.0. The optical lens (10) satisfies the following relational expressions: $0.10 < TTL/(ImgH \times EPD) \leq 1.10$, and $CTmax/CTmin \leq 3.5$. TTL is a total track length of the optical lens (10). ImgH is a half diagonal length of an effective photosensitive area of an image plane of the optical lens (10). EPD is an entrance pupil diameter of the optical lens (10). CTmax is a largest value of a thickness for all of the at least seven lens elements (L1 to L7) on an optical axis (A). CTmin is a smallest value of the thickness for all of the at least seven lens elements (L1 to L7) on the optical axis (A). When a good imaging effect is achieved, the optical lens (10) having a small thickness can be obtained.

FIG. 3A

**Description**

This application claims priority to Chinese Patent Application No. 202111234324.8, filed with the China National Intellectual Property Administration on October 22, 2021, and entitled "OPTICAL LENS, CAMERA MODULE, AND ELECTRONIC DEVICE", which is incorporated herein by reference in its entirety.

**TECHNICAL FIELD**

This application relates to the field of optical lenses, and in particular, to an optical lens, a camera module, and an electronic device.

**BACKGROUND**

As a consumer imposes an increasingly high requirement on an image effect of a camera module of a portable terminal, to improve user experience, a variable aperture is introduced into a camera module of a portable terminal product in the industry. The variable aperture can significantly improve the image effect. A luminous flux of an optical lens may be controlled by adjusting a structural size of the variable aperture, to control a depth of field of the camera module, and further improve a bokeh effect, so as to improve image quality, and implement photographing in a "portrait mode" and the like. However, a variable aperture with a large range of an f-number affects a thickness of the optical lens, and affects miniaturization of the optical lens.

**SUMMARY**

Embodiments of this application provide an optical lens, a camera module including the optical lens, and an electronic device including the camera module, to obtain, when a good imaging effect is achieved, an optical lens and a camera module that have small thicknesses and an electronic device with a small thickness.

According to a first aspect, this application protects an optical lens. The optical lens includes a stop and at least seven lens elements sequentially arranged from an object side to an image side. The stop is a variable aperture. An f-number of the stop can be adjusted within a range of 1.2 to 5.0. The optical lens satisfies the following relational expressions:

$$0.10 \leq TTL/(ImgH \times EPD) \leq 1.10;$$

and

$$CTmax/CTmin \leq 3.5$$

TTL is a total track length of the optical lens. ImgH is a half diagonal length of an effective photosensitive area of an image plane of the optical lens. EPD is an entrance pupil diameter of the optical lens. CTmax is a largest value of a thickness for all of the at least seven lens elements on an optical axis. CTmin is a smallest value of the thickness for all of the at least seven lens elements on the optical axis.

In this application, a range of a ratio of the total track length to a product of the half diagonal length of the effective photosensitive area of the image plane and the entrance pupil diameter of the optical lens is limited, and a range of a ratio of the largest value of the thickness for all of the at least seven lens elements on the optical axis to the smallest value of the thickness for all of the at least seven lens elements on the optical axis is limited. This can ensure that the optical lens can have the total track length that is short enough, a large image plane, and a large change range of the f-number, thereby facilitating miniaturization of the optical lens and improvement of imaging quality.

In some possible implementations, the optical lens satisfies the following relational expression:

$$Tmin/Tmax \leq 0.085$$

Tmax is a largest value of a distance between any two adjacent lens elements in the at least seven lens elements. Tmin is a smallest value of the distance between the any two adjacent lens elements in the at least seven lens elements.

In this implementation, a range of a ratio of the largest value of the distance between the any two adjacent lens elements in the at least seven lens elements to the smallest value of the distance between the any two adjacent lens elements in the at least seven lens elements is limited. This facilitates miniaturization of the optical lens.

In some possible implementations, the optical lens satisfies the following relational expression:

$$0.55 \leq EPD/Dr5r10 \leq 3.15$$

Dr5r10 is a distance between an object-side surface of a third lens element and an image-side surface of a fifth lens element on the optical axis.

It may be understood that thicknesses of the third lens element to the fifth lens element are largest and account for a largest proportion in the total length of the optical lens. This facilitates miniaturization of the optical lens and provides a wider variable range for the aperture when a range of a ratio of the entrance pupil diameter of the optical lens to the distance between the object-side surface of the third lens element and the image-side surface of the fifth lens element on the optical axis satisfies the foregoing relational expression.

In some possible implementations, the at least seven lens elements include a first lens element, a second lens element, the third lens element, a fourth lens element, the fifth lens element, a sixth lens element, and a seventh lens element that are sequentially arranged from the object side to the image side. The optical lens satisfies the following relational expressions:

$$Tmax/T12 \geq .0;$$

$$Tmax/T23 \geq 2.0;$$

$$Tmax/T34 \geq 1.0;$$

$$Tmax/T45 \geq 1.5;$$

$$Tmax/T56 \geq 2.0;$$

$$Tmax/T67 \geq 1.0;$$

and

$$Tmax/BL \geq 0.5$$

T12 is a distance between the first lens element and the second lens element on the optical axis. T23 is a distance between the second lens element and the third lens element on the optical axis. T34 is a distance between the third lens element and the fourth lens element on the optical axis. T45 is a distance between the fourth lens element and the fifth lens element on the optical axis. T56 is a distance between the fifth lens element and the sixth lens element on the optical axis. T67 is a distance between the sixth lens element and the seventh lens element on the optical axis. BL is a distance between an image-side surface of a lens element closest to the image plane and the image plane on the optical axis. Tmax is the largest value of the distance between the any two adjacent lens elements in the at least seven lens elements.

In this implementation, a range of a ratio of the largest value of the distance between the any two adjacent lens elements in the at least seven lens elements to a distance between two other adjacent lens elements and a range of a ratio of the largest value of the distance between the any two adjacent lens elements in the at least seven lens elements and the distance between the image-side surface of the lens element closest to the image plane and the image plane on the optical axis are limited. This facilitates miniaturization of the optical lens.

In some possible implementations, the optical lens satisfies the following relational expression:

$$0.1 \leq 1/f1 + 1/f2 + 1/f3 + 1/f4 \leq 0.15$$

Herein, f1 is a focal length of the first lens element, f2 is a focal length of the second lens element, f3 is a focal length of the third lens element, and f4 is a focal length of the fourth lens element.
It may be understood that a smaller sum of reciprocals of the focal lengths of the first lens element to the fourth lens element indicates a better light convergence effect and better imaging quality of the optical lens. The sum of the reciprocals of the focal lengths of the first lens element to the fourth lens element is limited to being between 0.1 and 0.15 (including 0.1 and 0.15). When the f-number is 1.2, a large amount of light entering the lens elements through the stop can be modulated through cooperation between the first lens element to the fourth lens element. This achieves the better light convergence effect, and effectively improves the imaging quality of the optical lens.
In some possible implementations, the optical lens satisfies the following relational expression:

$$-0.1 \leq 1/f1 + 1/f3 + 1/f5 + 1/f7 \leq 0.5$$

Herein, f1 is the focal length of the first lens element, f3 is the focal length of the third lens element, f5 is a focal length of the fifth lens element, and f7 is a focal length of the seventh lens element.
It may be understood that a smaller sum of reciprocals of the focal lengths of the first lens element, the third lens element, the fifth lens element, and the seventh lens element indicates a better light convergence effect and better imaging quality of the optical lens. The sum of the reciprocals of the focal lengths of the first lens element, the third lens element, the fifth lens element, and the seventh lens element is limited to being between 0.3 and 0.5 (including 0.3 and 0.5). This helps correct an aberration of the optical lens, balance a spherical aberration and a chromatic aberration that are generated by the first lens element, and improve an imaging effect of the optical lens.
In some possible implementations, the optical lens satisfies the following relational expressions:

$$|EFL/fi| \leq 1.5,$$

where i=1, 2, 3, 4, 5, 6, or 7, or i=1, 2, 3, 4, 5, 6, 7, or 8;

$$|f1/fi| \leq 3.0,$$

where i=2, 3, 4, 5, 6, or 7, or i=2, 3, 4, 5, 6, 7, or 8; and

$$|f4/fi| \geq 0.05,$$

where i=1, 2, 3, 5, 6, or 7, or i=1, 2, 3, 5, 6, 7, or 8.
EFL is a focal length of the optical lens, f1 is the focal length of the first lens element, f4 is the focal length of the fourth lens element, and fi is a focal length of an $i^{th}$ lens element.
In this implementation, a range of a ratio of the focal length of the optical lens to a focal length of each lens element, a range of a ratio of the focal length of the first lens element to a focal length of each of other lens elements, and a range of a ratio of the focal length of the fourth lens element to a focal length of each of other lens elements are limited. This can ensure that the optical lens has good imaging quality in a scenario with a large aperture.
In some possible implementations, the optical lens satisfies the following relational expressions:

$$0.3 \leq |R1/R2| \leq 1.0;$$

$$1.0 \leq |R3/R4| \leq 2.0;$$

$$0.3 \leq |R5/R6| \leq 1.5;$$

$$0.1 \leq |R7/R8| \leq 15;$$

$$1.0 \leq |R9/R10| \leq 3.5;$$

$$0.5 \leq |R11/R12| \leq 5.0;$$

and

$$0.0 \leq |R13/R14| \leq 3.5$$

R1 is a radius of curvature of an object-side surface of the first lens element. R2 is a radius of curvature of an image-side surface of the first lens element. R3 is a radius of curvature of an object-side surface of the second lens element. R4 is a radius of curvature of an image-side surface of the second lens element. R5 is a radius of curvature of the object-side surface of the third lens element. R6 is a radius of curvature of an image-side surface of the third lens element. R7 is a radius of curvature of an object-side surface of the fourth lens element. R8 is a radius of curvature of an image-side surface of the fourth lens element. R9 is a radius of curvature of an object-side surface of the fifth lens element. R10 is a radius of curvature of the image-side surface of the fifth lens element. R11 is a radius of curvature of an object-side surface of the sixth lens element. R12 is a radius of curvature of an image-side surface of the sixth lens element. R13 is a radius of curvature of an object-side surface of the seventh lens element. R14 is a radius of curvature of an image-side surface of the seventh lens element.

In this implementation, a range of a ratio of a radius of curvature of an object-side surface to a radius of curvature of an image-side surface of each lens element is limited, so that the optical lens can obtain a better imaging effect.

In some possible implementations, the optical lens satisfies that R1, R2, R3, R4, R5, and R6 are all greater than 0 and at least one of R7 and R8 is greater than 0.

In this implementation, R1, R2, R3, R4, R5, and R6 are limited to being all greater than 0, and at least one of R7 and R8 is limited to being greater than 0, so that the optical lens can obtain the better imaging effect.

In some possible implementations, the optical lens satisfies the following relational expression:

$$0.2 \leq Dr5r10/TTL \leq 0.4$$

Dr5r10 is the distance between the object-side surface of the third lens element and the image-side surface of the fifth lens element on the optical axis.

It may be understood that, in this implementation, the thicknesses of the third lens element to the fifth lens element are largest. When a range of a ratio of the distance between the object-side surface of the third lens element and the image-side surface of the fifth lens element on the optical axis to the total track length of the optical lens satisfies the foregoing relational expression, the thicknesses of the third lens element to the fifth lens element account for the largest proportion in the total length of the optical lens. This facilitates miniaturization of the optical lens, thereby helping implement miniaturization of a camera module and an electronic device.

In some possible implementations, the optical lens satisfies the following relational expression:

$$Dmax/Dmin \geq 2.3$$

Dmax is a largest value of a clear aperture on the object-side surface or the image-side surface for all of the at least seven lens elements. Dmin is a smallest value of the clear aperture on the object-side surface or the image-side surface for all of the at least seven lens elements.

In this implementation, a range of a ratio of the largest value of the light transmission hole on the object-side surface or the image-side surface to the smallest value of the light transmission hole on the object-side surface or the image-side surface for all of the lens elements is limited. This facilitates miniaturization of the optical lens.

In some possible implementations, the optical lens satisfies the following relational expression:

$$0.25 \leq EPD/Dmax \leq 1.35$$

In this implementation, a range of a ratio of the entrance pupil diameter of the optical lens to the largest value of the light transmission hole on the object-side surface or the image-side surface for all of the lens elements is limited. This facilitates miniaturization of the optical lens, and a change range of the f-number of the variable aperture is large.

In some possible implementations, object-side surfaces and image-side surfaces of all the lens elements in the optical lens are aspheric surfaces. The aspheric surface has a higher degree of freedom in configuration and a good aberration elimination effect. This can reduce the total length of the optical lens, and facilitate miniaturization of the optical lens.

In some possible implementations, the optical lens satisfies the following relational expression:

$$\text{Tmax/CTmax} \leq 1.5$$

In this implementation, a range of a ratio of the largest value of the distance between the any two adjacent lens elements in the at least seven lens elements to the largest value of the thickness for all of the at least seven lens elements on the optical axis is limited. This facilitates miniaturization of the optical lens.

In some possible implementations, the optical lens satisfies the following relational expression:

$$0.8 \leq \text{CT1/MaxCT2L} \leq 2.0$$

CT1 is a thickness of the first lens element on the optical axis. MaxCT2L is a largest value of a thickness for lens elements other than the first lens element in the at least seven lens elements on the optical axis.

In this implementation, a range of a ratio of the thickness of the first lens element on the optical axis to the largest value of the thickness for the lens elements other than the first lens element in the at least seven lens elements on the optical axis is limited. The optical lens can be appropriately configured with the lens elements made of different materials. This facilitates miniaturization and manufacturability of the optical lens.

In some possible implementations, the optical lens satisfies the following relational expressions:

$$\text{Vmin} \geq 15;$$

and

$$\text{Vmax} \leq 90$$

Vmax is a largest dispersion coefficient for all the lens elements of the optical lens. Vmin is a smallest dispersion coefficient in all the lens elements of the optical lens.

In this implementation, the dispersion coefficients of all the lens elements of the optical lens are limited. When the dispersion coefficients of all the lens elements of the optical lens satisfy the foregoing relational expressions, a chromatic aberration elimination capability of the optical lens can be effectively improved, and the imaging quality of the optical lens can be improved. To achieve the foregoing dispersion ranges, a resin material or a glass material may be selected for each lens element.

In some possible implementations, the optical lens satisfies the following relational expressions:

$$1.65 \leq \text{Nmax} \leq 2.0;$$

and

$$1.30 \leq \text{Nmin} \leq 1.58$$

Nmax is a largest refractive index for all the lens elements of the optical lens, and Nmin is a smallest refractive index for all the lens elements of the optical lens.

In this implementation, the largest refractive index and the smallest refractive index of the lens element of the optical lens are limited. When the largest refractive index and the smallest refractive index of the lens element of the optical lens satisfy the foregoing relational expressions, the resin material or the glass material can be selected for each lens element to satisfy the foregoing ranges of the refractive indexes. The different materials for the lens elements are appropriately configured. This facilitates miniaturization of the optical lens and thinning of the electronic device.

In some possible implementations, the optical lens satisfies the following relational expression:

$$0.8 \leq STL/TTL \leq 1.5$$

STL is a distance between an object at infinity of the stop of the optical lens and the image plane on the optical axis.

In this implementation, a range of a ratio of the distance between the object at infinity of the stop and the image plane on the optical axis to the total track length is defined. In this way, the stop can be disposed on an object side of the first lens element, or can be disposed between the any two adjacent lens elements.

According to a second aspect, this application further protects a camera module. The camera module includes a photosensitive element and the foregoing optical lens. The photosensitive element is located on an image side of the optical lens and on an image plane of the optical lens. The optical lens is configured to project ambient light onto the photosensitive element. The camera module having the optical lens has a small size and a good imaging effect.

According to a third aspect, this application further protects an electronic device. The electronic device includes an image processor and the foregoing camera module. The image processor is communicatively connected to the camera module. The camera module is configured to: obtain image data and input the image data to the image processor. The image processor is configured to process the image data output therefrom. The electronic device having the foregoing camera module has a good photographing effect and can implement miniaturization.

**BRIEF DESCRIPTION OF DRAWINGS**

To describe the technical solutions in embodiments of this application or in the background more clearly, the following briefly describes the accompanying drawings for describing embodiments of this application or the background.

FIG. 1 is a schematic diagram of the back of an electronic device according to an implementation of this application;

FIG. 2 is a schematic diagram of the back of an electronic device according to another implementation of this application;

FIG. 3A is a schematic diagram of a structure of a camera module of the electronic device shown in FIG. 1;

FIG. 3B is a schematic diagram of a structure of an image plane of the camera module shown in FIG. 3A;

FIG. 4 is a schematic diagram of a part of structure of the camera module shown in FIG. 3A;

FIG. 5 is a schematic diagram of a position of a stop of the camera module shown in FIG. 3A;

FIG. 6 is a schematic top view of a structure of a stop of the structure shown in FIG. 3A;

FIG. 7 is a schematic diagram of an axial chromatic aberration of an optical lens shown in FIG. 3A;

FIG. 8 is a schematic diagram of a field curvature and an optical distortion of an optical lens shown in FIG. 3A;

FIG. 9 is a schematic diagram of a structure of a camera module according to a second implementation of this application;

FIG. 10 is a schematic diagram of an axial chromatic aberration of an optical lens shown in FIG. 9;

FIG. 11 is a schematic diagram of a field curvature and an optical distortion of an optical lens shown in FIG. 9;

FIG. 12 is a schematic diagram of a structure of a camera module according to a third implementation of this application;

FIG. 13 is a schematic diagram of an axial chromatic aberration of an optical lens shown in FIG. 12;

FIG. 14 is a schematic diagram of a field curvature and an optical distortion of an optical lens shown in FIG. 12;

FIG. 15 is a schematic diagram of a structure of a camera module according to a fourth implementation of this application;

FIG. 16 is a schematic diagram of an axial chromatic aberration of an optical lens shown in FIG. 15;

FIG. 17 is a schematic diagram of a field curvature and an optical distortion of an optical lens shown in FIG. 15;

FIG. 18 is a schematic diagram of a structure of a camera module according to a fifth implementation of this application;

FIG. 19 is a schematic diagram of an axial chromatic aberration of an optical lens shown in FIG. 18;

FIG. 20 is a schematic diagram of a field curvature and an optical distortion of an optical lens shown in FIG. 18;

FIG. 21 is a schematic diagram of a structure of a camera module according to a sixth implementation of this application;

FIG. 22 is a schematic diagram of an axial chromatic aberration of an optical lens shown in FIG. 21;

FIG. 23 is a schematic diagram of a field curvature and an optical distortion of an optical lens shown in FIG. 21;

FIG. 24 is a schematic diagram of a structure of a camera module according to a seventh implementation of this application;

FIG. 25 is a schematic diagram of an axial chromatic aberration of an optical lens shown in FIG. 24;

FIG. 26 is a schematic diagram of a field curvature and an optical distortion of an optical lens shown in FIG. 24;
FIG. 27 is a schematic diagram of a structure of a camera module according to an eighth implementation of this application;
FIG. 28 is a schematic diagram of an axial chromatic aberration of an optical lens shown in FIG. 27; and
FIG. 29 is a schematic diagram of a field curvature and an optical distortion of an optical lens shown in FIG. 27.

## DESCRIPTION OF EMBODIMENTS

The following describes embodiments of this application with reference to the accompanying drawings in embodiments of this application.

For ease of understanding, the following first explains and describes technical terms in this application.

A focal length (focal length), also referred to as a focal length, is a distance between an image-space major plane and an image-space focal plane of a lens element or a lens element group in an optical axis direction when a clear image is formed in image space by using the lens element or the lens element group.

An optical axis is a ray that passes perpendicularly through the center of an ideal lens element. When rays parallel to the optical axis are incident into a convex lens element, in an ideal convex lens element, all the rays converge at one point behind the lens element. The point at which all the rays converge is a focus.

A stop (stop) includes an aperture stop (aperture stop) and a field stop (field stop). The aperture stop can limit a width of an imaging light beam, determine a size of an entrance pupil diameter of an optical system and a solid angle of the light beam, and affect a luminous flux of the optical system. The field stop limits a field that is of object space and that can be imaged by the optical system.

An f-number, also referred to as an F-number (Fno), is a relative value (a reciprocal of a relative aperture) obtained by dividing a focal length of an optical lens by an entrance pupil diameter of the optical lens. A smaller f-number indicates a larger luminous flux within a same unit time. A smaller f-number indicates a smaller depth of field, and bokeh occurs during photographing.

A back focal length (Back Focal Length, BFL) is a distance between the vertex of an image-side surface of a lens element closest to an image side in an optical lens and an image plane of the optical lens. The back focal length is shortest in an infinitely far focusing state. Generally, a closer object distance indicates a longer back focal length.

Positive refractive power, also referred to as positive dioptric power, indicates that a lens element has a positive focal length and has a light convergence effect.

Negative refractive power, also referred to as negative dioptric power, indicates that a lens element has a negative focal length and has a light divergence effect.

A total track length (Total Track Length, TTL) is a total length from an object-side surface of a lens element closest to an object side of an optical lens to an image plane, and is a main factor forming a height of a camera.

A chromatic dispersion coefficient, namely, an Abbe number, indicates an index of a chromatic dispersion capability of a transparent medium. Generally, a larger refractive index of the medium indicates a smaller Abbe number and more severe dispersion. On the contrary, a smaller refractive index of the medium indicates a larger Abbe number and slighter dispersion.

An object side is, by using a lens element as a boundary, a side on which a to-be-imaged object is located.

An image side is, by using a lens element as a boundary, a side on which an image of a to-be-imaged object is located.

An object-side surface is a surface that is of a lens element and that is close to an object side.

An image-side surface is a surface that is of a lens element and that is close to an image side.

A lens element is used as a boundary, a side on which a photographed object is located is an object side, and a surface that is of the lens element and that is close to the object side may be referred to as an object-side surface. The lens element is used as the boundary, a side on which an image of the photographed object is located is an image side, and a surface that is of the lens element and that is close to the image side may be referred to as an image-side surface.

An axial chromatic aberration causes blurring of a color before and after a focus position because light with different wavelengths has different magnifications due to a dispersion characteristic of an optical material, and is focused at different points along a horizontal optical axis.

A field curvature (Field curvature): After light emitted from an object plane perpendicular to a main optical axis is imaged by a lens element, an entire image cannot be focused on a single plane perpendicular to an optical axis. To be specific, a clear best real image surface is not a plane but a curved surface.

A distortion (Distortion), also referred to as an anamorphosis, is a degree at which an image formed by an optical system for an object is distorted relative to the object. A height of an intersection point between a Gaussian image plane and chief rays of different fields of view passing through the optical system is not equal to an ideal image height. A difference between the height and the ideal height is an optical distortion (Optical distortion). The optical distortion changes an imaging location of an off-axis object point on an ideal plane. As a result, a shape of an image is distorted, but definition of the image is not affected.

An ImgH (Image Height) indicates a half of a diagonal length of an effective photosensitive area on a photosensitive chip, namely, an image height of an image plane.

An entrance pupil diameter (Entrance Pupil Diameter, EPD) is a ratio of a focal length of an optical lens to an aperture F-number.

Field of view (field of view, FOV): In an optical instrument, a lens element of the optical instruments is used as a vertex, and an included angle formed by two edges of a maximum range within which an object image of a detected target can pass through a lens element is referred to as the field of view. A size of the field of view determines a visual field of the optical instrument. A larger field of view indicates a broader visual field and a smaller optical magnification.

An aberration (aberration) is inconsistency between a result obtained by non-paraxial ray tracing and a result obtained by paraxial ray tracing, namely, a deviation from an ideal condition of the Gaussian optics (a first-order approximation theory or a paraxial ray) in an optical system. The aberration is classified into two types: a chromatic aberration (chromatic aberration, or referred to as a chromatism) and a monochromatic aberration (monochromatic aberration).

A refractive index of a lens element material is a function of a wavelength, and the chromatic aberration is an aberration generated because refractive indexes are different when light with different wavelengths passes through a lens element. The chromatic aberration may be further classified into two types: a chromatism of position and a chromatic difference of magnification. A chromatic aberration is a dispersion phenomenon. The dispersion phenomenon is a phenomenon in which a velocity or a refractive index of light in a medium changes with a wavelength of a light wave. Dispersion in which the refractive index of the light decreases with an increase of the wavelength may be referred to as normal dispersion, while dispersion in which the refractive index of the light increases with an increase of the wavelength may be referred to as negative dispersion (or referred to as negative abnormal dispersion).

A monochromatic aberration is an aberration produced even by highly monochromatic light. According to effects produced, the monochromatic aberrations are classified into two types: "image blurring" and "image deformation". The former type includes a spherical aberration (spherical aberration, spherical aberration for short), an astigmatism (astigmatism), and the like, and the latter type includes a field curvature (field curvature, a field curvature for short), a distortion (distortion), and the like.

The aberration also includes a coma aberration. The coma aberration means that a monochromatic conical light beam emitted by an off-axis object point located outside a main axis to an optical system is refracted by the optical system and then cannot form a clear point on an ideal plane, but forms a comet-shaped light spot with a bright tail.

The following specifically describes specific structures of an electronic device, a camera module, and an optical lens with reference to related accompanying drawings.

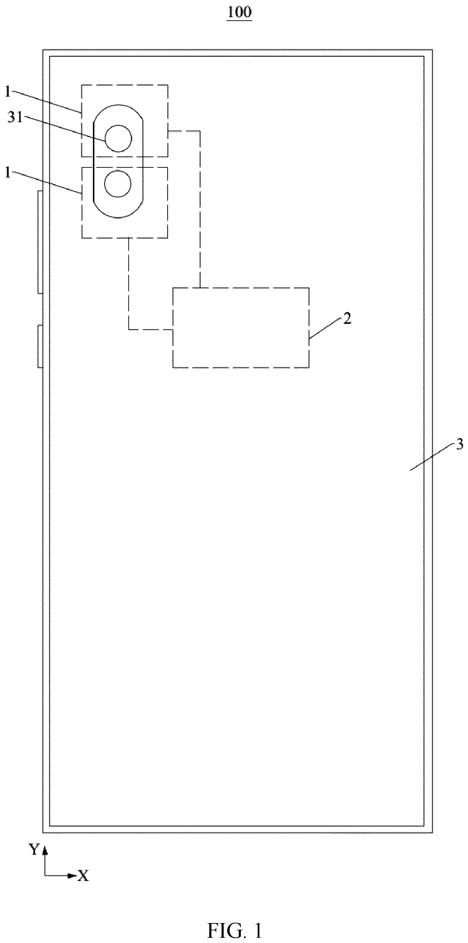

FIG. 1 is a schematic diagram of the back of an electronic device according to an implementation of this application. The electronic device 100 may be a mobile phone, a digital tablet, a laptop computer, a video camera, a video recorder, a camera, a smart television, a network monitoring device, a somatic game console, a dashcam, a reversing image display apparatus, a wearable electronic device, a small uncrewed aerial vehicle, a three-dimensional image capture device, or another form of device having a photographing or image pickup function. In the embodiment shown in FIG. 1, the electronic device 100 is described by using the mobile phone as an example.

For ease of description, a width direction of the electronic device 100 is defined as an X axis. A length direction of the electronic device 100 is defined as a Y axis. A thickness direction of the electronic device 100 is defined as a Z axis. It may be understood that a coordinate system of the electronic device 100 may be flexibly set based on a specific actual requirement.

The electronic device 100 includes a camera module 1, an image processor 2, and a housing 3. Both the camera module 1 and the image processor 2 are accommodated inside the housing 3. A light transmission hole 31 is disposed on the housing 3. A light entrance side of the camera module 1 is disposed opposite to the light transmission hole 31 of the housing 3. The image processor 2 is communicatively connected to the camera module 1. The camera module 1 is configured to: obtain image data and input the image data to the image processor 2. The image processor 2 is configured to process the image data output therefrom. It should be noted that FIG. 1 is merely a schematic diagram of a structure in implementations of this application, and structures of the camera module 1, the image processor 2, and the housing 3, and the like that are shown are merely examples.

The communication connection between the camera module 1 and the image processor 2 may include an electrical connection like a cable connection for performing data transmission, or may include a coupling or the like for implementing data transmission. It may be understood that the communication connection between the camera module 1 and the image processor 2 may alternatively be implemented in another manner that can implement data transmission.

A function of the image processor 2 is to perform optimization processing on a digital image signal through a series of complex mathematical algorithm operations and finally transmit a processed signal to a display. The image processor 2 may be a separate image processing chip or a digital signal processing (Digital Signal Processing, DSP) chip, and a function of the image processor 2 is to transfer, to a central processing unit in time and quickly, data obtained

EP 4 400 889 A1

by a photosensitive element of the camera module 1 and refresh the photosensitive element. Consequently, quality of the DSP chip directly affects picture quality (for example, color saturation or definition). The image processor 2 may alternatively be integrated into another chip (for example, a central processing chip).

In the implementation shown in FIG. 1, the camera module 1 is disposed on the back of the electronic device 100, and is a rear-facing lens of the electronic device 100. It may be understood that, in some implementations, the camera module 1 may be alternatively disposed in the front of the electronic device 100, and is used as a front-facing lens of the electronic device 100. Both the front-facing lens and the rear-facing lens may be used for self-photographing, and may alternatively be used by a photographer to photograph another object.

In some implementations, there are a plurality of camera modules 1. "A plurality of" means two or more. Functions of different camera modules 1 may be different, to satisfy different photographing scenarios. For example, in some implementations, the plurality of camera modules 1 include a zoom camera module and a fixed-focus camera module, to respectively implement functions of zoom photographing and fixed-focus photographing. In the implementation shown in FIG. 1, there are two camera modules 1 on the back of the electronic device 100, which are a common camera module and a zoom camera module respectively. The common camera module can be applied to daily common photographing, and the zoom camera module can be applied to a scene in which zoom photographing needs to be performed. In some implementations, there are a plurality of camera modules 1 on the back of the electronic device 100. The plurality of different camera modules 1 may all be communicatively connected to the image processor 2, to implement, by using the image processor 2, processing of image data obtained by each camera module 1 through photographing.

It should be understood that a mounting position of the camera module 1 of the electronic device 100 in the implementation shown in FIG. 1 is merely an example. In some other implementations, the camera module 1 may alternatively be mounted in another position on the mobile phone. For example, the camera module 1 may be mounted in the upper middle or the upper right corner of the back of the mobile phone. Alternatively, the camera module 1 may not be disposed on a body of the mobile phone, but disposed on a component capable of moving or rotating relative to the mobile phone. For example, the component may extend, retract, or rotate on the body of the mobile phone. The mounting position of the camera module 1 is not limited in this application.

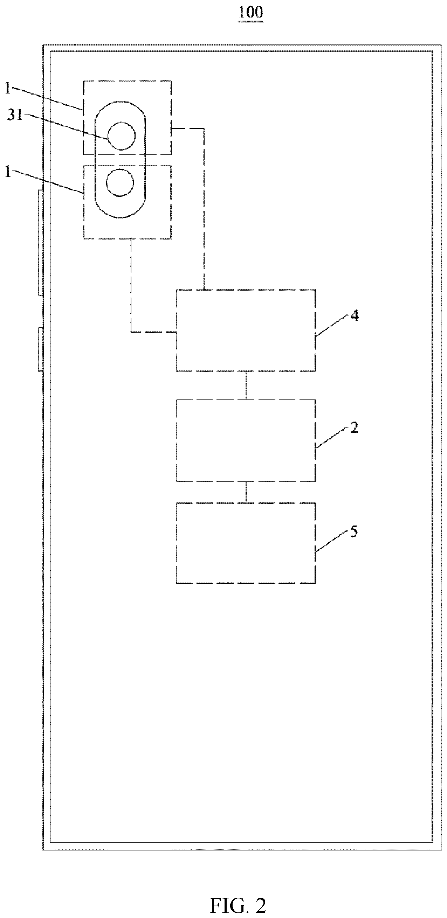

Refer to FIG. 2. In some implementations, the electronic device 100 may further include an analog-to-digital converter 4 (which may also be referred to as an A/D converter). The analog-to-digital converter 4 is connected between the camera module 1 and the image processor 2. The analog-to-digital converter 4 is configured to: convert a signal generated by the camera module 1 into a digital image signal, and transmit the digital image signal to the image processor 2. Then, the digital image signal is processed by the image processor 2. Finally, an image or a picture is displayed on a display screen or a display.

In some implementations, the electronic device 100 may further include a memory 5. The memory 5 is communicatively connected to the image processor 2. The image processor 2 processes a digital image signal, and then transmits an image to the memory 5, so that when the image needs to be viewed subsequently, the image can be searched from the memory at any time and displayed on the display screen. In some implementations, the image processor 2 further compresses the processed digital image signal, and then stores the image in the memory 5, to save space of the memory 5. It should be noted that FIG. 2 is merely a schematic diagram of a structure in implementations of this application, and positions, structures, and the like of the camera module 1, the image processor 2, the analog-to-digital converter 4, and the memory 5 that are shown are merely examples.

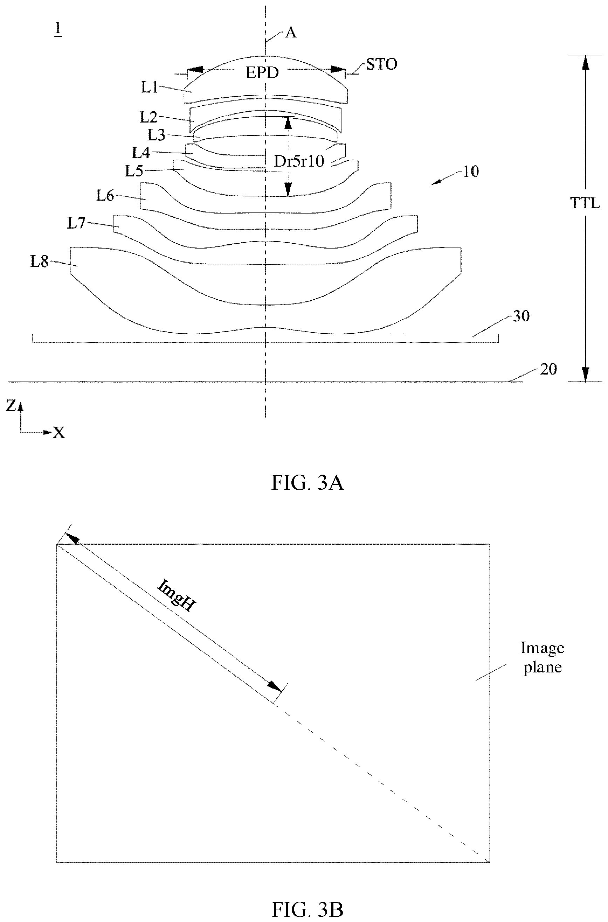

Refer to FIG. 1 and FIG. 3A. FIG. 3A is a schematic diagram of a structure of the camera module 1 of the electronic device 100 shown in FIG. 1.

The camera module 1 includes an optical lens 10, a photosensitive element 20, an actuator (not shown in the figure), and a housing (not shown in the figure). The housing includes a through hole and accommodation space. The through hole is connected to the accommodation space, and the through hole is disposed opposite to the light transmission hole 31 of the housing 3. The actuator, the photosensitive element 20, and the optical lens 10 are all accommodated in the accommodation space. The photosensitive element 20 is located on an image side of the optical lens 10 and on an image plane of the optical lens 10. The actuator is configured to drive a component in the optical lens 10 to implement focusing. The light entrance side of the optical lens 10 is disposed facing the through hole.

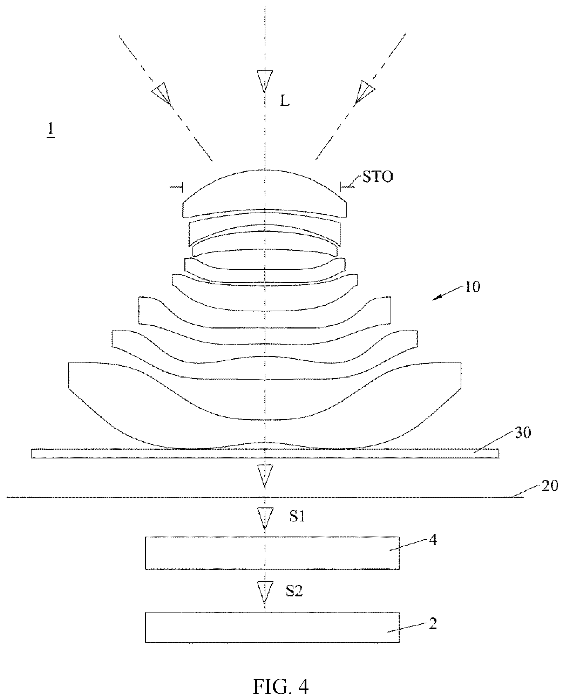

Specifically, as shown in FIG. 4, an operating principle of the camera module 1 is as follows: Light L reflected by a photographed object passes through the optical lens 10, and an optical image is generated and projected onto a surface of the photosensitive element 20. The photosensitive element 20 converts the optical image into an electrical signal, namely, an analog image signal S 1, and transmits the analog image signal S 1 obtained through conversion to the analog-to-digital converter 4, so that the analog-to-digital converter 4 converts the analog image signal S 1 into a digital image signal S2 and transmits the digital image signal S2 to the image processor 2. Certainly, in another embodiment, the camera module 1 may not have a housing, and the photosensitive element 20 is fastened on a holder or another structure.

Specifically, the camera module 1 may further include a circuit board. The photosensitive element 20 is fastened to the circuit board through bonding, patching, or the like. The analog-to-digital converter 4, the image processor 2, the memory 5, and the like are also fastened to the circuit board through bonding, patching or the like. In this way, a communication connection between the photosensitive element 20, the analog-to-digital converter 4, the image processor 2, the memory 5, and the like is implemented through the circuit board. The circuit board may be a flexible printed circuit (flexible printed circuit, FPC) or a printed circuit board (printed circuit board, PCB), and is configured to transmit an electrical signal. The FPC may be a single-sided flexible board, a double-sided flexible board, a multi-layer flexible board, a rigid flexible board, a flexible circuit board with a hybrid structure, or the like.

The photosensitive element 20 is a semiconductor chip. A surface of the photosensitive element 20 includes hundreds of thousands to several millions of photodiodes. The photosensitive element 20 generates an electric charge when being illuminated by light, and the electric charge is converted into a digital signal by a chip of the analog-to-digital converter 4. The photosensitive element 20 may be a charge-coupled device (charge-coupled device, CCD), or may be a complementary metal-oxide semiconductor (complementary metal-oxide semiconductor, CMOS). The CCD is made of a highly light-sensitive semiconductor material, and can convert light into an electric charge. The electric charge is converted into a digital signal by the chip of the analog-to-digital converter 4. The CCD includes a plurality of photosensitive units, usually including megapixels. When a surface of the CCD is illuminated by light, each photosensitive unit reflects an electric charge on a constituent element. Signals generated by all the photosensitive units are added to form a complete picture. The CMOS mainly uses a semiconductor made of two elements, namely, silicon and germanium, so that an N-type (negatively charged) semiconductor and a P-type (positively charged) semiconductor coexist on the CMOS. A current generated by the two complementary effects may be recorded and decoded as an image by the processing chip.

In this implementation, a photosensitive target surface of the photosensitive element 20 is an ultra-large target surface. In other words, the photosensitive element 20 in this application may be understood as being directly a photosensitive element 20 of a single-lens reflex camera. The photosensitive target surface of the photosensitive element 20 is an ultra-large target surface, which helps improve imaging definition of the camera module 1, and comprehensively improves imaging quality of the electronic device 100 (for example, the mobile phone).

Certainly, in another implementation, a photosensitive target surface of the photosensitive element 20 may alternatively be a target surface in a small size, and photosensitive elements 20 with target surfaces in different sizes may be selected for the camera module 1 as required.

The actuator is configured to drive a related element of the optical lens 10, to implement focusing or image stabilization of the optical lens 10 (or the camera module 1). The actuator may include one or more driving parts that can drive the related element of the optical lens 10 to perform focusing and/or optical image stabilization. When the actuator drives the related element of the optical lens 10 to perform focusing, the driving part drives related elements of the optical lens 10 to move relative to each other to implement focusing. When the actuator drives the related element of the optical lens 10 to perform image stabilization, the driving part drives the related element of the optical lens 10 to move or rotate relative to the photosensitive element 20, and/or drives the related element of the optical lens 10 to move or rotate relatively, to implement optical image stabilization. The driving part may be a driving structure like a motor or an electric motor.

As shown in FIG. 3A, the camera module 1 may further include an infrared cut-off filter 30. The infrared cut-off filter 30 may be fastened to the circuit board, and is located between the optical lens 10 and the photosensitive element 20. Light passing through the optical lens 10 illuminates the infrared cut-off filter 30, and is transmitted to the photosensitive element 20 through the infrared cut-off filter 30. The infrared cut-off filter 30 may eliminate unnecessary light projected onto the photosensitive element 20, and prevent the photosensitive element 20 from generating a false color or a ripple, to improve an effective resolution and color restoration of the photosensitive element 20. In some implementations, the infrared cut-off filter 30 may alternatively be fastened to one end that is of the optical lens 10 and that faces the image side. Other elements included in the camera module 1 are not described one by one in detail herein.

Certainly, in another implementation, an imaging correction element may be further disposed on a side that is of the optical lens 10 and that is close to the image plane, to achieve an effect (for example, bending) of image correction.

The following specifically describes a structure and settings of related optical parameters of the optical lens 10 with reference to the accompanying drawings.

Refer to FIG. 3A. The optical lens 10 affects imaging quality and an imaging effect. The optical lens 10 mainly uses a refraction principle of a lens element to perform imaging. To be specific, light from an object passes through the optical lens 10 to form a clear image on an image plane, and the image of the object is recorded by the photosensitive element 20 located on the image plane. The image plane is a plane on which the image obtained after the object is imaged by the optical lens 10 is located. The optical lens 10 includes a plurality of lens elements sequentially arranged from an object side to the image side, and an image having a good imaging effect is formed through cooperation of the lens elements. The object side is a side on which the photographed object is located, and the image side is a side on which the image plane is located.

In this application, the optical lens 10 is a fixed-focus lens. Certainly, in another embodiment, the optical lens 10 may also be a zoom lens.

Refer to FIG. 3A. It may be understood that FIG. 3A shows only some components of the optical lens 10 as an example. Actual shapes, actual sizes, and actual structures of these components are not limited in FIG. 3A.

In some implementations of this application, the optical lens 10 in this application includes a lens tube (not shown in the figure) and at least seven lens elements sequentially arranged from the object side to the image side. At least seven lens elements are sequentially mounted in the lens tube, and each lens element is arranged along an optical axis A. Each lens element includes an object-side surface facing the object side and an image-side surface facing the image side.

In some embodiments, the at least seven lens elements include a first lens element L1, a second lens element L2, a third lens element L3, a fourth lens element L4, a fifth lens element L5, a sixth lens element L6, and a seventh lens element L7. In some other embodiments, the at least seven lens elements include a first lens element L1, a second lens element L2, a third lens element L3, a fourth lens element L4, a fifth lens element L5, a sixth lens element L6, a seventh lens element L7, and an eighth lens element L8. Certainly, in another embodiment, the optical lens 10 may include a quantity of lens elements other than eight, and a plurality of lens elements may be disposed coaxially or non-coaxially. Alternatively, the optical lens 10 may include no lens tube. The first lens element L1 to the seventh lens element L7 (or the eighth lens element L8) may be mounted in the housing of the camera module 1.

Specifically, the first lens element L1 is disposed away from a side of the second lens element L2 and facing the through hole. An image side of the second lens element L2 faces the photosensitive element 20.

In addition, the optical lens 10 in this embodiment further includes a stop STO. The stop STO in this embodiment is a variable aperture. A size of the variable aperture may be changed by using a lens tube fixing a location of the lens element, or a size of the variable aperture may be adjusted by using an external blade or another component, so that an f-number can be adjusted within a range of 1.2 to 5.0 (including 1.2 and 5.0), so as to implement a plurality of location features such as a large aperture and a small aperture. For example, the f-number may be 1.2, 1.8, 2.5, 3.0, 4.8, or 5.0. A luminous flux of the optical lens 10 can be controlled by adjusting a structural size of the variable aperture, to control a depth of field of the camera module 1, and improve a bokeh effect, so as to improve image quality, and implement photographing in a "portrait mode" and the like. In another implementation, the optical lens 10 may include no stop.

The stop STO is located on a side that is of the first lens element L1 and that backs onto the second lens element L2. In other words, the stop STO is disposed on an object side of the first lens element L1. The stop STO is the variable aperture, and the f-number can change within the range of 1.2 to 5.0. Therefore, the stop STO adjusts the f-number more conveniently by disposing the stop STO on the object side of the first lens element L1. Certainly, in another implementation, the stop STO may alternatively be disposed between any two adjacent lens elements in the second lens element L2 to the last lens element (L7 or L8).

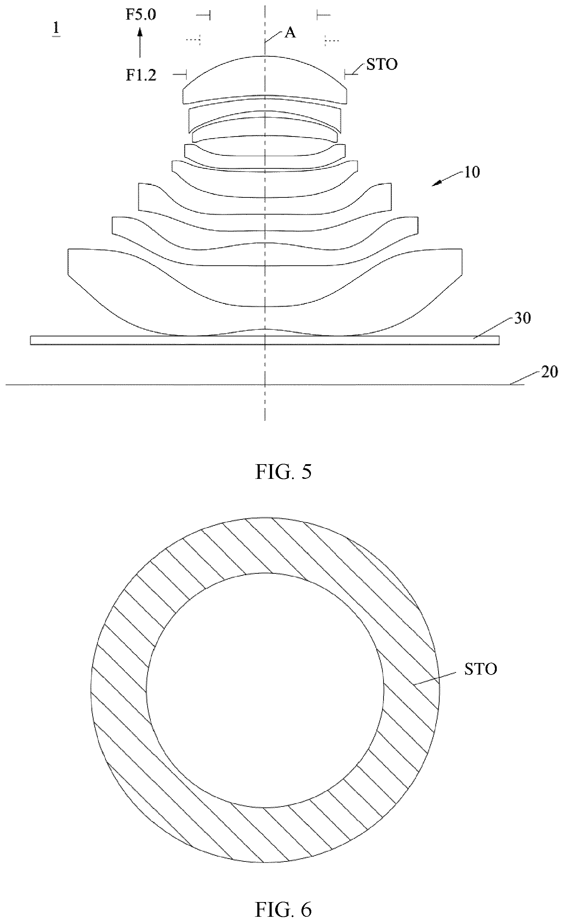

It may be understood that, when the f-number changes, a distance between the stop STO and a lens element changes. As shown in FIG. 5, for example, when the f-number is 1.2, the stop STO is disposed on the object side of the first lens element L1 and a distance between the stop STO and the first lens element L1 is a first distance. When the f-number is 5.0, the stop STO is disposed on the object side of the first lens element L1 and a distance between the stop STO and the first lens element L1 is a second distance. The second distance is greater than the first distance. In other words, a larger f-number indicates a longer distance between the stop STO and the first lens element L1.

The stop STO is disposed on the object side of the first lens element L1, and the stop STO is not interfered by another lens element in a process of adjusting the f-number. Compared with that in disposing the stop STO between the any two adjacent lens elements in the second lens element L2 to the last lens element (L7 or L8), the stop STO adjusts the f-number more conveniently. In addition, the stop STO needs to move within a specific range in the process of adjusting the f-number. Therefore, if the stop STO is disposed between the any two adjacent lens elements in the second lens element L2 to the last lens element (L7 or L8), a sufficient movement distance needs be reserved between the two lens elements for the stop STO. However, a large movement distance affects an overall dimming effect of the optical lens 10.

It may be understood that the photosensitive element 20 with the ultra-large target surface and the variable aperture with a large range of the f-number cause an increase in thickness of the optical lens 10, namely, an increase in thickness of the optical lens in a Z-axis direction. This affects thinning of the optical lens 10, the camera module 1, and the electronic device 100. In view of this, in this application, a related parameter of each lens element of the optical lens 10 is limited, to reduce the thickness of the optical lens 10, and ensure that internal space that is of the electronic device 100 and that is occupied by the camera module 1 is small enough, so as to implement thinning of the electronic device 100. A solution for miniaturizing the optical lens 10 in this implementation is as follows.

In some implementations of this application, the optical lens 10 satisfies the following relational expression:

$$0.10 \leq TTL/(ImgH \times EPD) \leq 1.10$$

As shown in FIG. 3A and FIG. 3B, TTL is a total track length of the optical lens 10, ImgH is a half diagonal

**EP 4 400 889 A1**

length of an effective photosensitive area of the image plane of the optical lens 10, and EPD is an entrance pupil diameter of the optical lens 10.

The foregoing relational expression defines a range of a ratio of the total track length to a product of the half diagonal length of the effective photosensitive area of the image plane and the entrance pupil diameter of the optical lens 10. For example, TTL/(ImgH×EPD) may be equal to 0.10, 0.23, 0.25, 0.5, 0.82, 0.94, 1.05, or 1.10. In this implementation, it can be ensured that the optical lens 10 has the total track length that is short enough, a large image plane, and the large change range of the f-number when the range of the ratio of the total track length to the product of the half diagonal length of the effective photosensitive area of the image plane and the entrance pupil diameter of the optical lens 10 satisfies the foregoing relational expression. This facilitates miniaturization of the optical lens 10 and improvement of imaging quality.

Certainly, in another implementation, the range of the ratio of the total track length to the product of the half diagonal length of the effective photosensitive area of the image plane and the entrance pupil diameter of the optical lens 10 may not be limited to the foregoing limitation.

In some implementations of this application, the optical lens 10 satisfies the following relational expression:

$$CTmax/CTmin \leq 3.5$$

CTmax is a largest value of a thickness for all of the at least seven lens elements on the optical axis A. CTmin is a smallest value of the thickness for all of the at least seven lens elements on the optical axis A.

The foregoing relational expression defines a range of a ratio of the largest value of the thickness for all of the at least seven lens elements on the optical axis A to the smallest value of the thickness for all of the at least seven lens elements on the optical axis A. In this implementation, it facilitates miniaturization of the optical lens 10 when the range of the ratio of the largest value of the thickness for all of the at least seven lens elements on the optical axis A to the smallest value of the thickness for all of the at least seven lens elements on the optical axis A satisfies the foregoing relational expression.

Certainly, in another implementation, the range of the ratio of the largest value of the thickness for all of the at least seven lens elements on the optical axis A to the smallest value of the thickness for all of the at least seven lens elements on the optical axis A may not be limited to the foregoing limitation.

In some implementations of this application, the optical lens 10 satisfies the following relational expression:

$$Tmin/Tmax \leq 0.085$$

Tmax is a largest value of a distance between any two adjacent lens elements in the at least seven lens elements. Tmin is a smallest value of the distance between the any two adjacent lens elements in the at least seven lens elements.

The foregoing relational expression defines a range of a ratio of the largest value of the distance between the any two adjacent lens elements in the at least seven lens elements to the smallest value of the distance between the any two adjacent lens elements in the at least seven lens elements. In this implementation, it facilitates miniaturization of the optical lens 10 when the range of the ratio of the largest value of the distance between the any two adjacent lens elements in the at least seven lens elements to the smallest value of the distance between the any two adjacent lens elements in the at least seven lens elements satisfies the foregoing relational expression.

Certainly, in another implementation, the range of the ratio of the largest value of the distance between the any two adjacent lens elements in the at least seven lens elements to the smallest value of the distance between the any two adjacent lens elements in the at least seven lens elements may not be limited to the foregoing limitation.

In some implementations of this application, the optical lens 10 satisfies the following relational expression:

$$0.2 \leq Dr5r10/TTL \leq 0.4$$

Dr5r10 is a distance between an object-side surface of the third lens element L3 and an image-side surface of the fifth lens element L5 on the optical axis A.

It may be understood that, in this implementation, thicknesses of the third lens element L3 to the fifth lens element L5 are largest. When a range of a ratio of the distance between the object-side surface of the third lens element L3 and the image-side surface of the fifth lens element L5 on the optical axis A to the total track length of the optical lens 10 satisfies the foregoing relational expression, the thicknesses of the third lens element L3 to the fifth lens element L5 account for a largest proportion in the total length of the optical lens 10. This facilitates miniaturization of the optical

13

lens 10, thereby helping implement miniaturization of the camera module 1 and the electronic device 100.

In addition, the fifth lens element has a thicker center thickness. It may be understood that the fifth lens element is located in the middle of the eight lens elements, the fifth lens element has the thicker central thickness, and therefore this can enhance structural strength of the optical lens, and improve mechanical reliability like anti-dropping of the optical lens.

Certainly, in another embodiment, the range of the ratio of the distance between the object-side surface of the third lens element L3 and the image-side surface of the fifth lens element L5 on the optical axis A to the total track length of the optical lens 10 may not be limited to the foregoing limitation.

In some implementations of this application, the optical lens 10 satisfies the following relational expression:

$$Dmax/Dmin \geq 2.3$$

Dmax is a largest value of a clear aperture on an object-side surface or an image-side surface for all of the at least seven lens elements. Dmin is a smallest value of the clear aperture on the object-side surface or the image-side surface for all of the at least seven lens elements.

The foregoing relational expression defines a range of a ratio of the largest value of the light transmission hole on the object-side surface or the image-side surface to the smallest value of the light transmission hole on the object-side surface or the image-side surface for all of the lens elements. In this implementation, it facilitates miniaturization of the optical lens 10 when the range of the ratio of the largest value of the light transmission hole on the object-side surface or the image-side surface to the smallest value of the light transmission hole on the object-side surface or the image-side surface for all of the lens elements satisfies the foregoing relational expression.

Certainly, in another implementation, the range of the ratio of the largest value of the light transmission hole on the object-side surface or the image-side surface to the smallest value of the light transmission hole on the object-side surface or the image-side surface for all of the lens elements is not limited to the foregoing limitation.

In some implementations of this application, the optical lens 10 satisfies the following relational expression:

$$0.25 \leq EPD/Dmax \leq 1.35$$

The foregoing relational expression defines a range of a ratio of the entrance pupil diameter of the optical lens 10 to the largest value of the light transmission hole on the object-side surfaces or the image-side surfaces for all of the lens elements. For example, EPD/Dmax may be equal to 0.25, 0.27, 0.30, 0.31, 0.77, 0.79, 1.11, 1.15, 1.26, 1.31, or 1.35. In this implementation, it facilitates miniaturization of the optical lens 10 and the change range of the f-number of the variable aperture is large when the range of the ratio of the entrance pupil diameter of the optical lens 10 to the largest value of the light transmission hole on the object-side surface or the image-side surface for all of the lens elements satisfies the foregoing relational expression.

Certainly, in another implementation, the range of the ratio of the entrance pupil diameter of the optical lens 10 to the largest value of the light transmission hole on the object-side surface or the image-side surface for all of the lens elements may not be limited to the foregoing limitation.

In some implementations of this application, the optical lens 10 satisfies the following relational expression:

$$Tmax/CTmax \leq 1.5$$

The foregoing relational expression defines a range of a ratio of the largest value of the distance between the any two adjacent lens elements in the at least seven lens elements to the largest value of the thickness for all of the at least seven lens elements on the optical axis A. In this implementation, it facilitates miniaturization of the optical lens 10 when the range of the ratio of the largest value of the distance between the any two adjacent lens elements in the at least seven lens elements to the largest value of the thickness for all of the at least seven lens elements on the optical axis A satisfies the foregoing relational expression.

Certainly, in another implementation, the range of the ratio of the largest value of the distance between the any two adjacent lens elements in the at least seven lens elements to the largest value of the thickness for all of the first lens element L1 to the at least seven lens elements on the optical axis A may not be limited to the foregoing limitation.

In some implementations of this application, the optical lens 10 satisfies the following relational expression:

$$0.8 \leq CT1/MaxCT2L \leq 2.0$$

CT1 is a thickness of the first lens element L1 on the optical axis A. MaxCT2L is a largest value of a thickness for lens elements other than the first lens element L1 in the at least seven lens elements on the optical axis A.

The foregoing relational expression defines a range of a ratio of the thickness of the first lens element L1 on the optical axis A to the largest value of the thickness for the lens elements other than the first lens element L1 in the at least seven lens elements on the optical axis A. In this implementation, the optical lens 10 can be appropriately configured with the lens elements made of different materials and this facilitates miniaturization and manufacturability of the optical lens 10 when the range of the ratio of the thickness of the first lens element L1 on the optical axis A to the largest value of the thickness for the lens elements other than the first lens element L1 in the at least seven lens elements on the optical axis A satisfies the foregoing relational expression.

Certainly, in another implementation, the range of the ratio of the thickness of the first lens element L1 on the optical axis A to the largest value of the thickness for the lens elements other than the first lens element L1 in the at least seven lens elements on the optical axis A may not be limited to the foregoing limitation.

In some implementations of this application, the optical lens 10 satisfies the following relational expression:

$$0.55 \leq EPD/Dr5r10 \leq 3.15$$

Dr5r10 is the distance between the object-side surface of the third lens element L3 and the image-side surface of the fifth lens element L5 on the optical axis A.

The foregoing relational expression defines a range of a ratio of the entrance pupil diameter of the optical lens 10 to the distance between the object-side surface of the third lens element L3 and the image-side surface of the fifth lens element L5 on the optical axis A. For example, EPD/Dr5r10 may be equal to 0.55, 0.57, 0.68, 2.36, 2.44, 3.05, or 3.15. In this implementation, the thicknesses of the third lens element L3 to the fifth lens element L5 are largest and account for the largest proportion in the total length of the optical lens. This facilitates miniaturization of the optical lens 10 and provides a wider variable range for the aperture when the range of the ratio of the entrance pupil diameter of the optical lens 10 to the distance between the object-side surface of the third lens element L3 and the image-side surface of the fifth lens element L5 on the optical axis A satisfies the foregoing relational expression.

Certainly, in another implementation, the range of the ratio of the entrance pupil diameter of the optical lens 10 to the distance between the object-side surface of the third lens element L3 and the image-side surface of the fifth lens element L5 on the optical axis A may not be limited to the foregoing limitation.

In some implementations of this application, the optical lens 10 satisfies the following relational expressions:

$$Tmax/T12 \geq 10.0;$$

$$Tmax/T23 \geq 2.0;$$

$$Tmax/T34 \geq 1.0;$$

$$Tmax/T45 \geq 1.5;$$

$$Tmax/T56 \geq 2.0;$$

$$Tmax/T67 \geq 1.0;$$

and

$$Tmax/BL \geq 0.5$$

T12 is a distance between the first lens element L1 and the second lens element L2 on the optical axis A. T23 is a distance between the second lens element L2 and the third lens element L3 on the optical axis A. T34 is a distance between the third lens element L3 and the fourth lens element L4 on the optical axis A. T45 is a distance between the fourth lens element L4 and the fifth lens element L5 on the optical axis A. T56 is a distance between the fifth lens element L5 and the sixth lens element L6 on the optical axis A. T67 is a distance between the sixth lens element L6 and the seventh lens element L7 on the optical axis A. BL is a distance between an image-side surface of a lens element closest to the image plane and the image plane on the optical axis A. Tmax is the largest value of the distance between the any two adjacent lens elements in the at least seven lens elements. It may be understood that, when there are seven lens elements, the lens element closest to the image plane is the seventh lens element (L7), and when there are eight lens elements, the lens element closest to the image plane is the eighth lens element (L8).

The foregoing relational expressions define a range of a ratio of the largest value of the distance between the any two adjacent lens elements in the at least seven lens elements to a distance between two other adjacent lens elements and a range of a ratio of the largest value of the distance between the any two adjacent lens elements in the at least seven lens elements and the distance between the image-side surface of the lens element closest to the image plane and the image plane on the optical axis A. In this implementation, it facilitates miniaturization of the optical lens 10 when the range of the ratio satisfies the foregoing relational expression. Certainly, in another implementation, the range of the ratio may not be limited to the foregoing limitation.

It may be understood that the f-number of the stop STO can be adjusted within the range of 1.2 to 5.0 (including 1.2 and 5.0), and a smaller f-number indicates a larger aperture of the stop STO and a larger luminous flux. When the f-number is 1.2, an amount of light entering the optical lens 10 is large. Because the luminous flux is large, the light is more difficult to converge, and this affects imaging quality. In view of this, in this application, an optical parameter of each lens element in the optical lens 10 is designed, so that all the lens elements cooperate, to still achieve a good imaging effect when the luminous flux is large.

The following specifically describes a setting of a related optical parameter of each lens element of the optical lens 10.

In some implementations of this application, the optical lens 10 satisfies the following relational expression:

$$0.1 \leq 1/f1 + 1/f2 + 1/f3 + 1/f4 \leq 0.15$$

Herein, f1 is a focal length of the first lens element L1, f2 is a focal length of the second lens element L2, f3 is a focal length of the third lens element L3, and f4 is a focal length of the fourth lens element L4.

It may be understood that a smaller sum of reciprocals of the focal lengths of the first lens element L1 to the fourth lens element L4 indicates a better light convergence effect and better imaging quality of the optical lens 10. The sum of the reciprocals of the focal lengths of the first lens element L1 to the fourth lens element L4 is limited to being between 0.1 and 0.15 (including 0.1 and 0.15). When the f-number is 1.2, a large amount of light entering the lens elements through the stop STO can be modulated through cooperation between the first lens element L1 to the fourth lens element L4. This achieves the better light convergence effect, and effectively improves the imaging quality of the optical lens 10.

Certainly, in another implementation, the sum of the reciprocals of the focal lengths of the first lens element L1 to the fourth lens element L4 is not limited to the foregoing limitation.

In some implementations of this application, the first lens element L1 has positive refractive power, the second lens element L2 has negative refractive power, the third lens element L3 has positive refractive power, and the fourth lens element L4 has positive refractive power or negative refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

In some implementations of this application, the optical lens 10 satisfies the following relational expression:

$$-0.1 \leq 1/f1 + 1/f3 + 1/f5 + 1/f7 \leq 0.5$$

Herein, f1 is the focal length of the first lens element L1, f3 is the focal length of the third lens element L3, f5 is a focal length of the fifth lens element L5, and f7 is a focal length of the seventh lens element L7.

It may be understood that a smaller sum of reciprocals of the focal lengths of the first lens element L1, the third lens element L3, the fifth lens element L5, and the seventh lens element L7 indicates a better light convergence effect and better imaging quality of the optical lens 10. The sum of the reciprocals of the focal lengths of the first lens element L1, the third lens element L3, the fifth lens element L5, and the seventh lens element L7 is limited to being between 0.3 and 0.5 (including 0.3 and 0.5). This helps correct an aberration of the optical lens 10, balance a spherical aberration and a chromatic aberration that are generated by the first lens element L1, and improve an imaging effect of the optical lens 10.

Certainly, in another implementation, the sum of the reciprocals of the focal lengths of the first lens element L1, the third lens element L3, the fifth lens element L5, and the seventh lens element L7 is not limited to the foregoing limitation.

In some implementations of this application, the optical lens 10 satisfies the following relational expressions:

$$|EFL/fi| \leq 1.5,$$

where i=1, 2, 3, 4, 5, 6, or 7, or i=1, 2, 3, 4, 5, 6, 7, or 8;

$$|f1/fi| \leq 3.0,$$

where i=2, 3, 4, 5, 6, or 7, or i=2, 3, 4, 5, 6, 7, or 8; and

$$|f4/fi| \geq 0.05,$$

where i=1, 2, 3, 5, 6, or 7, or i=1, 2, 3, 5, 6, 7, or 8.

EFL is a focal length of the optical lens 10, f1 is the focal length of the first lens element L 1, f4 is the focal length of the fourth lens element L4, and fi is a focal length of an $i^{th}$ lens element.

The foregoing relational expressions define a range of a ratio of the focal length of the optical lens 10 to a focal length of each lens element, a range of a ratio of the focal length of the first lens element L 1 to a focal length of each of other lens elements, and a range of a ratio of the focal length of the fourth lens element L4 to a focal length of each of other lens elements. In this implementation, it can be ensured that the optical lens 10 has good imaging quality in a scenario with a large aperture when the range of the ratio of the focal length of the optical lens 10 to the focal length of each lens element, the range of the ratio of the focal length of the first lens element L 1 to the focal length of each of other lens elements, and the range of the ratio of the focal length of the fourth lens element L4 to the focal length of each of other lens elements satisfy the foregoing relational expression.

Certainly, in another implementation, the range of the ratio of the focal length of the optical lens 10 to the focal length of each lens element, the range of the ratio of the focal length of the first lens element L 1 to the focal length of each of other lens elements, and the range of the ratio of the focal length of the fourth lens element L4 to the focal length of each of other lens elements may not be limited to the foregoing limitations.

In some implementations of this application, the optical lens 10 satisfies the following relational expressions:

$$0.3 \leq |R1/R2| \leq 1.0;$$

$$1.0 \leq |R3/R4| \leq 2.0;$$

$$0.3 \leq |R5/R6| \leq 1.5;$$

$$0.1 \leq |R7/R8| \leq 15;$$

$$1.0 \leq |R9/R10| \leq 3.5;$$

$$0.5 \leq |R11/R12| \leq 5.0;$$

and

$$0.0 \leq |R13/R14| \leq 3.5$$

R1 is a radius of curvature of an object-side surface of the first lens element L1. R2 is a radius of curvature of an image-side surface of the first lens element L1. R3 is a radius of curvature of an object-side surface of the second lens element L2. R4 is a radius of curvature of an image-side surface of the second lens element L2. R5 is a radius of curvature of the object-side surface of the third lens element L3. R6 is a radius of curvature of an image-side surface of the third lens element L3. R7 is a radius of curvature of an object-side surface of the fourth lens element L4. R8 is a radius of curvature of an image-side surface of the fourth lens element L4. R9 is a radius of curvature of an object-side surface of the fifth lens element L5. R10 is a radius of curvature of the image-side surface of the fifth lens element L5. R11 is a radius of curvature of an object-side surface of the sixth lens element L6. R12 is a radius of curvature of an image-side surface of the sixth lens element L6. R13 is a radius of curvature of an object-side surface of the seventh lens element L7. R14 is a radius of curvature of an image-side surface of the seventh lens element L7.

The foregoing relational expressions define a range of a ratio of a radius of curvature of an object-side surface to a radius of curvature of an image-side surface of each lens element. In this implementation, the optical lens 10 can obtain a better imaging effect when the range of the ratio of the radius of curvature of the object-side surface to the radius of curvature of the image-side surface of each lens element satisfies the foregoing relational expression.

Certainly, in another implementation, the range of the ratio of the radius of curvature of the object-side surface to the radius of curvature of the image-side surface of each lens element may not be limited to the foregoing limitation.

In some implementations of this application, the optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

Certainly, in another implementation, limitations on R1, R2, R3, R4, R5, R6, R7, and R8 may not be limited to the foregoing limitations.

In some implementations of this application, the optical lens 10 satisfies the following relational expressions:

$$Vmin \geq 15;$$

and

$$Vmax \leq 90$$

Vmax is a largest dispersion coefficient in all the lens elements of the optical lens 10. Vmin is a smallest dispersion coefficient for all the lens elements of the optical lens 10.

In this implementation, the dispersion coefficients of all the lens elements of the optical lens 10 are limited. When the dispersion coefficients of all the lens elements of the optical lens 10 satisfy the foregoing relational expressions, a chromatic aberration elimination capability of the optical lens 10 can be effectively improved, and the imaging quality of the optical lens 10 can be improved. To achieve the foregoing dispersion ranges, a resin material or a glass material may be selected for each lens element.

When all the lens elements of the optical lens 10 include both a lens element made of the glass material and a lens element made of the resin material, the lens element made of the glass material and the lens element made of the resin material may be placed into one group, and these lens elements may be assembled in a same lens tube through mechanical limiting in a superimposed manner. The lens elements made of the different materials may alternatively be placed into a plurality of groups. To be specific, a lens element made of the glass material is placed into an independent group, and a lens element made of the resin material is placed into another group. A relative location of each group is adjusted between groups by using an active alignment process, to ensure resolution effects of the center and the periphery of a picture. The complete optical lens is formed in another assembly process like glue bonding or mechanical limiting.

Certainly, in another implementation, ranges of Vmin and Vmax may not be limited to the foregoing limitations.

In some implementations of this application, when there are eight lens elements, the optical lens 10 satisfies the following relational expressions:

$$30 \leq V1 \leq 90;$$

$$52 \leq V3, V5, V7, \text{ and } V8 \leq 60;$$

$$15 \leq V2, V4 \leq 21;$$

and

$$35 \leq V6 \leq 40$$

V1 is a dispersion coefficient of the first lens element L1. V2 is a dispersion coefficient of the second lens element L2. V3 is a dispersion coefficient of the third lens element L3. V4 is a dispersion coefficient of the fourth lens element L4. V5 is a dispersion coefficient of the fifth lens element L5. V6 is a dispersion coefficient of the sixth lens element L6. V7 is a dispersion coefficient of the seventh lens element L7. V8 is a dispersion coefficient of the eighth lens element L8.

The foregoing relational expressions define ranges of the dispersion coefficients of the first lens element L1 to the eighth lens element L8. In this implementation, it can be ensured that the optical lens 10 has the good imaging effect on a basis of a large-range f-number of the optical lens 10 when the ranges of the dispersion coefficients of the first lens element L1 to the eighth lens element L8 satisfy the foregoing relational expressions, that is, the first lens element L1 is made of a material with a low dispersion coefficient, a medium dispersion coefficient, a high dispersion coefficient, or an ultra-high dispersion coefficient, the third lens element L3, the fifth lens element L5, the seventh lens element L7, and the eighth lens element L8 are made of a material with the high dispersion coefficient, the second lens element L2 and the fourth lens element L4 are made of a material with the low dispersion coefficient, and the sixth lens element L6 is made of a material with the medium dispersion coefficient.

Certainly, in another implementation, the ranges of the dispersion coefficients of the first lens element L1 to the eighth lens element L8 are not limited to the foregoing limitations.

In some implementations of this application, the optical lens 10 satisfies the following relational expressions:

$$1.65 \leq Nmax \leq 2.0;$$

and

$$1.40 \leq Nmin \leq 1.58$$

Nmax is a largest refractive index for all the lens elements of the optical lens 10, and Nmin is a smallest refractive index for all the lens elements of the optical lens 10.

In this implementation, the largest refractive index and the smallest refractive index of the lens element of the optical lens 10 are limited. When the largest refractive index and the smallest refractive index of the lens element of the optical lens 10 satisfy the foregoing relational expressions, the resin material or the glass material can be selected for each lens element to satisfy the foregoing ranges of the refractive indexes. The different materials for the lens elements are appropriately configured. This facilitates miniaturization of the optical lens 10 and thinning of the electronic device 100.

Certainly, in another implementation, ranges of Nmax and Nmin may not be limited to the foregoing limitations.

In some implementations of this application, when there are eight lens elements, the optical lens 10 satisfies the following relational expressions:

$$1.30 \leq N1 \leq 2.0;$$

$$1.50 \leq N3, N5, N7, \text{ and } N8 \leq 1.55;$$

$$1.65 \leq N2, N4 \leq 1.70;$$

and

$$1.57 \leq N6 \leq 1.58$$

N1 is a refractive index of the first lens element L1. N2 is a refractive index of the second lens element L2. N3 is a refractive index of the third lens element L3. N4 is a refractive index of the fourth lens element L4. N5 is a refractive index of the fifth lens element L5. N6 is a refractive index of the sixth lens element L6. N7 is a refractive index of the seventh lens element L7. N8 is a refractive index of the eighth lens element L8.

The foregoing relational expressions define ranges of the refractive indexes of the first lens element L1 to the eighth lens element L8. In this implementation, it can be ensured that the optical lens 10 has the good imaging effect on the basis of the large-range f-number of the optical lens 10 when the ranges of the refractive indexes of the first lens element L1 to the eighth lens element L8 satisfy the foregoing relational expressions, that is, the first lens element L1 is made of a material with a low refractive index, a medium refractive index, a high refractive index, or an ultra-high refractive index, the third lens element L3, the fifth lens element L5, the seventh lens element L7, and the eighth lens element L8 are made of a material with the low refractive index, the second lens element L2 and the fourth lens element L4 are made of a material with the high refractive index, and the sixth lens element L6 is made of a material with the medium refractive index.

Certainly, in another implementation, the ranges of the refractive indexes of the first lens element L1 to the eighth lens element L8 are not limited to the foregoing limitations.

In some implementations of this application, the optical lens 10 satisfies the following relational expression:

$$0.80 \leq STL/TTL \leq 1.5$$

STL is a distance between an object at infinity of the stop STO of the optical lens 10 and the image plane on the optical axis A.

The foregoing relational expression defines a range of a ratio of the distance between the object at infinity of the stop STO and the image plane on the optical axis A to the total track length. For example, STL/TTL may be equal to 0.80, 0.86, 0.88, 0.92, 1.08, 1.12, 1.14, 1.30, or 1.50. In this implementation, the stop STO may be disposed on the object side of the first lens element L1, or may be disposed between the any two adjacent lens elements when the range of the ratio of the distance between the object at infinity of the stop STO and the image plane on the optical axis A to the total track length satisfies the foregoing relational expression.

Certainly, in another implementation, the range of the ratio of the distance between the object at infinity of the stop STO and the image plane on the optical axis A to the total track length is not limited to the foregoing limitation.

In some implementations of this application, the optical lens 10 satisfies the following relational expression:

$$80.0° \leq FOV \leq 90.0°$$

FOV is a field of view of the optical lens 10.

It may be understood that, when the field of view FOV of the optical lens 10 satisfies the foregoing relational expression, the optical lens 10 has a large imaging area. This ensures the imaging quality of the optical lens.

In some implementations of this application, all the object-side surfaces and the image-side surfaces of all the lens elements in the optical lens 10 are aspheric surfaces. An image-side surface and an object-side surface of each lens element satisfy the following formula:

$$z = \frac{cr^2}{1 + \sqrt{1 - (1+k)c^2 r^2}} + \sum_{i=1}^{N} \alpha_i \rho^{2i},$$

Herein, z is a distance that is of a point whose distance from the optical axis A on an aspheric surface is r and that is relative to a tangent plane tangent to an intersection point between the aspheric surface and the optical axis A;

  r is a vertical distance between a point on an aspheric curve and the optical axis A;
  c is a curvature;
  k is a conical coefficient; and
  $a_i$ is an ith-order aspheric coefficient.

The foregoing relational expression is used to obtain different aspheric lens elements, so that the different lens elements can achieve different optical effects, to achieve a good photographing effect through cooperation between the different aspheric lens elements. The aspheric surface has a higher degree of freedom in configuration and a good aberration elimination effect. This can reduce the total length of the optical lens 10, and facilitate miniaturization of the optical lens 10.

According to the relational expressions and the ranges that are provided in some implementations of this application, the optical lens 10 with the f-number within the range of 1.2 to 5.0 has the good imaging effect by using a configuration manner of each lens element and a combination of the lens elements having a specific optical design. In addition, thinning of the electronic device 100 is implemented.

It may be understood that the foregoing different limitations on different parameters of the optical lens may exist independently of each other, or may be combined with each other. When all of the foregoing limit values are combined with each other, the optical lens is thinner or can obtain the better imaging quality.

The following describes some specific but non-limiting examples of implementations of this application in more detail with reference to FIG. 3A and FIG. 6 to FIG. 26.

FIG. 3A is the schematic diagram of the structure of the camera module 1 according to a first implementation of this application. FIG. 6 is a schematic diagram of a structure of the stop of the structure shown in FIG. 3A.

In this implementation, the optical lens 10 includes the stop STO and eight lens elements. Specifically, the optical lens 10 includes the stop STO, the first lens element L1, the second lens element L2, the third lens element L3, the fourth lens element L4, the fifth lens element L5, the sixth lens element L6, the seventh lens element L7, and the eighth lens element L8 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has the negative refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has the positive refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and further balance the spherical aberration and the chromatic aberration that are generated by the first lens element L1.

The fourth lens element L4 has the positive refractive power. Apart that is of the object-side surface of the fourth lens element L4 and that is near the optical axis A is a convex surface. A part that is of the image-side surface of the fourth lens element L4 and that is near the optical axis A is a concave surface. The fourth lens element L4 helps correct the aberration of the optical lens 10, and balance the spherical aberration and the chromatic aberration that are generated by the first lens element L1.

In this implementation, the first lens element L1 has the positive refractive power, the second lens element L2 has the negative refractive power, the third lens element L3 has the positive refractive power, and the fourth lens element L4 has the positive refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The fifth lens element L5 has positive refractive power. A part that is of the object-side surface of the fifth lens element L5 and that is near the optical axis A is a concave surface. Apart that is of the image-side surface of the fifth lens element L5 and that is near the optical axis A is a convex surface. The fifth lens element L5 can facilitate light convergence of the optical lens 10, and effectively shorten a back focal length and the total track length.

The sixth lens element L6 has negative refractive power. A part that is of the object-side surface of the sixth lens element L6 and that is near the optical axis A is a convex surface. A part that is of the image-side surface of the sixth lens element L6 and that is near the optical axis Ais a concave surface. The sixth lens element L6 helps balance a distribution of negative refractive power of the optical lens 10, reduce sensitivity of the optical lens, and reduce a spherical aberration.

The seventh lens element L7 has positive refractive power. A part that is of the object-side surface of the seventh lens element L7 and that is near the optical axis A is a convex surface. A part that is of the image-side surface of the seventh lens element L7 and that is near the optical axis A is a convex surface. In addition, an off-axis part includes at least one concave surface. The seventh lens element L7 facilitates light convergence of the optical lens 10, and can effectively shorten the back focal length and the total track length.

The eighth lens element L8 has negative refractive power. A part that is of an object-side surface of the eighth lens element L8 and that is near the optical axis A is a concave surface. A part that is of an image-side surface of the eighth lens element L8 and that is near the optical axis A is a concave surface. An off-axis part of the object-side surface S15 of the eighth lens element L8 includes at least one concave surface. An off-axis part of the image-side surface of the eighth lens element L8 includes at least one convex surface. The eighth lens element L8 helps move a principal point of the optical lens 10 to a photographed object end, to effectively shorten the back focal length and the total track length, and help correct an aberration in an off-axis field of view.

The object-side surface and the image-side surface of the eighth lens element L8 each include at least one inflection point, to correct the aberration in the off-axis field of view. The inflection point is a conversion point at which a center of curvature of a curve from a part that is of the lens element and that is near the optical axis A to a surface of the lens element at an off-axis part is moved from the object side to the image side (or moved from the image side to the object side). The image-side surface of the eighth lens element L8 includes at least two critical points, to correct an off-axis aberration. The critical point is defined as a tangent point that is on the surface of the lens element and that is tangent to a tangent plane perpendicular to an optical axis other than an intersection point with the optical axis.

In this implementation, the sixth lens element L6 has the negative refractive power, and the part that is of the image-side surface of the sixth lens element L6 and that is near the optical axis is the concave surface. The seventh lens element L7 has the positive refractive power, and the part that is of the object-side surface of the seventh lens element L7 and that is near the optical axis is the convex surface. The eighth lens element L8 has the negative refractive power, and the part that is of the image-side surface of the eighth lens element L8 and that is near the optical axis is the concave surface. The sixth lens element L6, the seventh lens element L7, and the eighth lens element L8 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, the seventh lens element L7, and the eighth lens element L8 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.68, and a refractive index (Nmin) of a lens element with the smallest refractive index in all the lens elements is 1.54. The foregoing limit values ensure that all materials that can be used for the lens elements are the resin material. The resin material has high formability and strong manufacturability compared with the glass materials, and can effectively reduce production costs. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, N7, and N8) of the third lens element L3, the fifth lens element L5, the seventh lens element L7, and the eighth lens element L8 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, the seventh lens element L7, and the eighth lens element L8 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 56, and a dispersion coefficient (Vmin) of a lens element with the smallest dispersion coefficient in all the lens elements is 19.5. The foregoing limit values ensure the chromatic aberration elimination capability of the optical lens 10, and improve the imaging quality of the optical lens 10.

In some implementations, the dispersion coefficient (V1) of the first lens element L1 is greater than or equal to 30 and less than or equal to 90. The dispersion coefficients (V3, V5, V7, and V8) of the third lens element L3, the fifth lens element L5, the seventh lens element L7, and the eighth lens element L8 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, the seventh lens element L7, and the eighth lens element L8 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.126. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is 0.339. The foregoing limit value helps correct the aberration of the optical lens 10, balance the spherical aberration and the chromatic aberration that are generated by the first lens element L1, and improve the imaging effect of the optical lens 10.

The ratio (|EFL/fi|) of the focal length of the optical lens 10 to the focal length of each lens element is 1.4. The ratio (|f1/fi|) of the focal length of the first lens element L1 to the focal length of each of the other lens elements is |1.9. The ratio (|f4/fi|) of the focal length of the fourth lens element L4 to the focal length of each of the other lens elements is 2.0. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. A radius of curvature of the object-side surface of the eighth lens element L8 is R15. A radius of curvature of the image-side surface of the eighth lens element L8 is R16. |R1/R2|=0.48, |R3/R4|=1.30, |R5/R6|=0.50, |R7/R8|=0.69, |R9/R10|=1.17, |R11/R12|=3.24, |R13/R14|=0.18, and |R15/R16|=8.38. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

A ratio (CTmax/CTmin) of a largest value of a thickness for all of the first lens element L1 to the eighth lens element L8 on the optical axis A to a smallest value of the thickness for all of the first lens element L1 to the eighth lens element L8 on the optical axis A is 3.20. A ratio (Tmin/Tmax) of a largest value of a distance between any two adjacent lens elements in the first lens element L1 to the eighth lens element L8 to a smallest value of the distance between the any two adjacent lens elements in the first lens element L1 to the eighth lens element L8 is 0.080. The ratio (Dr5r10/TTL) of the distance between the object-side surface of the third lens element L3 and the image-side surface of the fifth lens element L5 on the optical axis A to the total track length is 0.24. A ratio (Dmax/Dmin) of a largest value of a light transmission hole on an object-side surface or an image-side surface for all of the lens elements to a smallest value of the light transmission hole on the object-side surface or the image-side surface for all of the lens elements is 6.0. A ratio (Tmax/CTmax) of the largest value of the distance between the any two adjacent lens elements in the first lens element L1 to the eighth lens element L8 to the smallest value of the thickness for all of the first lens element L1 to the eighth lens element L8 on the optical axis A is 1.036. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT 1/MaxCT2L) of the thickness of the first lens element L1 on the optical axis A to the largest value of a thickness for all of the second lens element L2 to the eighth lens element L8 on the optical axis A is 1.53. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the seventh lens element L7 and the eighth lens element L8 on the optical axis A is T78. A distance between the image-side surface of the eighth lens element L8 and the image plane on the optical axis A is BL. Tmax is the largest value of the distance between the any two adjacent lens elements in the first lens element L1 to the eighth lens element L8. Tmax/T12=12.4, Tmax/T23=6.4, Tmax/T34=2.0, Tmax/T45=12.1, Tmax/T56=2.5, Tmax/T67=3.3, and Tmax/BL=0.74. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the first implementation of this application are shown in Table 1.

**Table 1: Basic parameters of the optical lens 10 in the first implementation in an operating state**

| Parameter (mm) | TTL | ImgH | EFL | f1 | f2 | f3 | f4 | f5 | f6 | f7 | f8 |
|---|---|---|---|---|---|---|---|---|---|---|---|
| Numeric value | 8 | 6.253 | 6.635 | 8.799 | -24.330 | 20.164 | 249.640 | 125.454 | -24.682 | 5.945 | -4.593 |

Detailed structural data of components of the camera module 1 in the first implementation of this application is shown in Table 2.

**Table 2: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.380 | | | |
| S1 | L1 | Aspheric surface | 2.793 | 0.959 | Resin | 1.544 | 56.0 |
| S2 | | Aspheric surface | 5.866 | 0.080 | | | |

(continued)

| Surface number | Note | Surface type | Radius of curvature | Thickness | Material | Refractive index | Dispersion coefficient |
|---|---|---|---|---|---|---|---|
| S3 | L2 | Aspheric surface | 4.343 | 0.300 | Resin | 1.675 | 19.5 |
| S4 | | Aspheric surface | 3.345 | 0.155 | | | |
| S5 | L3 | Aspheric surface | 5.684 | 0.446 | Resin | 1.545 | 56.0 |
| S6 | | Aspheric surface | 11.407 | 0.495 | | | |
| S7 | L4 | Aspheric surface | 52.804 | 0.306 | Resin | 1.671 | 23.0 |
| S8 | | Aspheric surface | 76.673 | 0.082 | | | |
| S9 | L5 | Aspheric surface | -12.851 | 0.626 | Resin | 1.544 | 56.0 |
| S10 | | Aspheric surface | -11.007 | 0.398 | | | |
| S11 | L6 | Aspheric surface | 31.580 | 0.400 | Resin | 1.573 | 37.6 |
| S12 | | Aspheric surface | 9.752 | 0.300 | | | |
| S13 | L7 | Aspheric surface | 3.807 | 0.563 | Resin | 1.546 | 55.8 |
| S14 | | Aspheric surface | -21.301 | 0.994 | | | |
| S15 | L8 | Aspheric surface | -23.757 | 0.550 | Resin | 1.546 | 55.8 |
| S16 | | Aspheric surface | 2.836 | 0.165 | | | |
| S17 | Infrared cut-off filter | Plane | Unlimited | 0.210 | Glass | 1.518 | 64.2 |
| S18 | | Plane | Unlimited | 0.940 | | | |

(continued)

| Surface number | Note | Surface type | Radius of curvature | Thickness | Material | Refractive index | Dispersion coefficient |
|---|---|---|---|---|---|---|---|
| S19 | | Plane | Unlimited | 0.030 | | | |

Meanings of symbols in the foregoing table are as follows:
OBJ: object distance;
STO: stop;
L 1: first lens element L 1;
L2: second lens element L2;
L3: third lens element L3;
L4: fourth lens element L4;
L5: fifth lens element L5;
L6: sixth lens element L6;
L7: seventh lens element L7;
L8: eighth lens element L8;
S1: object-side surface of the first lens element L1;
S2: image-side surface of the first lens element L1;
S3: object-side surface of the second lens element L2;
S4: image-side surface of the second lens element L2;
S5: object-side surface of the third lens element L3;
S6: image-side surface of the third lens element L3;
S7: object-side surface of the fourth lens element L4;
S8: image-side surface of the fourth lens element L4;
S9: object-side surface of the fifth lens element L5;
S10: image-side surface of the fifth lens element L5;
S 11: object-side surface of the sixth lens element L6;
S12: image-side surface of the sixth lens element L6;
S13: object-side surface of the seventh lens element L7;
S14: image-side surface of the seventh lens element L7;
S15: object-side surface of the eighth lens element L8;
S16: image-side surface of the eighth lens element L8;
S17: object-side surface of the infrared cut-off filter 30;
S18: image-side surface of the infrared cut-off filter 30;
S19: image plane

It should be noted that the meanings of the foregoing symbols are the same in this application, unless otherwise specified. When the symbols appear again subsequently, details are not described again.

Table 3 shows the clear apertures of the object-side surface and the image-side surface of each lens element of the optical lens 10 in this implementation. Details are shown in Table 3.

**Table 3: Clear apertures of lens elements of the optical lens 10 in the first implementation**

| Surface number | S1 | S2 | S3 | S4 | S5 | S6 | S7 | S8 | S9 | S10 | S11 | S12 | S13 | S14 | S15 | S16 |
|---|---|---|---|---|---|---|---|---|---|---|---|---|---|---|---|---|
| Aperture | 4.22 | 4.12 | 3.96 | 3.60 | 3.54 | 3.33 | 3.40 | 3.84 | 4.10 | 4.46 | 5.36 | 6.14 | 6.77 | 7.49 | 8.84 | 9.64 |

Table 4 shows aspheric coefficients of the optical lens 10 in this implementation. The optical lens 10 in this embodiment has 16 aspheric surfaces. Details are shown in Table 4.

**Table 4: Aspheric coefficients of the optical lens 10 in the first implementation**

| Surface number | K | A4 | A6 | A8 | A10 |
|---|---|---|---|---|---|
| S1 | 9.71E-02 | -5.29E-03 | 1.21E-02 | -1.83E-02 | 1.66E-02 |
| S2 | -7.80E+00 | -4.65E-02 | 6.92E-02 | -7.29E-02 | 5.30E-02 |
| S3 | -4.53E+00 | -6.15E-02 | 8.50E-02 | -8.80E-02 | 6.37E-02 |
| S4 | -5.44E-01 | -3.07E-02 | 4.46E-02 | -4.17E-02 | 2.31E-02 |
| S5 | 1.63E+00 | -4.47E-03 | 1.11E-02 | -3.04E-03 | -9.62E-03 |
| S6 | 8.09E+00 | -1.29E-03 | 1.25E-03 | -6.83E-03 | 1.41E-02 |
| S7 | 0.00E+00 | -2.20E-03 | -5.85E-02 | 7.48E-02 | -6.26E-02 |
| S8 | 0.00E+00 | 6.82E-02 | -1.80E-01 | 2.06E-01 | -1.56E-01 |
| S9 | 7.59E+00 | 9.01E-02 | -1.74E-01 | 1.71E-01 | -1.10E-01 |
| S10 | -6.11E+00 | 2.07E-02 | -4.22E-02 | 2.26E-02 | -6.58E-03 |
| S11 | -4.82E+00 | 1.19E-02 | -2.41E-02 | 1.25E-02 | -4.86E-03 |
| S12 | -2.07E+00 | -4.03E-02 | 7.67E-04 | 3.84E-03 | -2.24E-03 |
| S13 | 8.13E-03 | -2.58E-02 | 2.25E-03 | -3.77E-03 | 1.84E-03 |
| S14 | 0.00E+00 | 2.40E-02 | -8.78E-03 | 4.61E-04 | 3.45E-04 |
| S15 | 1.41E+00 | -7.91E-02 | 2.61E-02 | -5.77E-03 | 8.60E-04 |
| S16 | -1.14E+01 | -3.65E-02 | 9.68E-03 | -1.62E-03 | 1.67E-04 |
| Surface number | A12 | A14 | A16 | A18 | A20 |
| S1 | -9.31E-03 | 3.29E-03 | -7.09E-04 | 8.57E-05 | -4.46E-06 |
| S2 | -2.56E-02 | 7.97E-03 | -1.52E-03 | 1.61E-04 | -7.14E-06 |
| S3 | -3.09E-02 | 9.75E-03 | -1.90E-03 | 2.05E-04 | -9.18E-06 |
| S4 | -5.45E-03 | -1.21E-03 | 1.19E-03 | -3.05E-04 | 2.77E-05 |
| S5 | 1.35E-02 | -8.29E-03 | 2.80E-03 | -4.99E-04 | 3.66E-05 |
| S6 | -1.54E-02 | 9.82E-03 | -3.58E-03 | 6.99E-04 | -5.59E-05 |
| S7 | 3.16E-02 | -9.63E-03 | 1.71E-03 | -1.60E-04 | 6.32E-06 |
| S8 | 7.81E-02 | -2.54E-02 | 5.14E-03 | -5.87E-04 | 2.91E-05 |
| S9 | 4.79E-02 | -1.38E-02 | 2.48E-03 | -2.47E-04 | 1.05E-05 |
| S10 | 7.83E-04 | 1.34E-04 | -6.51E-05 | 8.85E-06 | -3.85E-07 |
| S11 | 1.30E-03 | -2.08E-04 | 1.59E-05 | -1.54E-07 | -2.88E-08 |
| S12 | 7.17E-04 | -1.33E-04 | 1.42E-05 | -8.08E-07 | 1.90E-08 |
| S13 | -4.52E-04 | 6.23E-05 | -4.84E-06 | 1.98E-07 | -3.34E-09 |
| S14 | -1.09E-04 | 1.54E-05 | -1.19E-06 | 4.74E-08 | -7.74E-10 |
| S15 | -8.26E-05 | 5.02E-06 | -1.86E-07 | 3.85E-09 | -3.40E-11 |
| S16 | -1.07E-05 | 4.09E-07 | -8.68E-09 | 8.17E-11 | -1.19E-13 |

K indicates a conical coefficient in an aspheric curve equation. A4, A6, A8, A10, A12, A14, A16, A19, and A20 indicate 4th-order, 6th-order, 8th-order, 10th-order, 12th-order, 14th-order, 16th-order, 18th-order, and 20th-order aspheric coefficients of each surface. It should be noted that each parameter in the table is indicated through scientific notation.

For example, -1.07E-01 means $-1.07 \times 10^{-1}$, and -4.11E-02 means $-4.11 \times 10^{-2}$. It should be noted that meanings of symbols such as K, A4, A6, A8, A10, A12, A14, A16, A19, and A20 are the same in this application, unless otherwise specified. When the symbols appear again subsequently, details are not described again.

The foregoing parameters are substituted into the following formula:

$$z = \frac{cr^2}{1 + \sqrt{1 - (1+k)c^2 r^2}} + \sum_{i=1}^{N} \alpha_i \rho^{2i},$$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the $i^{th}$-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

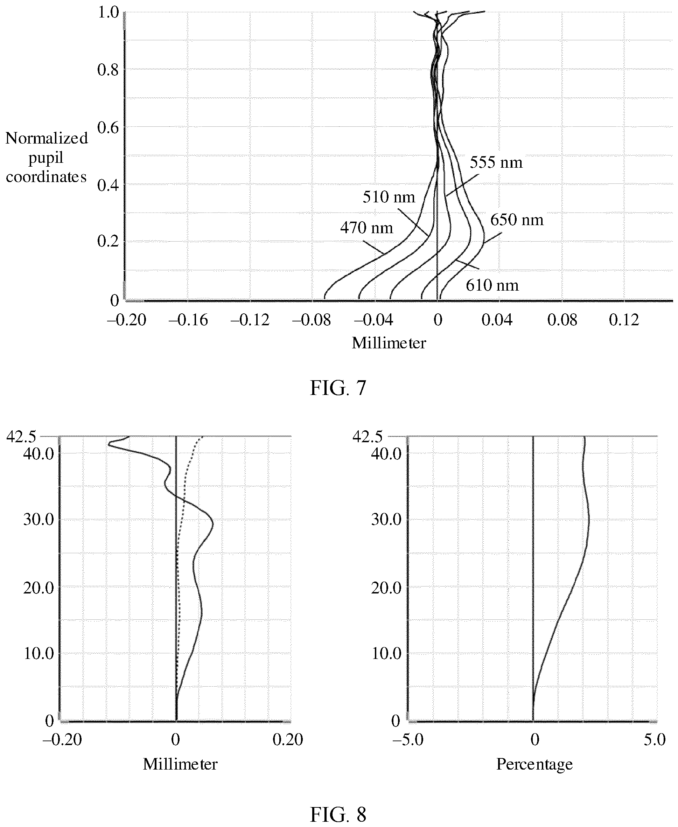

FIG. 7 and FIG. 8 are diagrams for representing optical properties of the optical lens 10 in the first implementation.

Specifically, FIG. 8 shows axial chromatic aberrations of the optical lens 10 obtained after light whose wavelengths are respectively 650 nm, 610 nm, 555 nm, 510 nm, and 470 nm passes through the optical lens 10 in the first implementation. In FIG. 8, a vertical coordinate represents normalized pupil coordinates, and a horizontal coordinate represents an axial chromatic aberration in a unit of millimeter. It can be learned from FIG. 8, in this implementation, axial chromatic aberrations of the optical lens 10 in various states are controlled within a small range.

In FIG. 8, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the first implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 8 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

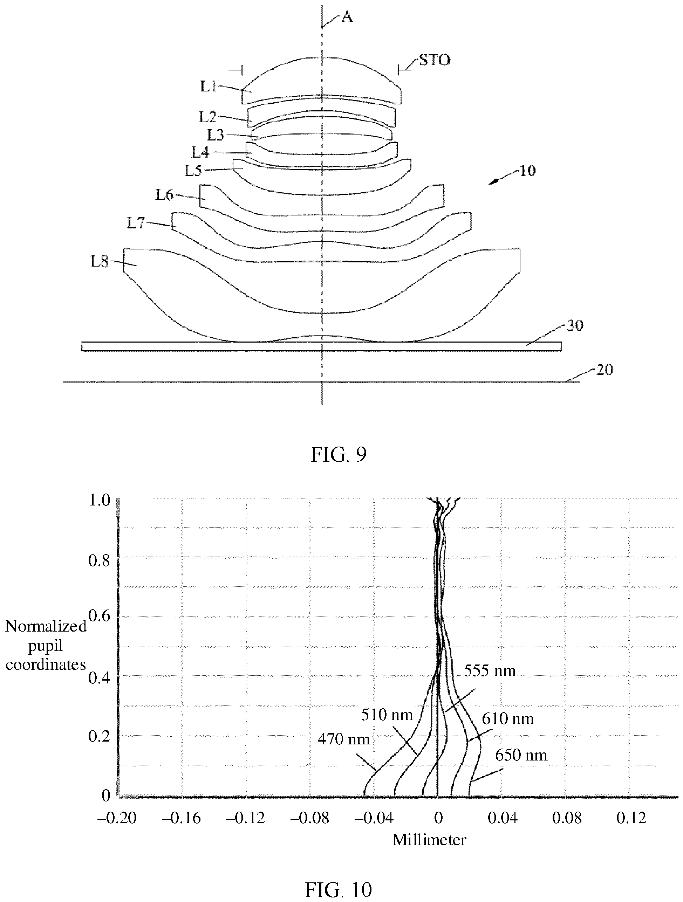

FIG. 9 is a schematic diagram of a structure of the camera module 1 according to a second implementation of this application.

In this implementation, the optical lens 10 includes the stop STO and eight lens elements. Specifically, the optical lens 10 includes the stop STO, the first lens element L1, the second lens element L2, the third lens element L3, the fourth lens element L4, the fifth lens element L5, the sixth lens element L6, the seventh lens element L7, and the eighth lens element L8 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has the negative refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has the positive refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and further balance the spherical aberration and the chromatic aberration that are generated by the first lens element L1.

The fourth lens element L4 has the negative refractive power. A part that is of the object-side surface of the fourth lens element L4 and that is near the optical axis A is a convex surface. A part that is of the image-side surface of the fourth lens element L4 and that is near the optical axis A is a concave surface. The fourth lens element L4 helps correct the aberration of the optical lens 10, and balance the spherical aberration and the chromatic aberration that are generated by the first lens element L1.

In this implementation, the first lens element L1 has the positive refractive power, the second lens element L2 has the negative refractive power, the third lens element L3 has the positive refractive power, and the fourth lens element L4 has the negative refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The fifth lens element L5 has positive refractive power. A part that is of the object-side surface of the fifth lens element L5 and that is near the optical axis A is a concave surface. Apart that is of the image-side surface of the fifth lens element L5 and that is near the optical axis A is a convex surface. The fifth lens element L5 can facilitate light convergence of the optical lens 10, and effectively shorten a back focal length and the total track length.

The sixth lens element L6 has negative refractive power. A part that is of the object-side surface of the sixth lens element L6 and that is near the optical axis A is a convex surface. A part that is of the image-side surface of the sixth lens element L6 and that is near the optical axis Ais a concave surface. The sixth lens element L6 helps balance a distribution of negative refractive power of the optical lens 10, reduce sensitivity of the optical lens, and reduce a spherical aberration.

The seventh lens element L7 has positive refractive power. A part that is of the object-side surface of the seventh lens element L7 and that is near the optical axis A is a convex surface. A part that is of the image-side surface of the seventh lens element L7 and that is near the optical axis A is a convex surface. In addition, an off-axis part includes at least one concave surface. The seventh lens element L7 facilitates light convergence of the optical lens 10, and can effectively shorten the back focal length and the total track length.

The eighth lens element L8 has negative refractive power. A part that is of an object-side surface of the eighth lens element L8 and that is near the optical axis A is a concave surface. A part that is of an image-side surface S16 of the eighth lens element L8 and that is near the optical axis A is a concave surface. An off-axis part of the object-side surface S15 of the eighth lens element L8 includes at least one concave surface. An off-axis part of the image-side surface S16 of the eighth lens element L8 includes at least one convex surface. The eighth lens element L8 helps move a principal point of the optical lens 10 to a photographed object end, to effectively shorten the back focal length and the total track length, and help correct an aberration in an off-axis field of view.

The object-side surface and the image-side surface of the eighth lens element L8 each include at least one inflection point, to correct the aberration in the off-axis field of view. The inflection point is a conversion point at which a center of curvature of a curve from a part that is of the lens element and that is near the optical axis A to a surface of the lens element at an off-axis part is moved from the object side to the image side (or moved from the image side to the object side). The image-side surface of the eighth lens element L8 includes at least two critical points, to correct an off-axis aberration. The critical point is defined as a tangent point that is on the surface of the lens element and that is tangent to a tangent plane perpendicular to an optical axis other than an intersection point with the optical axis.

In this implementation, the sixth lens element L6 has the negative refractive power, and the part that is of the image-side surface of the sixth lens element L6 and that is near the optical axis is the concave surface. The seventh lens element L7 has the positive refractive power, and the part that is of the object-side surface of the seventh lens element L7 and that is near the optical axis is the convex surface. The eighth lens element L8 has the negative refractive power, and the part that is of the image-side surface of the eighth lens element L8 and that is near the optical axis is the concave surface. The sixth lens element L6, the seventh lens element L7, and the eighth lens element L8 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, the seventh lens element L7, and the eighth lens element L8 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.67, and a refractive index (Nmin) of a lens element with the smallest refractive index in all the lens elements is 1.54. The foregoing limit values ensure that all materials that can be used for the lens elements are the resin material. The resin material has high formability and strong manufacturability compared with the glass materials, and can effectively reduce production costs. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, N7, and N8) of the third lens element L3, the fifth lens element L5, the seventh lens element L7, and the eighth lens element L8 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, the seventh lens element L7, and the eighth lens element L8 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 56, and a dispersion coefficient (Vmin) of a lens element with the smallest dispersion coefficient in all the lens elements is 19.5. The foregoing limit values ensure the chromatic aberration elimination capability of the optical lens 10, and improve the imaging quality of the optical lens 10.

In some implementations, the dispersion coefficient (V1) of the first lens element L1 is greater than or equal to 30 and less than or equal to 90. The dispersion coefficients (V3, V5, V7, and V8) of the third lens element L3, the fifth lens element L5, the seventh lens element L7, and the eighth lens element L8 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, the seventh lens element L7, and the eighth lens element L8 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.121. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is 0.321. The foregoing limit value helps correct the aberration of the optical lens 10, balance the spherical aberration and the chromatic aberration that are generated by the first lens element L1, and improve the imaging effect of the optical lens 10.

The ratio (|EFL/fi|) of the focal length of the optical lens 10 to the focal length of each lens element is 1.4. The ratio (|f1/fi|) of the focal length of the first lens element L1 to the focal length of each of the other lens elements is 1.7. The ratio (|f4/fi|) of the focal length of the fourth lens element L4 to the focal length of each of the other lens elements is 2.0. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. A radius of curvature of the object-side surface of the eighth lens element L8 is R15. A radius of curvature of the image-side surface of the eighth lens element L8 is R16. |R1/R2|=0.45, |R3/R4|=1.35, |R5/R6|=0.51, |R7/R8|=4.14, |R9/R10|=1.07, |R11/R12|=2.08, |R13/R14|=0.01, and |R15/R16|=7.67. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

A ratio (CTmax/CTmin) of a largest value of a thickness for all of the first lens element L1 to the eighth lens element L8 on the optical axis A to a smallest value of the thickness for all of the first lens element L1 to the eighth lens element L8 on the optical axis A is 3.09. A ratio (Tmin/Tmax) of a largest value of a distance between any two adjacent lens elements in the first lens element L1 to the eighth lens element L8 to a smallest value of the distance between the any two adjacent lens elements in the first lens element L1 to the eighth lens element L8 is 0.064. The ratio (Dr5r10/TTL) of the distance between the object-side surface of the third lens element L3 and the image-side surface of the fifth lens element L5 on the optical axis A to the total track length is 0.24. A ratio (Dmax/Dmin) of a largest value of a light transmission hole on an object-side surface or an image-side surface for all of the lens elements to a smallest value of the light transmission hole on the object-side surface or the image-side surface for all of the lens elements is 2.95. A ratio (Tmax/CTmax) of the largest value of the distance between the any two adjacent lens elements in the first lens element L1 to the eighth lens element L8 to the smallest value of the thickness for all of the first lens element L1 to the eighth lens element L8 on the optical axis A is 1.356. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT1/MaxCT2L) of the thickness of the first lens element L1 on the optical axis A to the largest value of a thickness for all of the second lens element L2 to the eighth lens element L8 on the optical axis A is 1.52. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the seventh lens element L7 and the eighth lens element L8 on the optical axis A is T78. A distance between the image-side surface of the eighth lens element L8 and the image plane on the optical axis A is BL. Tmax is the largest value of the distance between the any two adjacent lens elements in the first lens element L1 to the eighth lens element L8. Tmax/T12=15.7, Tmax/T23=8.7, Tmax/T34=2.4, Tmax/T45=14.3, Tmax/T56=2.6, Tmax/T67=4.9, and Tmax/BL=1.1. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the second implementation of this application are shown in Table 5.

**Table 5: Basic parameters of the optical lens 10 in the second implementation in an operating state**

| Parameter (mm) | TTL | ImgH | EFL | f1 | f2 | f3 | f4 | f5 | f6 | f7 | f8 |
|---|---|---|---|---|---|---|---|---|---|---|---|
| Numeric value | 7.85 | 6.253 | 6.651 | 8.348 | -22.044 | 20.491 | -515.241 | 257.606 | -32.394 | 6.747 | -4.818 |

Detailed structural data of components of the camera module 1 in the second implementation of this application is shown in Table 6.

**Table 6: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.380 | | | |
| S1 | L1 | Aspheric surface | 2.768 | 0.928 | Resin | 1.544 | 56.0 |
| S2 | | Aspheric surface | 6.218 | 0.080 | | | |
| S3 | L2 | Aspheric surface | 4.641 | 0.300 | Resin | 1.670 | 19.5 |
| S4 | | Aspheric surface | 3.447 | 0.144 | | | |
| S5 | L3 | Aspheric surface | 5.677 | 0.409 | Resin | 1.545 | 56.0 |
| S6 | | Aspheric surface | 11.215 | 0.515 | | | |
| S7 | L4 | Aspheric surface | 1093.876 | 0.300 | Resin | 1.670 | 19.5 |
| S8 | | Aspheric surface | 264.197 | 0.088 | | | |
| S9 | L5 | Aspheric surface | -12.977 | 0.611 | Resin | 1.544 | 56.0 |
| S10 | | Aspheric surface | -12.078 | 0.477 | | | |
| S11 | L6 | Aspheric surface | 19.856 | 0.400 | Resin | 1.573 | 37.6 |
| S12 | | Aspheric surface | 9.544 | 0.256 | | | |
| S13 | L7 | Aspheric surface | 3.725 | 0.496 | Resin | 1.546 | 55.8 |
| S14 | | Aspheric surface | -433.973 | 1.258 | | | |

(continued)

| Surface number | Note | Surface type | Radius of curvature | Thickness | Material | Refractive index | Dispersion coefficient |
|---|---|---|---|---|---|---|---|
| S15 | L8 | Aspheric surface | -23.035 | 0.550 | Resin | 1.546 | 55.8 |
| S16 | | Aspheric surface | 3.004 | 0.168 | | | |
| S17 | Infrared cut-off filter | Plane | Unlimited | 0.210 | Glass | 1.518 | 64.2 |
| S18 | | Plane | Unlimited | 0.751 | | | |
| S19 | | Plane | Unlimited | 0.009 | | | |

Table 7 shows the clear apertures of the object-side surface and the image-side surface of each lens element of the optical lens 10 in this implementation. Details are shown in Table 7.

**Table 7: Clear apertures of lens elements of the optical lens 10 in the second implementation**

| Surface number | S1 | S2 | S3 | S4 | S5 | S6 | S7 | S8 | S9 | S10 | S11 | S12 | S13 | S14 | S15 | S16 |
|---|---|---|---|---|---|---|---|---|---|---|---|---|---|---|---|---|
| Aperture | 4.13 | 4.36 | 3.91 | 3.58 | 3.53 | 3.36 | 3.30 | 3.73 | 4.10 | 4.33 | 5.12 | 5.95 | 6.61 | 7.31 | 9.04 | 9.74 |

Table 8 shows aspheric coefficients of the optical lens 10 in this implementation. The optical lens 10 in this embodiment has 16 aspheric surfaces. Details are shown in Table 8.

**Table 8: Aspheric coefficients of the optical lens 10 in the second implementation**

| Surface number | K | A4 | A6 | A8 | A10 |
|---|---|---|---|---|---|
| S1 | 1.24E-01 | -4.59E-03 | 1.05E-02 | -1.61E-02 | 1.51E-02 |
| S2 | -4.62E+00 | -5.22E-02 | 8.12E-02 | -8.41E-02 | 5.97E-02 |
| S3 | -3.10E+00 | -7.40E-02 | 1.10E-01 | -1.14E-01 | 8.17E-02 |
| S4 | -5.76E-01 | -4.37E-02 | 7.13E-02 | -7.45E-02 | 5.06E-02 |
| S5 | 1.44E+00 | -1.17E-02 | 2.27E-02 | -1.51E-02 | -2.25E-03 |
| S6 | 1.07E+01 | -1.20E-03 | 1.43E-03 | -6.73E-03 | 1.42E-02 |
| S7 | 0.00E+00 | 4.88E-03 | -8.35E-02 | 1.07E-01 | -8.61E-02 |
| S8 | 0.00E+00 | 7.66E-02 | -1.99E-01 | 2.17E-01 | -1.53E-01 |
| S9 | 1.27E+01 | 9.74E-02 | -1.90E-01 | 1.82E-01 | -1.10E-01 |
| S10 | 1.12E+00 | 1.46E-02 | -4.13E-02 | 2.68E-02 | -1.11E-02 |
| S11 | 0.00E+00 | 1.46E-02 | -2.81E-02 | 1.47E-02 | -5.79E-03 |
| S12 | -1.40E+01 | -2.89E-02 | -6.36E-03 | 6.40E-03 | -3.04E-03 |
| S13 | -4.31E-02 | -2.44E-02 | -3.73E-03 | 7.60E-04 | -8.73E-05 |
| S14 | 0.00E+00 | 2.18E-02 | -1.08E-02 | 1.52E-03 | 1.55E-05 |
| S15 | 1.05E+01 | -6.83E-02 | 1.92E-02 | -3.69E-03 | 4.99E-04 |
| S16 | -1.13E+01 | -3.21E-02 | 8.05E-03 | -1.41E-03 | 1.67E-04 |
| Surface number | A12 | A14 | A16 | A18 | A20 |
| S1 | -8.84E-03 | 3.27E-03 | -7.39E-04 | 9.38E-05 | -5.14E-06 |
| S2 | -2.85E-02 | 8.88E-03 | -1.72E-03 | 1.84E-04 | -8.31E-06 |
| S3 | -3.96E-02 | 1.27E-02 | -2.54E-03 | 2.84E-04 | -1.34E-05 |
| S4 | -2.12E-02 | 4.75E-03 | -1.93E-04 | -1.34E-04 | 1.95E-05 |
| S5 | 1.15E-02 | -8.56E-03 | 3.18E-03 | -6.08E-04 | 4.74E-05 |
| S6 | -1.54E-02 | 9.82E-03 | -3.58E-03 | 6.99E-04 | -5.59E-05 |
| S7 | 4.05E-02 | -1.02E-02 | 8.62E-04 | 1.38E-04 | -2.53E-05 |
| S8 | 7.03E-02 | -2.06E-02 | 3.67E-03 | -3.50E-04 | 1.31E-05 |
| S9 | 4.32E-02 | -1.09E-02 | 1.63E-03 | -1.21E-04 | 2.87E-06 |
| S10 | 3.38E-03 | -7.98E-04 | 1.37E-04 | -1.54E-05 | 8.57E-07 |
| S11 | 1.54E-03 | -2.37E-04 | 1.68E-05 | -4.86E-08 | -3.61E-08 |
| S12 | 8.86E-04 | -1.52E-04 | 1.50E-05 | -7.94E-07 | 1.74E-08 |
| S13 | 3.37E-05 | -9.64E-06 | 1.28E-06 | -7.90E-08 | 1.85E-09 |
| S14 | -3.74E-05 | 5.79E-06 | -4.26E-07 | 1.57E-08 | -2.32E-10 |
| S15 | -4.47E-05 | 2.56E-06 | -9.08E-08 | 1.81E-09 | -1.56E-11 |
| S16 | -1.34E-05 | 7.25E-07 | -2.50E-08 | 4.99E-10 | -4.36E-12 |

K indicates a conical coefficient in an aspheric curve equation. A4, A6, A8, A10, A12, A14, A16, A19, and A20 indicate 4th-order, 6th-order, 8th-order, 10th-order, 12th-order, 14th-order, 16th-order, 18th-order, and 20th-order aspheric coefficients of each surface. It should be noted that each parameter in the table is indicated through scientific notation.

For example, -1.07E-01 means $-1.07\times10^{-1}$, and -4. 11E-02 means $-4.11\times10^{-2}$. It should be noted that meanings of symbols such as K, A4, A6, A8, A10, A12, A14, A16, A19, and A20 are the same in this application, unless otherwise specified. When the symbols appear again subsequently, details are not described again.

The foregoing parameters are substituted into the following formula:

$$z = \frac{cr^2}{1 + \sqrt{1 - (1+k)c^2r^2}} + \sum_{i=1}^{N} \alpha_i \rho^{2i},$$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the $i^{th}$-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

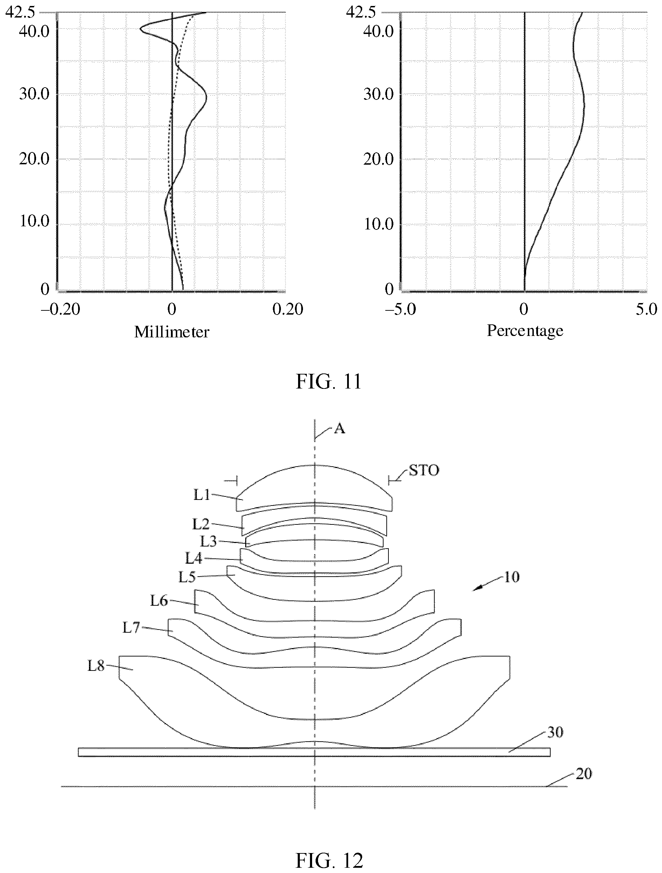

FIG. 10 and FIG. 11 are diagrams for representing optical properties of the optical lens 10 in the second implementation.

Specifically, FIG. 10 shows axial chromatic aberrations of the optical lens 10 obtained after light whose wavelengths are respectively 650 nm, 610 nm, 555 nm, 510 nm, and 470 nm passes through the optical lens 10 in the second implementation. In FIG. 10, a vertical coordinate represents normalized pupil coordinates, and a horizontal coordinate represents an axial chromatic aberration in a unit of millimeter. It can be learned from FIG. 10, in this implementation, axial chromatic aberrations of the optical lens 10 in various states are controlled within a small range.

In FIG. 11, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the second implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 11 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

FIG. 12 is a schematic diagram of a structure of the camera module 1 according to a third implementation of this application.

In this implementation, the optical lens 10 includes the stop STO and eight lens elements. Specifically, the optical lens 10 includes the stop STO, the first lens element L1, the second lens element L2, the third lens element L3, the fourth lens element L4, the fifth lens element L5, the sixth lens element L6, the seventh lens element L7, and the eighth lens element L8 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has the negative refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has the positive refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and further balance the spherical aberration and the chromatic aberration that are generated by the first lens element L1.

The fourth lens element L4 has the negative refractive power. A part that is of the object-side surface of the fourth lens element L4 and that is near the optical axis A is a concave surface. A part that is of the image-side surface of the fourth lens element L4 and that is near the optical axis A is a concave surface. The fourth lens element L4 helps correct the aberration of the optical lens 10, and balance the spherical aberration and the chromatic aberration that are generated by the first lens element L1.

In this implementation, the first lens element L1 has the positive refractive power, the second lens element L2 has the negative refractive power, the third lens element L3 has the positive refractive power, and the fourth lens element L4 has the negative refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The fifth lens element L5 has positive refractive power. A part that is of the object-side surface of the fifth lens element L5 and that is near the optical axis A is a concave surface. Apart that is of the image-side surface of the fifth lens element L5 and that is near the optical axis A is a convex surface. The fifth lens element L5 can facilitate light convergence of the optical lens 10, and effectively shorten a back focal length and the total track length.

The sixth lens element L6 has negative refractive power. A part that is of the object-side surface of the sixth lens element L6 and that is near the optical axis A is a convex surface. A part that is of the image-side surface of the sixth lens element L6 and that is near the optical axis A is a concave surface. The sixth lens element L6 helps balance a distribution of negative refractive power of the optical lens 10, reduce sensitivity of the optical lens, and reduce a spherical aberration.

The seventh lens element L7 has positive refractive power. A part that is of the object-side surface of the seventh lens element L7 and that is near the optical axis A is a convex surface. A part that is of the image-side surface of the seventh lens element L7 and that is near the optical axis A is a concave surface. In addition, an off-axis part includes at least one concave surface. The seventh lens element L7 facilitates light convergence of the optical lens 10, and can effectively shorten the back focal length and the total track length.

The eighth lens element L8 has negative refractive power. A part that is of an object-side surface of the eighth lens element L8 and that is near the optical axis A is a concave surface. A part that is of an image-side surface S16 of the eighth lens element L8 and that is near the optical axis A is a concave surface. An off-axis part of the object-side surface S15 of the eighth lens element L8 includes at least one concave surface. An off-axis part of the image-side surface S16 of the eighth lens element L8 includes at least one convex surface. The eighth lens element L8 helps move a principal point of the optical lens 10 to a photographed object end, to effectively shorten the back focal length and the total track length, and help correct an aberration in an off-axis field of view.

The object-side surface and the image-side surface of the eighth lens element L8 each include at least one inflection point, to correct the aberration in the off-axis field of view. The inflection point is a conversion point at which a center of curvature of a curve from a part that is of the lens element and that is near the optical axis A to a surface of the lens element at an off-axis part is moved from the object side to the image side (or moved from the image side to the object side). The image-side surface of the eighth lens element L8 includes at least two critical points, to correct an off-axis aberration. The critical point is defined as a tangent point that is on the surface of the lens element and that is tangent to a tangent plane perpendicular to an optical axis other than an intersection point with the optical axis.

In this implementation, the sixth lens element L6 has the negative refractive power, and the part that is of the image-side surface of the sixth lens element L6 and that is near the optical axis is the concave surface. The seventh lens element L7 has the positive refractive power, and the part that is of the object-side surface of the seventh lens element L7 and that is near the optical axis is the concave surface. The eighth lens element L8 has the negative refractive power, and the part that is of the image-side surface of the eighth lens element L8 and that is near the optical axis is the concave surface. The sixth lens element L6, the seventh lens element L7, and the eighth lens element L8 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, the seventh lens element L7, and the eighth lens element L8 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.67, and a refractive index (Nmin) of a lens element with the smallest refractive index in all the lens elements is 1.54. The foregoing limit values ensure that all materials that can be used for the lens elements are the resin material. The resin material has high formability and strong manufacturability compared with the glass materials, and can effectively reduce production costs. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, N7, and N8) of the third lens element L3, the fifth lens element L5, the seventh lens element L7, and the eighth lens element L8 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, the seventh lens element L7, and the eighth lens element L8 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 56, and a dispersion coefficient (Vmin) of a lens element with the smallest dispersion coefficient in all the lens elements is 19.5. The foregoing limit values ensure the chromatic aberration elimination capability of the optical lens 10, and improve the imaging quality of the optical lens 10.

In some implementations, the dispersion coefficient (V1) of the first lens element L 1 is greater than or equal to 30 and less than or equal to 90. The dispersion coefficients (V3, V5, V7, and V8) of the third lens element L3, the fifth lens element L5, the seventh lens element L7, and the eighth lens element L8 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, the seventh lens element L7, and the eighth lens element L8 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.118. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is 0.317. The foregoing limit value helps correct the aberration of the optical lens 10, balance the spherical aberration and the chromatic aberration that are generated by the first lens element L1, and improve the imaging effect of the optical lens 10.

The ratio (|EFL/fi|) of the focal length of the optical lens 10 to the focal length of each lens element is 1.4. The ratio (|f1/fi|) of the focal length of the first lens element L1 to the focal length of each of the other lens elements is 1.7. The ratio (|f4/fi|) of the focal length of the fourth lens element L4 to the focal length of each of the other lens elements is 1.5. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. A radius of curvature of the object-side surface of the eighth lens element L8 is R15. A radius of curvature of the image-side surface of the eighth lens element L8 is R16. |R1/R2|=0.44, |R3/R4|=1.35, |R5/R6|=0.52, |R7/R8|=0.12, |R9/R10|=1.09, |R11/R12|=2.02, |R13/R14|=0.0001, and |R15/R16|=6.86. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

A ratio (CTmax/CTmin) of a largest value of a thickness for all of the first lens element L1 to the eighth lens element L8 on the optical axis A to a smallest value of the thickness for all of the first lens element L1 to the eighth lens element L8 on the optical axis A is 3.11. A ratio (Tmin/Tmax) of a largest value of a distance between any two adjacent lens elements in the first lens element L1 to the eighth lens element L8 to a smallest value of the distance between the any two adjacent lens elements in the first lens element L1 to the eighth lens element L8 is 0.061. The ratio (Dr5r10/TTL) of the distance between the object-side surface of the third lens element L3 and the image-side surface of the fifth lens element L5 on the optical axis A to the total track length is 0.24. A ratio (Dmax/Dmin) of a largest value of a light transmission hole on an object-side surface or an image-side surface for all of the lens elements to a smallest value of the light transmission hole on the object-side surface or the image-side surface for all of the lens elements is 2.96. A ratio (Tmax/CTmax) of the largest value of the distance between the any two adjacent lens elements in the first lens element L1 to the eighth lens element L8 to the smallest value of the thickness for all of the first lens element L1 to the eighth lens element L8 on the optical axis A is 1.406. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT1/MaxCT2L) of the thickness of the first lens element L1 on the optical axis A to the largest value of a thickness for all of the second lens element L2 to the eighth lens element L8 on the optical axis A is 1.51. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the seventh lens element L7 and the eighth lens element L8 on the optical axis A is T78. A distance between the image-side surface of the eighth lens element L8 and the image plane on the optical axis A is BL. Tmax is the largest value of the distance between the any two adjacent lens elements in the first lens element L1 to the eighth lens element L8. Tmax/T12=16.4, Tmax/T23=9.0, Tmax/T34=2.5, Tmax/T45=14.0, Tmax/T56=2.7, Tmax/T67=5.1, and Tmax/BL=1.2. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the third implementation of this application are shown in Table 9.

**Table 9: Basic parameters of the optical lens 10 in the third implementation in an operating state**

| Parameter (mm) | TTL | ImgH | EFL | f1 | f2 | f3 | f4 | f5 | f6 | f7 | f8 |
|---|---|---|---|---|---|---|---|---|---|---|---|
| Numeric value | 8.05 | 6.32 | 6.712 | 8.409 | -22.212 | 21.044 | -316.321 | 217.900 | -33.580 | 6.863 | -4.885 |

Detailed structural data of components of the camera module 1 in the third implementation of this application is shown in Table 10.

**Table 10: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.380 | | | |
| S1 | L1 | Aspheric surface | 2.800 | 0.933 | Resin | 1.544 | 56.0 |
| S2 | | Aspheric surface | 6.334 | 0.080 | | | |
| S3 | L2 | Aspheric surface | 4.673 | 0.300 | Resin | 1.670 | 19.5 |
| S4 | | Aspheric surface | 3.472 | 0.145 | | | |
| S5 | L3 | Aspheric surface | 5.700 | 0.405 | Resin | 1.545 | 56.0 |
| S6 | | Aspheric surface | 11.011 | 0.532 | | | |
| S7 | L4 | Aspheric surface | -239.003 | 0.300 | Resin | 1.670 | 19.5 |
| S8 | | Aspheric surface | 2035.639 | 0.094 | | | |
| S9 | L5 | Aspheric surface | -12.980 | 0.617 | Resin | 1.544 | 56.0 |
| S10 | | Aspheric surface | -11.900 | 0.485 | | | |
| S11 | L6 | Aspheric surface | 19.449 | 0.400 | Resin | 1.573 | 37.6 |
| S12 | | Aspheric surface | 9.620 | 0.257 | | | |

(continued)

| Surface number | Note | Surface type | Radius of curvature | Thickness | Material | Refractive index | Dispersion coefficient |
|---|---|---|---|---|---|---|---|
| S13 | L7 | Aspheric surface | 3.758 | 0.503 | Resin | 1.546 | 55.8 |
| S14 | | Aspheric surface | 34461.058 | 1.312 | | | |
| S15 | L8 | Aspheric surface | -21.200 | 0.550 | Resin | 1.546 | 55.8 |
| S16 | | Aspheric surface | 3.089 | 0.167 | | | |
| S17 | Infrared cut-off filter | Plane | Unlimited | 0.210 | Glass | 1.518 | 64.2 |
| S18 | | Plane | Unlimited | 0.736 | | | |
| S19 | | Plane | Unlimited | 0.024 | | | |

Table 11 shows the clear apertures of the object-side surface and the image-side surface of each lens element of the optical lens 10 in this implementation. Details are shown in Table 11.

**Table 11: Clear apertures of lens elements of the optical lens 10 in the third implementation**

| Surface number | S1 | S2 | S3 | S4 | S5 | S6 | S7 | S8 | S9 | S10 | S11 | S12 | S13 | S14 | S15 | S16 |
|---|---|---|---|---|---|---|---|---|---|---|---|---|---|---|---|---|
| Aperture | 4.17 | 4.40 | 3.94 | 3.61 | 3.56 | 3.39 | 3.33 | 3.76 | 4.14 | 4.38 | 5.17 | 6.02 | 6.71 | 7.38 | 9.20 | 9.87 |

Table 12 shows aspheric coefficients of the optical lens 10 in this implementation. The optical lens 10 in this embodiment has 16 aspheric surfaces. Details are shown in Table 12.

**Table 12: Aspheric coefficients of the optical lens 10 in the third implementation**

| Surface number | K | A4 | A6 | A8 | A10 |
|---|---|---|---|---|---|
| S1 | 1.26E-01 | -4.89E-03 | 1.11E-02 | -1.64E-02 | 1.48E-02 |
| S2 | -4.57E+00 | -5.09E-02 | 7.84E-02 | -8.00E-02 | 5.56E-02 |
| S3 | -3.01E+00 | -7.26E-02 | 1.08E-01 | -1.10E-01 | 7.79E-02 |
| S4 | -5.91E-01 | -4.28E-02 | 6.88E-02 | -7.05E-02 | 4.62E-02 |
| S5 | 1.38E+00 | -1.18E-02 | 2.28E-02 | -1.59E-02 | -6.18E-04 |
| S6 | 1.10E+01 | -1.13E-03 | 1.38E-03 | -6.27E-03 | 1.29E-02 |
| S7 | 0.00E+00 | 5.55E-03 | -7.94E-02 | 9.45E-02 | -6.96E-02 |
| S8 | 0.00E+00 | 7.27E-02 | -1.81E-01 | 1.87E-01 | -1.23E-01 |
| S9 | 1.27E+01 | 8.98E-02 | -1.64E-01 | 1.45E-01 | -7.77E-02 |
| S10 | 1.42E+00 | 1.39E-02 | -3.91E-02 | 2.56E-02 | -1.14E-02 |
| S11 | 0.00E+00 | 1.19E-02 | -2.28E-02 | 1.04E-02 | -3.71E-03 |
| S12 | -1.49E+01 | -3.02E-02 | -2.22E-03 | 3.26E-03 | -1.72E-03 |
| S13 | -4.28E-02 | -2.54E-02 | -1.98E-03 | -5.52E-05 | 1.55E-04 |
| S14 | 0.00E+00 | 2.03E-02 | -1.01E-02 | 1.39E-03 | 1.77E-05 |
| S15 | 9.26E+00 | -6.44E-02 | 1.73E-02 | -3.23E-03 | 4.27E-04 |
| S16 | -1.14E+01 | -3.06E-02 | 7.35E-03 | -1.25E-03 | 1.42E-04 |
| Surface number | A12 | A14 | A16 | A18 | A20 |
| S1 | -8.44E-03 | 3.03E-03 | -6.69E-04 | 8.30E-05 | -4.44E-06 |
| S2 | -2.59E-02 | 7.90E-03 | -1.49E-03 | 1.56E-04 | -6.90E-06 |
| S3 | -3.71E-02 | 1.16E-02 | -2.28E-03 | 2.49E-04 | -1.15E-05 |
| S4 | -1.83E-02 | 3.58E-03 | 4.83E-05 | -1.52E-04 | 1.90E-05 |
| S5 | 9.58E-03 | -7.30E-03 | 2.70E-03 | -5.08E-04 | 3.89E-05 |
| S6 | -1.38E-02 | 8.63E-03 | -3.09E-03 | 5.90E-04 | -4.63E-05 |
| S7 | 2.84E-02 | -5.01E-03 | -4.29E-04 | 3.10E-04 | -3.46E-05 |
| S8 | 5.29E-02 | -1.43E-02 | 2.30E-03 | -1.86E-04 | 4.79E-06 |
| S9 | 2.63E-02 | -5.34E-03 | 5.27E-04 | -2.31E-06 | -2.53E-06 |
| S10 | 4.00E-03 | -1.11E-03 | 2.13E-04 | -2.48E-05 | 1.32E-06 |
| S11 | 9.06E-04 | -1.20E-04 | 4.19E-06 | 6.25E-07 | -4.85E-08 |
| S12 | 5.44E-04 | -9.69E-05 | 9.68E-06 | -5.10E-07 | 1.11E-08 |
| S13 | -1.54E-05 | -2.92E-06 | 6.92E-07 | -4.97E-08 | 1.23E-09 |
| S14 | -3.39E-05 | 5.11E-06 | -3.67E-07 | 1.33E-08 | -1.91E-10 |
| S15 | -3.75E-05 | 2.12E-06 | -7.36E-08 | 1.44E-09 | -1.22E-11 |
| S16 | -1.11E-05 | 5.79E-07 | -1.93E-08 | 3.72E-10 | -3.15E-12 |

K indicates a conical coefficient in an aspheric curve equation. A4, A6, A8, A10, A12, A14, A16, A19, and A20 indicate 4th-order, 6th-order, 8th-order, 10th-order, 12th-order, 14th-order, 16th-order, 18th-order, and 20th-order aspheric coefficients of each surface. It should be noted that each parameter in the table is indicated through scientific notation.

For example, -1.07E-01 means $-1.07\times10^{-1}$, and -4. 11E-02 means $-4.11\times10^{-2}$. It should be noted that meanings of symbols such as K, A4, A6, A8, A10, A12, A14, A16, A19, and A20 are the same in this application, unless otherwise specified. When the symbols appear again subsequently, details are not described again.

The foregoing parameters are substituted into the following formula:

$$z = \frac{cr^2}{1 + \sqrt{1 - (1+k)c^2r^2}} + \sum_{i=1}^{N} \alpha_i \rho^{2i},$$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the $i^{th}$-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

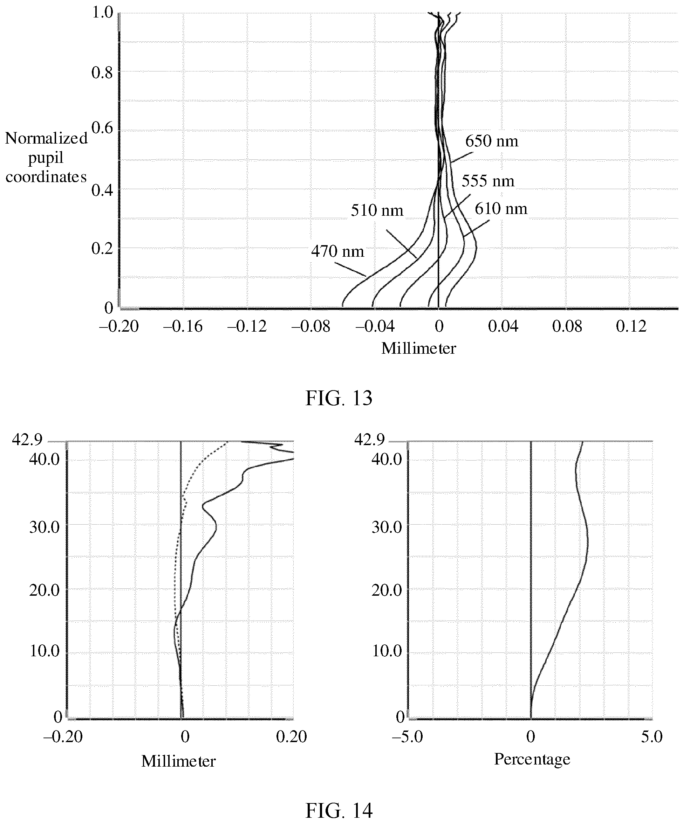

FIG. 13 and FIG. 14 are diagrams for representing optical properties of the optical lens 10 in the third implementation.

Specifically, FIG. 13 shows axial chromatic aberrations of the optical lens 10 obtained after light whose wavelengths are respectively 650 nm, 610 nm, 555 nm, 510 nm, and 470 nm passes through the optical lens 10 in the third implementation. In FIG. 13, a vertical coordinate represents normalized pupil coordinates, and a horizontal coordinate represents an axial chromatic aberration in a unit of millimeter. It can be learned from FIG. 13, in this implementation, axial chromatic aberrations of the optical lens 10 in various states are controlled within a small range.

In FIG. 14, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the third implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 14 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

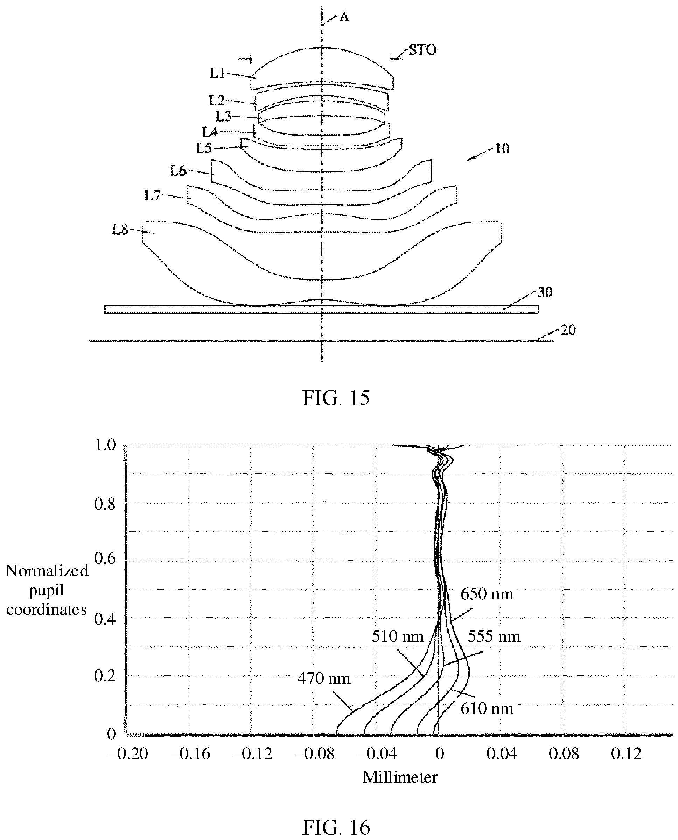

FIG. 15 is a schematic diagram of a structure of the camera module 1 according to a fourth implementation of this application.

In this implementation, the optical lens 10 includes the stop STO and eight lens elements. Specifically, the optical lens 10 includes the stop STO, the first lens element L1, the second lens element L2, the third lens element L3, the fourth lens element L4, the fifth lens element L5, the sixth lens element L6, the seventh lens element L7, and the eighth lens element L8 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has the negative refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has the positive refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and further balance the spherical aberration and the chromatic aberration that are generated by the first lens element L1.

The fourth lens element L4 has the negative refractive power. A part that is of the object-side surface of the fourth lens element L4 and that is near the optical axis A is a convex surface. A part that is of the image-side surface of the fourth lens element L4 and that is near the optical axis A is a concave surface. The fourth lens element L4 helps correct the aberration of the optical lens 10, and balance the spherical aberration and the chromatic aberration that are generated by the first lens element L1.

In this implementation, the first lens element L1 has the positive refractive power, the second lens element L2 has the negative refractive power, the third lens element L3 has the positive refractive power, and the fourth lens element L4 has the negative refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The fifth lens element L5 has positive refractive power. A part that is of the object-side surface of the fifth lens element L5 and that is near the optical axis A is a concave surface. Apart that is of the image-side surface of the fifth lens element L5 and that is near the optical axis A is a convex surface. The fifth lens element L5 can facilitate light convergence of the optical lens 10, and effectively shorten a back focal length and the total track length.

The sixth lens element L6 has negative refractive power. A part that is of the object-side surface of the sixth lens element L6 and that is near the optical axis A is a convex surface. A part that is of the image-side surface of the sixth lens element L6 and that is near the optical axis Ais a concave surface. The sixth lens element L6 helps balance a distribution of negative refractive power of the optical lens 10, reduce sensitivity of the optical lens, and reduce a spherical aberration.

The seventh lens element L7 has positive refractive power. A part that is of the object-side surface of the seventh lens element L7 and that is near the optical axis A is a convex surface. A part that is of the image-side surface of the seventh lens element L7 and that is near the optical axis A is a convex surface. In addition, an off-axis part includes at least one concave surface. The seventh lens element L7 facilitates light convergence of the optical lens 10, and can effectively shorten the back focal length and the total track length.

The eighth lens element L8 has negative refractive power. A part that is of an object-side surface of the eighth lens element L8 and that is near the optical axis A is a concave surface. A part that is of an image-side surface S16 of the eighth lens element L8 and that is near the optical axis A is a concave surface. An off-axis part of the object-side surface S15 of the eighth lens element L8 includes at least one concave surface. An off-axis part of the image-side surface S16 of the eighth lens element L8 includes at least one convex surface. The eighth lens element L8 helps move a principal point of the optical lens 10 to a photographed object end, to effectively shorten the back focal length and the total track length, and help correct an aberration in an off-axis field of view.

The object-side surface and the image-side surface of the eighth lens element L8 each include at least one inflection point, to correct the aberration in the off-axis field of view. The inflection point is a conversion point at which a center of curvature of a curve from a part that is of the lens element and that is near the optical axis A to a surface of the lens element at an off-axis part is moved from the object side to the image side (or moved from the image side to the object side). The image-side surface of the eighth lens element L8 includes at least two critical points, to correct an off-axis aberration. The critical point is defined as a tangent point that is on the surface of the lens element and that is tangent to a tangent plane perpendicular to an optical axis other than an intersection point with the optical axis.

In this implementation, the sixth lens element L6 has the negative refractive power, and the part that is of the image-side surface of the sixth lens element L6 and that is near the optical axis is the concave surface. The seventh lens element L7 has the positive refractive power, and the part that is of the object-side surface of the seventh lens element L7 and that is near the optical axis is the convex surface. The eighth lens element L8 has the negative refractive power, and the part that is of the image-side surface of the eighth lens element L8 and that is near the optical axis is the concave surface. The sixth lens element L6, the seventh lens element L7, and the eighth lens element L8 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, the seventh lens element L7, and the eighth lens element L8 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.67, and a refractive index (Nmin) of a lens element with the smallest refractive index in all the lens elements is 1.54. The foregoing limit values ensure that all materials that can be used for the lens elements are the resin material. The resin material has high formability and strong manufacturability compared with the glass materials, and can effectively reduce production costs. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, N7, and N8) of the third lens element L3, the fifth lens element L5, the seventh lens element L7, and the eighth lens element L8 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, the seventh lens element L7, and the eighth lens element L8 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 56, and a dispersion coefficient (Vmin) of a lens element with the smallest dispersion coefficient in all the lens elements is 19.5. The foregoing limit values ensure the chromatic aberration elimination capability of the optical lens 10, and improve the imaging quality of the optical lens 10.

In some implementations, the dispersion coefficient (V1) of the first lens element L1 is greater than or equal to 30 and less than or equal to 90. The dispersion coefficients (V3, V5, V7, and V8) of the third lens element L3, the fifth lens element L5, the seventh lens element L7, and the eighth lens element L8 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, the seventh lens element L7, and the eighth lens element L8 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.117. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is 0.328. The foregoing limit value helps correct the aberration of the optical lens 10, balance the spherical aberration and the chromatic aberration that are generated by the first lens element L1, and improve the imaging effect of the optical lens 10.

The ratio (|EFL/fi|) of the focal length of the optical lens 10 to the focal length of each lens element is 1.4. The ratio (|f1/fi|) of the focal length of the first lens element L1 to the focal length of each of the other lens elements is 1.7. The ratio (|f4/fi|) of the focal length of the fourth lens element L4 to the focal length of each of the other lens elements is 2.0. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. A radius of curvature of the object-side surface of the eighth lens element L8 is R15. A radius of curvature of the image-side surface of the eighth lens element L8 is R16. |R1/R2|=0.41, |R3/R4|=1.35, |R5/R6|=0.49, |R7/R8|=3.68, |R9/R10|=1.19, IR11/R121=2.34, |R13/R14|=0.06, and |R15/R16|=4.46. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

A ratio (CTmax/CTmin) of a largest value of a thickness for all of the first lens element L1 to the eighth lens element L8 on the optical axis A to a smallest value of the thickness for all of the first lens element L1 to the eighth lens element L8 on the optical axis A is 3.32. A ratio (Tmin/Tmax) of a largest value of a distance between any two adjacent lens elements in the first lens element L1 to the eighth lens element L8 to a smallest value of the distance between the any two adjacent lens elements in the first lens element L1 to the eighth lens element L8 is 0.067. The ratio (Dr5r10/TTL) of the distance between the object-side surface of the third lens element L3 and the image-side surface of the fifth lens element L5 on the optical axis A to the total track length is 0.24. A ratio (Dmax/Dmin) of a largest value of a light transmission hole on an object-side surface or an image-side surface for all of the lens elements to a smallest value of the light transmission hole on the object-side surface or the image-side surface for all of the lens elements is 2.98. A ratio (Tmax/CTmax) of the largest value of the distance between the any two adjacent lens elements in the first lens element L1 to the eighth lens element L8 to the smallest value of the thickness for all of the first lens element L1 to the eighth lens element L8 on the optical axis A is 1.205. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT1/MaxCT2L) of the thickness of the first lens element L1 on the optical axis A to the largest value of a thickness for all of the second lens element L2 to the eighth lens element L8 on the optical axis A is 1.46. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the seventh lens element L7 and the eighth lens element L8 on the optical axis A is T78. A distance between the image-side surface of the eighth lens element L8 and the image plane on the optical axis A is BL. Tmax is the largest value of the distance between the any two adjacent lens elements in the first lens element L1 to the eighth lens element L8. Tmax/T12=15.0, Tmax/T23=7.3, Tmax/T34=2.5, Tmax/T45=14.0, Tmax/T56=2.4, Tmax/T67=4.5, and Tmax/BL=1.1. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the fourth implementation of this application are shown in Table 13.

**Table 13: Basic parameters of the optical lens 10 in the fourth implementation in an operating state**

| Parameter (mm) | TTL | ImgH | EFL | f1 | f2 | f3 | f4 | f5 | f6 | f7 | f8 |
|---|---|---|---|---|---|---|---|---|---|---|---|
| Numeric value | 8.2 | 6.32 | 6.708 | 8.221 | -22.178 | 22.626 | -243.095 | 118.726 | -29.200 | 6.488 | -4.748 |

Detailed structural data of components of the camera module 1 in the fourth implementation of this application is shown in Table 14.

**Table 14: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.380 | | | |
| S1 | L1 | Aspheric surface | 2.873 | 0.997 | Resin | 1.544 | 56.0 |
| S2 | | Aspheric surface | 7.008 | 0.080 | | | |
| S3 | L2 | Aspheric surface | 4.785 | 0.300 | Resin | 1.670 | 19.5 |
| S4 | | Aspheric surface | 3.536 | 0.165 | | | |
| S5 | L3 | Aspheric surface | 6.446 | 0.415 | Resin | 1.545 | 56.0 |
| S6 | | Aspheric surface | 13.150 | 0.489 | | | |
| S7 | L4 | Aspheric surface | 439.731 | 0.300 | Resin | 1.670 | 19.5 |
| S8 | | Aspheric surface | 119.612 | 0.086 | | | |
| S9 | L5 | Aspheric surface | -13.406 | 0.683 | Resin | 1.544 | 56.0 |
| S10 | | Aspheric surface | -11.309 | 0.491 | | | |
| S11 | L6 | Aspheric surface | 22.292 | 0.466 | Resin | 1.573 | 37.6 |
| S12 | | Aspheric surface | 9.508 | 0.268 | | | |

(continued)

| Surface number | Note | Surface type | Radius of curvature | Thickness | Material | Refractive index | Dispersion coefficient |
|---|---|---|---|---|---|---|---|
| S13 | L7 | Aspheric surface | 3.763 | 0.573 | Resin | 1.546 | 55.8 |
| S14 | | Aspheric surface | -60.203 | 1.201 | | | |
| S15 | L8 | Aspheric surface | -14.354 | 0.550 | Resin | 1.546 | 55.8 |
| S16 | | Aspheric surface | 3.218 | 0.167 | | | |
| S17 | Infrared cut-off filter | Plane | Unlimited | 0.210 | Glass | 1.518 | 64.2 |
| S18 | | Plane | Unlimited | 0.730 | | | |
| S19 | | Plane | Unlimited | 0.030 | | | |

Table 15 shows the clear apertures of the object-side surface and the image-side surface of each lens element of the optical lens 10 in this implementation. Details are shown in Table 15.

**Table 15: Clear apertures of lens elements of the optical lens 10 in the fourth implementation**

| Surface number | S1 | S2 | S3 | S4 | S5 | S6 | S7 | S8 | S9 | S10 | S11 | S12 | S13 | S14 | S15 | S16 |
|---|---|---|---|---|---|---|---|---|---|---|---|---|---|---|---|---|
| Aperture | 4.33 | 4.40 | 4.07 | 3.70 | 3.62 | 3.44 | 3.36 | 3.80 | 4.14 | 4.41 | 5.30 | 5.94 | 6.69 | 7.37 | 9.40 | 10.01 |

Table 16 shows aspheric coefficients of the optical lens 10 in this implementation. The optical lens 10 in this embodiment has 16 aspheric surfaces. Details are shown in Table 16.

**Table 16: Aspheric coefficients of the optical lens 10 in the fourth implementation**

| Surface number | K | A4 | A6 | A8 | A10 |
|---|---|---|---|---|---|
| S1 | 1.42E-01 | -4.92E-03 | 1.06E-02 | -1.50E-02 | 1.27E-02 |
| S2 | -3.74E+00 | -4.85E-02 | 7.08E-02 | -6.90E-02 | 4.67E-02 |
| S3 | -3.19E+00 | -6.70E-02 | 8.96E-02 | -8.42E-02 | 5.61E-02 |
| S4 | -8.24E-01 | -3.94E-02 | 6.01E-02 | -6.41E-02 | 4.82E-02 |
| S5 | 1.08E+00 | -1.03E-02 | 2.45E-02 | -2.79E-02 | 2.04E-02 |
| S6 | 6.57E+00 | -1.35E-03 | 1.41E-03 | -6.35E-03 | 1.29E-02 |
| S7 | 0.00E+00 | 5.28E-04 | -6.72E-02 | 7.46E-02 | -4.94E-02 |
| S8 | 0.00E+00 | 6.39E-02 | -1.56E-01 | 1.57E-01 | -1.04E-01 |
| S9 | 1.07E+01 | 7.84E-02 | -1.29E-01 | 1.04E-01 | -5.24E-02 |
| S10 | -1.11E+01 | 8.27E-03 | -2.81E-02 | 1.95E-02 | -1.07E-02 |
| S11 | 0.00E+00 | 1.33E-03 | -1.05E-02 | 3.82E-03 | -1.27E-03 |
| S12 | -1.69E+01 | -3.57E-02 | 2.89E-03 | 1.87E-03 | -1.52E-03 |
| S13 | -5.85E-02 | -2.30E-02 | -5.33E-03 | 2.69E-03 | -8.96E-04 |
| S14 | 0.00E+00 | 2.15E-02 | -1.25E-02 | 2.84E-03 | -4.08E-04 |
| S15 | -2.39E+00 | -5.85E-02 | 1.46E-02 | -2.60E-03 | 3.48E-04 |
| S16 | -1.19E+01 | -2.78E-02 | 6.23E-03 | -9.63E-04 | 9.96E-05 |
| Surface number | A12 | A14 | A16 | A18 | A20 |
| S1 | -6.77E-03 | 2.28E-03 | -4.70E-04 | 5.48E-05 | -2.76E-06 |
| S2 | -2.14E-02 | 6.41E-03 | -1.20E-03 | 1.25E-04 | -5.54E-06 |
| S3 | -2.58E-02 | 7.95E-03 | -1.56E-03 | 1.72E-04 | -8.14E-06 |
| S4 | -2.49E-02 | 8.40E-03 | -1.69E-03 | 1.73E-04 | -5.86E-06 |
| S5 | -9.53E-03 | 2.71E-03 | -3.72E-04 | 6.88E-06 | 2.33E-06 |
| S6 | -1.38E-02 | 8.63E-03 | -3.09E-03 | 5.90E-04 | -4.63E-05 |
| S7 | 1.64E-02 | -7.18E-04 | -1.33E-03 | 4.14E-04 | -3.99E-05 |
| S8 | 4.57E-02 | -1.30E-02 | 2.24E-03 | -2.00E-04 | 6.31E-06 |
| S9 | 1.71E-02 | -3.32E-03 | 2.70E-04 | 1.48E-05 | -3.02E-06 |
| S10 | 4.67E-03 | -1.45E-03 | 2.86E-04 | -3.25E-05 | 1.62E-06 |
| S11 | 1.93E-04 | 2.82E-05 | -1.49E-05 | 1.97E-06 | -8.84E-08 |
| S12 | 4.74E-04 | -7.55E-05 | 6.49E-06 | -2.85E-07 | 4.92E-09 |
| S13 | 2.03E-04 | -2.92E-05 | 2.55E-06 | -1.21E-07 | 2.37E-09 |
| S14 | 3.59E-05 | -1.58E-06 | 4.51E-09 | 2.18E-09 | -5.62E-11 |
| S15 | -3.16E-05 | 1.85E-06 | -6.68E-08 | 1.36E-09 | -1.19E-11 |
| S16 | -6.94E-06 | 3.21E-07 | -9.52E-09 | 1.66E-10 | -1.29E-12 |

K indicates a conical coefficient in an aspheric curve equation. A4, A6, A8, A10, A12, A14, A16, A19, and A20 indicate 4th-order, 6th-order, 8th-order, 10th-order, 12th-order, 14th-order, 16th-order, 18th-order, and 20th-order aspheric coefficients of each surface. It should be noted that each parameter in the table is indicated through scientific notation.

For example, -1.07E-01 means $-1.07 \times 10^{-1}$, and -4. 11E-02 means $-4.11 \times 10^{-2}$. It should be noted that meanings of symbols such as K, A4, A6, A8, A10, A12, A14, A16, A19, and A20 are the same in this application, unless otherwise specified. When the symbols appear again subsequently, details are not described again.

The foregoing parameters are substituted into the following formula:

$$z = \frac{cr^2}{1 + \sqrt{1 - (1+k)c^2 r^2}} + \sum_{i=1}^{N} \alpha_i \rho^{2i},$$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the $i^{th}$-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

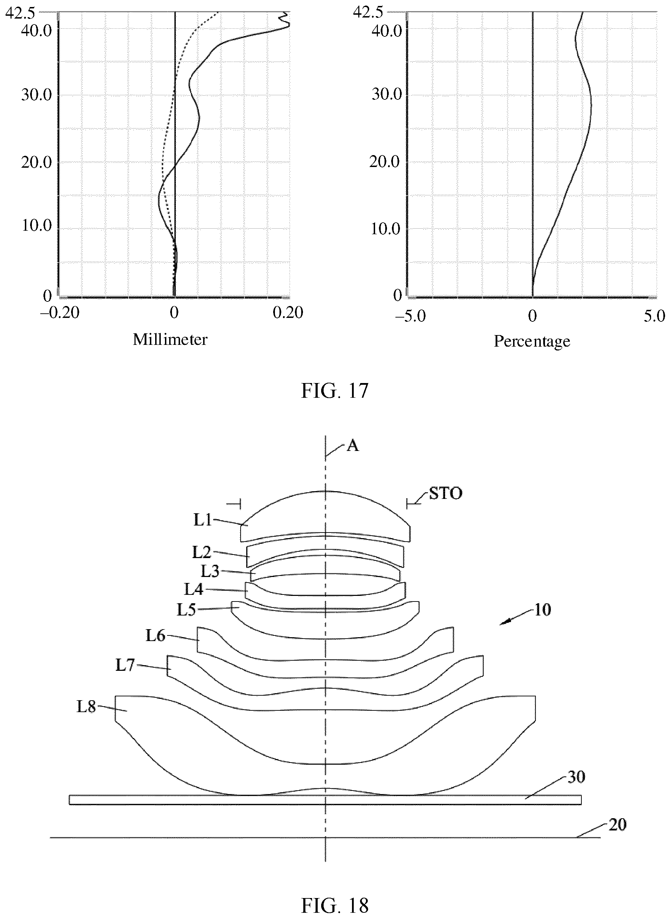

FIG. 16 and FIG. 17 are diagrams for representing optical properties of the optical lens 10 in the fourth implementation.

Specifically, FIG. 16 shows axial chromatic aberrations of the optical lens 10 obtained after light whose wavelengths are respectively 650 nm, 610 nm, 555 nm, 510 nm, and 470 nm passes through the optical lens 10 in the fourth implementation. In FIG. 16, a vertical coordinate represents normalized pupil coordinates, and a horizontal coordinate represents an axial chromatic aberration in a unit of millimeter. It can be learned from FIG. 16, in this implementation, axial chromatic aberrations of the optical lens 10 in various states are controlled within a small range.

In FIG. 17, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the fourth implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 17 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

FIG. 18 is a schematic diagram of a structure of the camera module 1 according to a fifth implementation of this application.

In this implementation, the optical lens 10 includes the stop STO and eight lens elements. Specifically, the optical lens 10 includes the stop STO, the first lens element L1, the second lens element L2, the third lens element L3, the fourth lens element L4, the fifth lens element L5, the sixth lens element L6, the seventh lens element L7, and the eighth lens element L8 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has the negative refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has the positive refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and further balance the spherical aberration and the chromatic aberration that are generated by the first lens element L1.

The fourth lens element L4 has the negative refractive power. A part that is of the object-side surface of the fourth lens element L4 and that is near the optical axis A is a convex surface. A part that is of the image-side surface of the fourth lens element L4 and that is near the optical axis A is a concave surface. The fourth lens element L4 helps correct the aberration of the optical lens 10, and balance the spherical aberration and the chromatic aberration that are generated by the first lens element L1.

In this implementation, the first lens element L1 has the positive refractive power, the second lens element L2 has the negative refractive power, the third lens element L3 has the positive refractive power, and the fourth lens element L4 has the negative refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The fifth lens element L5 has positive refractive power. A part that is of the object-side surface of the fifth lens element L5 and that is near the optical axis A is a concave surface. Apart that is of the image-side surface of the fifth lens element L5 and that is near the optical axis A is a convex surface. The fifth lens element L5 can facilitate light convergence of the optical lens 10, and effectively shorten a back focal length and the total track length.

The sixth lens element L6 has negative refractive power. A part that is of the object-side surface of the sixth lens element L6 and that is near the optical axis A is a convex surface. A part that is of the image-side surface of the sixth lens element L6 and that is near the optical axis Ais a concave surface. The sixth lens element L6 helps balance a distribution of negative refractive power of the optical lens 10, reduce sensitivity of the optical lens, and reduce a spherical aberration.

The seventh lens element L7 has positive refractive power. A part that is of the object-side surface of the seventh lens element L7 and that is near the optical axis A is a convex surface. A part that is of the image-side surface of the seventh lens element L7 and that is near the optical axis A is a convex surface. In addition, an off-axis part includes at least one concave surface. The seventh lens element L7 facilitates light convergence of the optical lens 10, and can effectively shorten the back focal length and the total track length.

The eighth lens element L8 has negative refractive power. A part that is of an object-side surface of the eighth lens element L8 and that is near the optical axis A is a concave surface. A part that is of an image-side surface S16 of the eighth lens element L8 and that is near the optical axis A is a concave surface. An off-axis part of the object-side surface S15 of the eighth lens element L8 includes at least one concave surface. An off-axis part of the image-side surface S16 of the eighth lens element L8 includes at least one convex surface. The eighth lens element L8 helps move a principal point of the optical lens 10 to a photographed object end, to effectively shorten the back focal length and the total track length, and help correct an aberration in an off-axis field of view.

The object-side surface and the image-side surface of the eighth lens element L8 each include at least one inflection point, to correct the aberration in the off-axis field of view. The inflection point is a conversion point at which a center of curvature of a curve from a part that is of the lens element and that is near the optical axis A to a surface of the lens element at an off-axis part is moved from the object side to the image side (or moved from the image side to the object side). The image-side surface of the eighth lens element L8 includes at least two critical points, to correct an off-axis aberration. The critical point is defined as a tangent point that is on the surface of the lens element and that is tangent to a tangent plane perpendicular to an optical axis other than an intersection point with the optical axis.

In this implementation, the sixth lens element L6 has the negative refractive power, and the part that is of the image-side surface of the sixth lens element L6 and that is near the optical axis is the concave surface. The seventh lens element L7 has the positive refractive power, and the part that is of the object-side surface of the seventh lens element L7 and that is near the optical axis is the convex surface. The eighth lens element L8 has the negative refractive power, and the part that is of the image-side surface of the eighth lens element L8 and that is near the optical axis is the concave surface. The sixth lens element L6, the seventh lens element L7, and the eighth lens element L8 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, the seventh lens element L7, and the eighth lens element L8 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.67, and a refractive index (Nmin) of a lens element with the smallest refractive index in all the lens elements is 1.54. The foregoing limit values ensure that all materials that can be used for the lens elements are the resin material. The resin material has high formability and strong manufacturability compared with the glass materials, and can effectively reduce production costs. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, N7, and N8) of the third lens element L3, the fifth lens element L5, the seventh lens element L7, and the eighth lens element L8 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, the seventh lens element L7, and the eighth lens element L8 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 56, and a dispersion coefficient (Vmin) of a lens element with the smallest dispersion coefficient in all the lens elements is 19.5. The foregoing limit values ensure the chromatic aberration elimination capability of the optical lens 10, and improve the imaging quality of the optical lens 10.

In some implementations, the dispersion coefficient (V1) of the first lens element L1 is greater than or equal to 30 and less than or equal to 90. The dispersion coefficients (V3, V5, V7, and V8) of the third lens element L3, the fifth lens element L5, the seventh lens element L7, and the eighth lens element L8 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, the seventh lens element L7, and the eighth lens element L8 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.123. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is 0.321. The foregoing limit value helps correct the aberration of the optical lens 10, balance the spherical aberration and the chromatic aberration that are generated by the first lens element L1, and improve the imaging effect of the optical lens 10.

The ratio ($|EFL/fi|$) of the focal length of the optical lens 10 to the focal length of each lens element is 1.4. The ratio ($|f1/fi|$) of the focal length of the first lens element L1 to the focal length of each of the other lens elements is 1.7. The ratio ($|f4/fi|$) of the focal length of the fourth lens element L4 to the focal length of each of the other lens elements is 5.5. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. A radius of curvature of the object-side surface of the eighth lens element L8 is R15. A radius of curvature of the image-side surface of the eighth lens element L8 is R16. $|R1/R2|=0.44$, $|R3/R4|=1.36$, $|R5/R6|=0.50$, $|R7/R8|=1.24$, $|R9/R10|=1.06$, $IR11/R121=2.16$, $|R13/R14|=0.01$, and $|R15/R16|=7.51$. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

A ratio (CTmax/CTmin) of a largest value of a thickness for all of the first lens element L1 to the eighth lens element L8 on the optical axis A to a smallest value of the thickness for all of the first lens element L1 to the eighth lens element L8 on the optical axis A is 3.16. A ratio (Tmin/Tmax) of a largest value of a distance between any two adjacent lens elements in the first lens element L1 to the eighth lens element L8 to a smallest value of the distance between the any two adjacent lens elements in the first lens element L1 to the eighth lens element L8 is 0.064. The ratio (Dr5r10/TTL) of the distance between the object-side surface of the third lens element L3 and the image-side surface of the fifth lens element L5 on the optical axis A to the total track length is 0.24. A ratio (Dmax/Dmin) of a largest value of a light transmission hole on an object-side surface or an image-side surface for all of the lens elements to a smallest value of the light transmission hole on the object-side surface or the image-side surface for all of the lens elements is 2.93. A ratio (Tmax/CTmax) of the largest value of the distance between the any two adjacent lens elements in the first lens element L1 to the eighth lens element L8 to the smallest value of the thickness for all of the first lens element L1 to the eighth lens element L8 on the optical axis A is 1.319. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT1/MaxCT2L) of the thickness of the first lens element L1 on the optical axis A to the largest value of a thickness for all of the second lens element L2 to the eighth lens element L8 on the optical axis A is 1.55. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the seventh lens element L7 and the eighth lens element L8 on the optical axis A is T78. A distance between the image-side surface of the eighth lens element L8 and the image plane on the optical axis A is BL. Tmax is the largest value of the distance between the any two adjacent lens elements in the first lens element L1 to the eighth lens element L8. Tmax/T12=15.6, Tmax/T23=8.9, Tmax/T34=2.5, Tmax/T45=14.4, Tmax/T56=2.6, Tmax/T67=5.0, and Tmax/BL=1.1. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the fifth implementation of this application are shown in Table 17.

**Table 17: Basic parameters of the optical lens 10 in the fifth implementation in an operating state**

| Parameter (mm) | TTL | ImgH | EFL | f1 | f2 | f3 | f4 | f5 | f6 | f7 | f8 |
|---|---|---|---|---|---|---|---|---|---|---|---|
| Numeric value | 7.95 | 6.253 | 6.65 | 8.310 | -21.650 | 20.286 | -1603.170 | 289.339 | -31.367 | 6.753 | -4.812 |

Detailed structural data of components of the camera module 1 in the fifth implementation of this application is shown in Table 18.

**Table 18: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.380 | | | |
| S1 | L1 | Aspheric surface | 2.772 | 0.948 | Resin | 1.544 | 56.0 |
| S2 | | Aspheric surface | 6.267 | 0.080 | | | |
| S3 | L2 | Aspheric surface | 4.719 | 0.300 | Resin | 1.670 | 19.5 |
| S4 | | Aspheric surface | 3.477 | 0.141 | | | |
| S5 | L3 | Aspheric surface | 5.727 | 0.418 | Resin | 1.545 | 56.0 |
| S6 | | Aspheric surface | 11.533 | 0.505 | | | |
| S7 | L4 | Aspheric surface | 263.897 | 0.300 | Resin | 1.670 | 19.5 |
| S8 | | Aspheric surface | 212.132 | 0.087 | | | |
| S9 | L5 | Aspheric surface | -12.787 | 0.610 | Resin | 1.544 | 56.0 |
| S10 | | Aspheric surface | -12.029 | 0.478 | | | |
| S11 | L6 | Aspheric surface | 20.572 | 0.400 | Resin | 1.573 | 37.6 |
| S12 | | Aspheric surface | 9.546 | 0.250 | | | |

(continued)

| Surface number | Note | Surface type | Radius of curvature | Thickness | Material | Refractive index | Dispersion coefficient |
|---|---|---|---|---|---|---|---|
| S13 | L7 | Aspheric surface | 3.725 | 0.496 | Resin | 1.546 | 55.8 |
| S14 | | Aspheric surface | -477.955 | 1.250 | | | |
| S15 | L8 | Aspheric surface | -22.583 | 0.550 | Resin | 1.546 | 55.8 |
| S16 | | Aspheric surface | 3.008 | 0.166 | | | |
| S17 | Infrared cut-off filter | Plane | Unlimited | 0.210 | Glass | 1.518 | 64.2 |
| S18 | | Plane | Unlimited | 0.749 | | | |
| S19 | | Plane | Unlimited | 0.011 | | | |

Table 19 shows the clear apertures of the object-side surface and the image-side surface of each lens element of the optical lens 10 in this implementation. Details are shown in Table 19.

**Table 19: Clear apertures of lens elements of the optical lens 10 in the fifth implementation**

| Surface number | S1 | S2 | S3 | S4 | S5 | S6 | S7 | S8 | S9 | S10 | S11 | S12 | S13 | S14 | S15 | S16 |
|---|---|---|---|---|---|---|---|---|---|---|---|---|---|---|---|---|
| Aperture | 4.20 | 4.36 | 3.98 | 3.62 | 3.55 | 3.36 | 3.30 | 3.73 | 4.10 | 4.31 | 5.12 | 5.89 | 6.50 | 7.25 | 8.89 | 9.68 |

Table 20 shows aspheric coefficients of the optical lens 10 in this implementation. The optical lens 10 in this embodiment has 16 aspheric surfaces. Details are shown in Table 20.

**Table 20: Aspheric coefficients of the optical lens 10 in the fifth implementation**

| Surface number | K | A4 | A6 | A8 | A10 |
|---|---|---|---|---|---|
| S1 | 1.19E-01 | -4.33E-03 | 9.62E-03 | -1.46E-02 | 1.34E-02 |
| S2 | -4.62E+00 | -5.12E-02 | 8.00E-02 | -8.37E-02 | 6.00E-02 |
| S3 | -3.14E+00 | -7.34E-02 | 1.10E-01 | -1.14E-01 | 8.16E-02 |
| S4 | -5.79E-01 | -4.37E-02 | 7.21E-02 | -7.69E-02 | 5.39E-02 |
| S5 | 1.42E+00 | -1.21E-02 | 2.43E-02 | -1.81E-02 | 1.50E-03 |
| S6 | 1.08E+01 | -1.18E-03 | 1.43E-03 | -6.74E-03 | 1.41E-02 |
| S7 | 0.00E+00 | 4.10E-03 | -7.88E-02 | 9.51E-02 | -7.04E-02 |
| S8 | 0.00E+00 | 7.56E-02 | -1.93E-01 | 2.08E-01 | -1.45E-01 |
| S9 | 1.31E+01 | 9.50E-02 | -1.81E-01 | 1.71E-01 | -1.01E-01 |
| S10 | 1.24E+00 | 1.16E-02 | -3 .47E-02 | 1.96E-02 | -6.27E-03 |
| S11 | 0.00E+00 | 1.30E-02 | -2.53E-02 | 1.27E-02 | -4.93E-03 |
| S12 | -1.38E+01 | -3.00E-02 | -4.96E-03 | 5.79E-03 | -2.94E-03 |
| S13 | -4.18E-02 | -2.50E-02 | -3.62E-03 | 9.37E-04 | -1.94E-04 |
| S14 | 0.00E+00 | 2.16E-02 | -1.09E-02 | 1.73E-03 | -6.83E-05 |
| S15 | 9.90E+00 | -6.90E-02 | 1.97E-02 | -3.87E-03 | 5.29E-04 |
| S16 | -1.16E+01 | -3.20E-02 | 8.04E-03 | -1.40E-03 | 1.64E-04 |
| Surface number | A12 | A14 | A16 | A18 | A20 |
| S1 | -7.76E-03 | 2.83E-03 | -6.29E-04 | 7.86E-05 | -4.23E-06 |
| S2 | -2.89E-02 | 9.10E-03 | -1.78E-03 | 1.94E-04 | -8.94E-06 |
| S3 | -3.94E-02 | 1.26E-02 | -2.51E-03 | 2.81E-04 | -1.33E-05 |
| S4 | -2.42E-02 | 6.49E-03 | -8.14E-04 | -1.20E-05 | 9.54E-06 |
| S5 | 8.23E-03 | -6.74E-03 | 2.56E-03 | -4.93E-04 | 3.84E-05 |
| S6 | -1.54E-02 | 9.82E-03 | -3.58E-03 | 6.99E-04 | -5.59E-05 |
| S7 | 2.81E-02 | -4.19E-03 | -8.96E-04 | 4.24E-04 | -4.54E-05 |
| S8 | 6.65E-02 | -1.95E-02 | 3.48E-03 | -3.34E-04 | 1.27E-05 |
| S9 | 3.91E-02 | -9.69E-03 | 1.41E-03 | -9.91E-05 | 1.86E-06 |
| S10 | 1.28E-03 | -2.01E-04 | 3.04E-05 | -4.58E-06 | 3.79E-07 |
| S11 | 1.28E-03 | -1.86E-04 | 1.02E-05 | 4.31E-07 | -5.11E-08 |
| S12 | 8.87E-04 | -1.55E-04 | 1.54E-05 | -8.19E-07 | 1.80E-08 |
| S13 | 6.05E-05 | -1.33E-05 | 1.56E-06 | -9.07E-08 | 2.05E-09 |
| S14 | -2.10E-05 | 3.99E-06 | -3.13E-07 | 1.19E-08 | -1.79E-10 |
| S15 | -4.78E-05 | 2.76E-06 | -9.85E-08 | 1.98E-09 | -1.72E-11 |
| S16 | -1.31E-05 | 7.00E-07 | -2.41E-08 | 4.81E-10 | -4.24E-12 |

K indicates a conical coefficient in an aspheric curve equation. A4, A6, A8, A10, A12, A14, A16, A19, and A20 indicate 4th-order, 6th-order, 8th-order, 10th-order, 12th-order, 14th-order, 16th-order, 18th-order, and 20th-order aspheric coefficients of each surface. It should be noted that each parameter in the table is indicated through scientific notation.

For example, -1.07E-01 means $-1.07 \times 10^{-1}$, and -4. 11E-02 means $-4.11 \times 10^{-2}$. It should be noted that meanings of symbols such as K, A4, A6, A8, A10, A12, A14, A16, A19, and A20 are the same in this application, unless otherwise specified. When the symbols appear again subsequently, details are not described again.

The foregoing parameters are substituted into the following formula:

$$z = \frac{cr^2}{1 + \sqrt{1 - (1+k)c^2r^2}} + \sum_{i=1}^{N} \alpha_i \rho^{2i},$$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the $i^{th}$-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

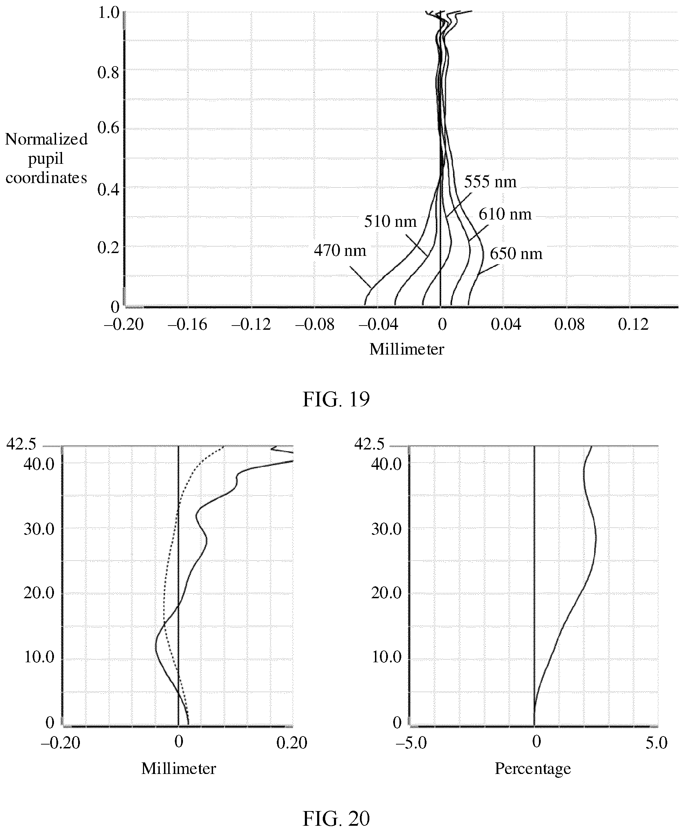

FIG. 19 and FIG. 20 are diagrams for representing optical properties of the optical lens 10 in the fifth implementation.

Specifically, FIG. 19 shows axial chromatic aberrations of the optical lens 10 obtained after light whose wavelengths are respectively 650 nm, 610 nm, 555 nm, 510 nm, and 470 nm passes through the optical lens 10 in the fifth implementation. In FIG. 19, a vertical coordinate represents normalized pupil coordinates, and a horizontal coordinate represents an axial chromatic aberration in a unit of millimeter. It can be learned from FIG. 19, in this implementation, axial chromatic aberrations of the optical lens 10 in various states are controlled within a small range.

In FIG. 20, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the fifth implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 20 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

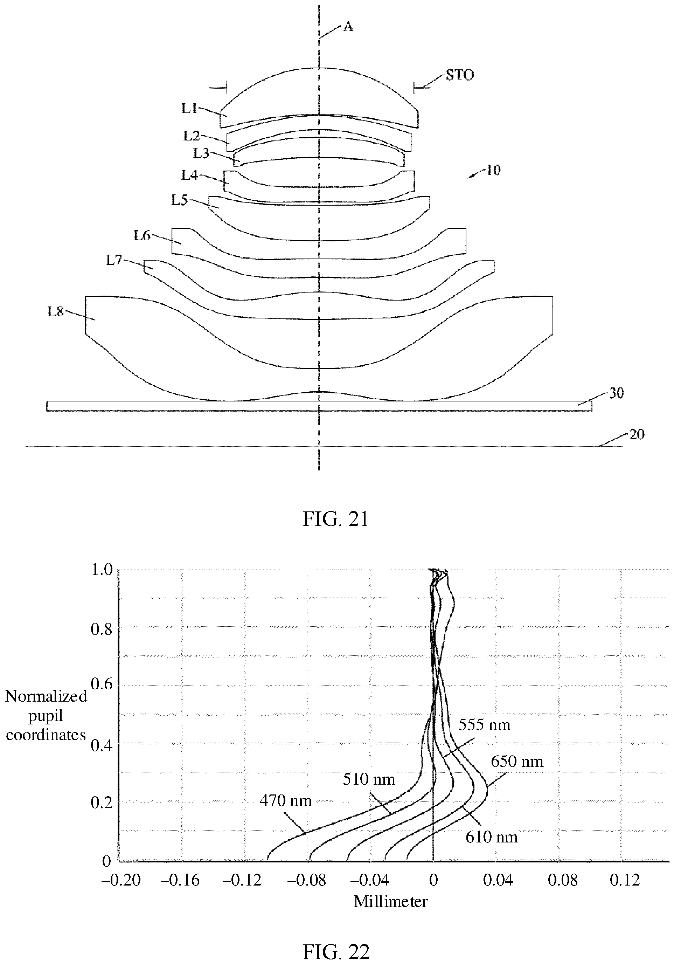

FIG. 21 is a schematic diagram of a structure of the camera module 1 according to a sixth implementation of this application.

In this implementation, the optical lens 10 includes the stop STO and eight lens elements. Specifically, the optical lens 10 includes the stop STO, the first lens element L1, the second lens element L2, the third lens element L3, the fourth lens element L4, the fifth lens element L5, the sixth lens element L6, the seventh lens element L7, and the eighth lens element L8 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has positive refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has the positive refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and further balance the spherical aberration and the chromatic aberration that are generated by the first lens element L1.

The fourth lens element L4 has the negative refractive power. A part that is of the object-side surface of the fourth lens element L4 and that is near the optical axis A is a convex surface. A part that is of the image-side surface of the fourth lens element L4 and that is near the optical axis A is a concave surface. The fourth lens element L4 helps correct the aberration of the optical lens 10, and balance the spherical aberration and the chromatic aberration that are generated by the first lens element L1.

In this implementation, the first lens element L1 has the positive refractive power, the second lens element L2 has the positive refractive power, the third lens element L3 has the positive refractive power, and the fourth lens element L4 has the negative refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The fifth lens element L5 has positive refractive power. A part that is of the object-side surface of the fifth lens element L5 and that is near the optical axis A is a concave surface. Apart that is of the image-side surface of the fifth lens element L5 and that is near the optical axis A is a convex surface. The fifth lens element L5 can facilitate light convergence of the optical lens 10, and effectively shorten a back focal length and the total track length.

The sixth lens element L6 has negative refractive power. A part that is of the object-side surface of the sixth lens element L6 and that is near the optical axis A is a convex surface. A part that is of the image-side surface of the sixth lens element L6 and that is near the optical axis A is a concave surface. The sixth lens element L6 helps balance a distribution of negative refractive power of the optical lens 10, reduce sensitivity of the optical lens, and reduce a spherical aberration.

The seventh lens element L7 has positive refractive power. A part that is of the object-side surface of the seventh lens element L7 and that is near the optical axis A is a convex surface. A part that is of the image-side surface of the seventh lens element L7 and that is near the optical axis A is a convex surface. In addition, an off-axis part includes at least one concave surface. The seventh lens element L7 facilitates light convergence of the optical lens 10, and can effectively shorten the back focal length and the total track length.

The eighth lens element L8 has negative refractive power. A part that is of an object-side surface of the eighth lens element L8 and that is near the optical axis A is a concave surface. A part that is of an image-side surface S16 of the eighth lens element L8 and that is near the optical axis A is a concave surface. An off-axis part of the object-side surface S15 of the eighth lens element L8 includes at least one concave surface. An off-axis part of the image-side surface S16 of the eighth lens element L8 includes at least one convex surface. The eighth lens element L8 helps move a principal point of the optical lens 10 to a photographed object end, to effectively shorten the back focal length and the total track length, and help correct an aberration in an off-axis field of view.

The object-side surface and the image-side surface of the eighth lens element L8 each include at least one inflection point, to correct the aberration in the off-axis field of view. The inflection point is a conversion point at which a center of curvature of a curve from a part that is of the lens element and that is near the optical axis A to a surface of the lens element at an off-axis part is moved from the object side to the image side (or moved from the image side to the object side). The image-side surface of the eighth lens element L8 includes at least two critical points, to correct an off-axis aberration. The critical point is defined as a tangent point that is on the surface of the lens element and that is tangent to a tangent plane perpendicular to an optical axis other than an intersection point with the optical axis.

In this implementation, the sixth lens element L6 has the negative refractive power, and the part that is of the image-side surface of the sixth lens element L6 and that is near the optical axis is the concave surface. The seventh lens element L7 has the positive refractive power, and the part that is of the object-side surface of the seventh lens element L7 and that is near the optical axis is the convex surface. The eighth lens element L8 has the negative refractive power, and the part that is of the image-side surface of the eighth lens element L8 and that is near the optical axis is the concave surface. The sixth lens element L6, the seventh lens element L7, and the eighth lens element L8 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, the seventh lens element L7, and the eighth lens element L8 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.68, and a refractive index (Nmin) of a lens element with the smallest refractive index in all the lens elements is 1.50. The foregoing limit values ensure that a material that may be used for the lens elements is the resin material or the glass material. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, N7, and N8) of the third lens element L3, the fifth lens element L5, the seventh lens element L7, and the eighth lens element L8 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, the seventh lens element L7, and the eighth lens element L8 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 81.00, and a dispersion coefficient (Vmin) of a lens element with the smallest dispersion coefficient in all the lens elements is 19.5. The foregoing limit values ensure the chromatic aberration elimination capability of the optical lens 10, and improve the imaging quality of the optical lens 10.

In some implementations, the dispersion coefficient (V1) of the first lens element L 1 is greater than or equal to 30 and less than or equal to 90. The dispersion coefficients (V3, V5, V7, and V8) of the third lens element L3, the fifth lens element L5, the seventh lens element L7, and the eighth lens element L8 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, the seventh lens element L7, and the eighth lens element L8 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.11. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is 0.32. The foregoing limit value helps correct the aberration of the optical lens 10, balance the spherical aberration and the chromatic aberration that are generated by the first lens element L1, and improve the imaging effect of the optical lens 10.

The ratio (|EFL/fi|) of the focal length of the optical lens 10 to the focal length of each lens element is 1.34. The ratio (|f1/fi|) of the focal length of the first lens element L1 to the focal length of each of the other lens elements is 2.61. The ratio (|f4/fi|) of the focal length of the fourth lens element L4 to the focal length of each of the other lens elements is 0.05. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. A radius of curvature of the object-side surface of the eighth lens element L8 is R15. A radius of curvature of the image-side surface of the eighth lens element L8 is R16. |R1/R2|=0.60, |R3/R4|=1.03, |R5/R6|=0.56, |R7/R8|=11.11, |R9/R10|=1.64, IR11/R121=2.88, |R13/R14|=0.31, and |R15/R16|=7.76. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

A ratio (CTmax/CTmin) of a largest value of a thickness for all of the first lens element L1 to the eighth lens element L8 on the optical axis A to a smallest value of the thickness for all of the first lens element L1 to the eighth lens element L8 on the optical axis A is 3.30. A ratio (Tmin/Tmax) of a largest value of a distance between any two adjacent lens elements in the first lens element L1 to the eighth lens element L8 to a smallest value of the distance between the any two adjacent lens elements in the first lens element L1 to the eighth lens element L8 is 0.080. The ratio (Dr5r10/TTL) of the distance between the object-side surface of the third lens element L3 and the image-side surface of the fifth lens element L5 on the optical axis A to the total track length is 0.27. A ratio (Dmax/Dmin) of a largest value of a light transmission hole on an object-side surface or an image-side surface for all of the lens elements to a smallest value of the light transmission hole on the object-side surface or the image-side surface for all of the lens elements is 2.82. A ratio (Tmax/CTmax) of the largest value of the distance between the any two adjacent lens elements in the first lens element L1 to the eighth lens element L8 to the smallest value of the thickness for all of the first lens element L1 to the eighth lens element L8 on the optical axis A is 1.00. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT1/MaxCT2L) of the thickness of the first lens element L1 on the optical axis A to the largest value of a thickness for all of the second lens element L2 to the eighth lens element L8 on the optical axis A is 1.58. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the seventh lens element L7 and the eighth lens element L8 on the optical axis A is T78. A distance between the image-side surface of the eighth lens element L8 and the image plane on the optical axis A is BL. Tmax is the largest value of the distance between the any two adjacent lens elements in the first lens element L1 to the eighth lens element L8. Tmax/T12=41.63, Tmax/T23=6.24, Tmax/T34=1.64, Tmax/T45=13.92, Tmax/T56=2.74, Tmax/T67=3.37, and Tmax/BL=0.75. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the sixth implementation of this application are shown in Table 21.

**Table 21: Basic parameters of the optical lens 10 in the sixth implementation in an operating state**

| Parameter (mm) | TTL | ImgH | EFL | f1 | f2 | f3 | f4 | f5 | f6 | f7 | f8 |
|---|---|---|---|---|---|---|---|---|---|---|---|
| Numeric value | 8.30 | 6.275 | 6.685 | 12.248 | 1129.386 | 23.244 | -60.443 | 53.936 | -27.472 | 5.587 | -4.599 |

Detailed structural data of components of the camera module 1 in the sixth implementation of this application is shown in Table 22.

**Table 22: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.380 | | | |
| S1 | L1 | Aspheric surface | 2.871 | 0.991 | Glass | 1.4977 | 81 |
| S2 | | Aspheric surface | 4.794 | 0.025 | | | |
| S3 | L2 | Aspheric surface | 3.438 | 0.3 | Resin | 1.675 | 19.5 |
| S4 | | Aspheric surface | 3.332 | 0.167 | | | |
| S5 | L3 | Aspheric surface | 5.837 | 0.435 | Resin | 1.545 | 5.6 |
| S6 | | Aspheric surface | 10.510 | 0.634 | | | |
| S7 | L4 | Aspheric surface | 413.082 | 0.306 | Resin | 1.671 | 2.3 |
| S8 | | Aspheric surface | 37.168 | 0.075 | | | |
| S9 | L5 | Aspheric surface | -19.377 | 0.768 | Resin | 1.544 | 5.6 |
| S10 | | Aspheric surface | -11.851 | 0.380 | | | |
| S11 | L6 | Aspheric surface | 29.553 | 0.4 | Resin | 1.573 | 37.6 |
| S12 | | Aspheric surface | 10.249 | 0.309 | | | |
| S13 | L7 | Aspheric surface | 3.971 | 0.594 | Resin | 1.546 | 55.8 |
| S14 | | Aspheric surface | -12.619 | 1.040 | | | |

(continued)

| Surface number | Note | Surface type | Radius of curvature | Thickness | Material | Refractive index | Dispersion coefficient |
|---|---|---|---|---|---|---|---|
| S15 | L8 | Aspheric surface | -22.218 | 0.5 | Resin | 1.546 | 55.8 |
| S16 | | Aspheric surface | 2.863 | 0.199 | | | |
| S17 | Infrared cut-off filter | Plane | Unlimited | 0.21 | Glass | 1.518 | 64.2 |
| S18 | | Plane | Unlimited | 0.916 | | | |
| S19 | | Plane | Unlimited | 0.054 | | | |

Table 23 shows the clear apertures of the object-side surface and the image-side surface of each lens element of the optical lens 10 in this implementation. Details are shown in Table 23.

**Table 23: Clear apertures of lens elements of the optical lens 10 in the sixth implementation**

| Surface number | S1 | S2 | S3 | S4 | S5 | S6 | S7 | S8 | S9 | S10 | S11 | S12 | S13 | S14 | S15 | S16 |
|---|---|---|---|---|---|---|---|---|---|---|---|---|---|---|---|---|
| Aperture | 4.38 | 4.27 | 4.12 | 3.75 | 3.69 | 3.40 | 3.53 | 4.05 | 4.40 | 4.70 | 5.58 | 6.35 | 6.99 | 7.70 | 8.88 | 9.58 |

Table 24 shows aspheric coefficients of the optical lens 10 in this implementation. The optical lens 10 in this embodiment has 16 aspheric surfaces. Details are shown in Table 24.

**Table 24: Aspheric coefficients of the optical lens 10 in the sixth implementation**

| Surface number | K | A4 | A6 | A8 | A10 |
|---|---|---|---|---|---|
| S1 | 1.26E-01 | -3.65E-03 | 9.78E-03 | -1.41E-02 | 1.21E-02 |
| S2 | -7.97E+00 | -6.34E-02 | 8.86E-02 | -7.44E-02 | 3.99E-02 |
| S3 | -3.63E+00 | -5.81E-02 | 7.55E-02 | -6.41E-02 | 3.48E-02 |
| S4 | -7.65E-01 | -1.07E-02 | 6.72E-04 | 1.28E-02 | -2.22E-02 |
| S5 | -5.94E-01 | -4.74E-04 | -1.59E-03 | 9.72E-03 | -1.65E-02 |
| S6 | 7.40E+00 | -1.26E-03 | 1.03E-03 | -5.19E-03 | 9.88E-03 |
| S7 | 0.00E+00 | -1.05E-02 | -2.89E-02 | 3.04E-02 | -2.34E-02 |
| S8 | 0.00E+00 | 4.08E-02 | -9.55E-02 | 9.17E-02 | -5.93E-02 |
| S9 | -5.73E+01 | 5.72E-02 | -9.34E-02 | 7.84E-02 | -4.28E-02 |
| S10 | 2.58E-01 | 1.34E-02 | -3.00E-02 | 1.88E-02 | -9.14E-03 |
| S11 | 6.07E+01 | 3.13E-03 | -1.07E-02 | 5.27E-03 | -2.35E-03 |
| S12 | -2.51E+00 | -4.48E-02 | 7.84E-03 | 1.09E-03 | -1.57E-03 |
| S13 | 5.92E-03 | -2.15E-02 | -4.09E-03 | 2.45E-03 | -9.35E-04 |
| S14 | 0.00E+00 | 2.77E-02 | -1.20E-02 | 2.47E-03 | -3.29E-04 |
| S15 | 6.19E+00 | -6.32E-02 | 1.64E-02 | -3.42E-03 | 7.30E-04 |
| S16 | -9.16E+00 | -3.27E-02 | 8.41E-03 | -1.53E-03 | 1.87E-04 |
| Surface number | A12 | A14 | A16 | A18 | A20 |
| S1 | -6.51E-03 | 2.21E-03 | -4.65E-04 | 5.50E-05 | -2.82E-06 |
| S2 | -1.32E-02 | 2.46E-03 | -1.76E-04 | -1.22E-05 | 1.98E-06 |
| S3 | -1.16E-02 | 2.09E-03 | -1.14E-04 | -2.07E-05 | 2.65E-06 |
| S4 | 1.91E-02 | -9.59E-03 | 2.86E-03 | -4.70E-04 | 3.28E-05 |
| S5 | 1.47E-02 | -7.58E-03 | 2.31E-03 | -3.86E-04 | 2.70E-05 |
| S6 | -9.96E-03 | 5.85E-03 | -1.97E-03 | 3.55E-04 | -2.62E-05 |
| S7 | 1.09E-02 | -3.06E-03 | 4.66E-04 | -2.79E-05 | -1.57E-07 |
| S8 | 2.56E-02 | -7.23E-03 | 1.27E-03 | -1.25E-04 | 5.21E-06 |
| S9 | 1.57E-02 | -3.85E-03 | 5.96E-04 | -5.22E-05 | 1.96E-06 |
| S10 | 3.39E-03 | -8.69E-04 | 1.41E-04 | -1.33E-05 | 5.59E-07 |
| S11 | 6.65E-04 | -1.03E-04 | 7.51E-06 | -1.26E-07 | -6.88E-09 |
| S12 | 5.44E-04 | -9.45E-05 | 9.05E-06 | -4.57E-07 | 9.56E-09 |
| S13 | 2.37E-04 | -4.00E-05 | 4.40E-06 | -2.97E-07 | 1.11E-08 |
| S14 | 2.35E-05 | -8.06E-08 | -1.12E-07 | 7.07E-09 | -1.41E-10 |
| S15 | -1.49E-04 | 2.48E-05 | -2.98E-06 | 2.51E-07 | -1.45E-08 |
| S16 | -1.28E-05 | -8.85E-08 | 1.26E-07 | -1.47E-08 | 9.51E-10 |
| Surface number | A22 | A24 | A26 | A28 | |
| S1 | 0 | 0 | 0 | 0 | |
| S2 | 0.00E+00 | 0.00E+00 | 0.00E+00 | 0.00E+00 | |

(continued)

| Surface number | A22 | A24 | A26 | A28 | |
|---|---|---|---|---|---|
| S3 | 0.00E+00 | 0.00E+00 | 0.00E+00 | 0.00E+00 | |
| S4 | 0.00E+00 | 0.00E+00 | 0.00E+00 | 0.00E+00 | |
| S5 | 0.00E+00 | 0.00E+00 | 0.00E+00 | 0.00E+00 | |
| S6 | 0.00E+00 | 0.00E+00 | 0.00E+00 | 0.00E+00 | |
| S7 | 0.00E+00 | 0.00E+00 | 0.00E+00 | 0.00E+00 | |
| S8 | 0.00E+00 | 0.00E+00 | 0.00E+00 | 0.00E+00 | |
| S9 | 0.00E+00 | 0.00E+00 | 0.00E+00 | 0.00E+00 | |
| S10 | 0.00E+00 | 0.00E+00 | 0.00E+00 | 0.00E+00 | |
| S11 | 0.00E+00 | 0.00E+00 | 0.00E+00 | 0.00E+00 | |
| S12 | 0.00E+00 | 0.00E+00 | 0.00E+00 | 0.00E+00 | |
| S13 | -1.75E-10 | 0.00E+00 | 0.00E+00 | 0.00E+00 | |
| S14 | 0.00E+00 | 0.00E+00 | 0.00E+00 | 0.00E+00 | |
| S15 | 5.66E-10 | -1.42E-11 | 2.07E-13 | -1.33E-15 | |
| S16 | -3.88E-11 | 9.91E-13 | -1.45E-14 | 9.31E-17 | |

K indicates a conical coefficient in an aspheric curve equation. A4, A6, A8, A10, A12, A14, A16, A19, A20, A22, A24, A26, and A28 indicate 4th-order, 6th-order, 8th-order, 10th-order, 12th-order, 14th-order, 16th-order, 18th-order, and 20th-order, 22nd-order, 24th-order, 26th-order, and 28th-order aspheric coefficients of each surface. It should be noted that each parameter in the table is indicated through scientific notation. For example, -1.07E-01 means $-1.07 \times 10^{-1}$, and -4.11E-02 means $-4.11 \times 10^{-2}$. It should be noted that meanings of symbols such as K, A4, A6, A8, A10, A12, A14, A16, A19, A20, A22, A24, A26, and A28 are the same in this application, unless otherwise specified. When the symbols appear again subsequently, details are not described again.

The foregoing parameters are substituted into the following formula:

$$ z = \frac{cr^2}{1 + \sqrt{1 - (1+k)c^2 r^2}} + \sum_{i=1}^{N} \alpha_i \rho^{2i}, $$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the ith-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

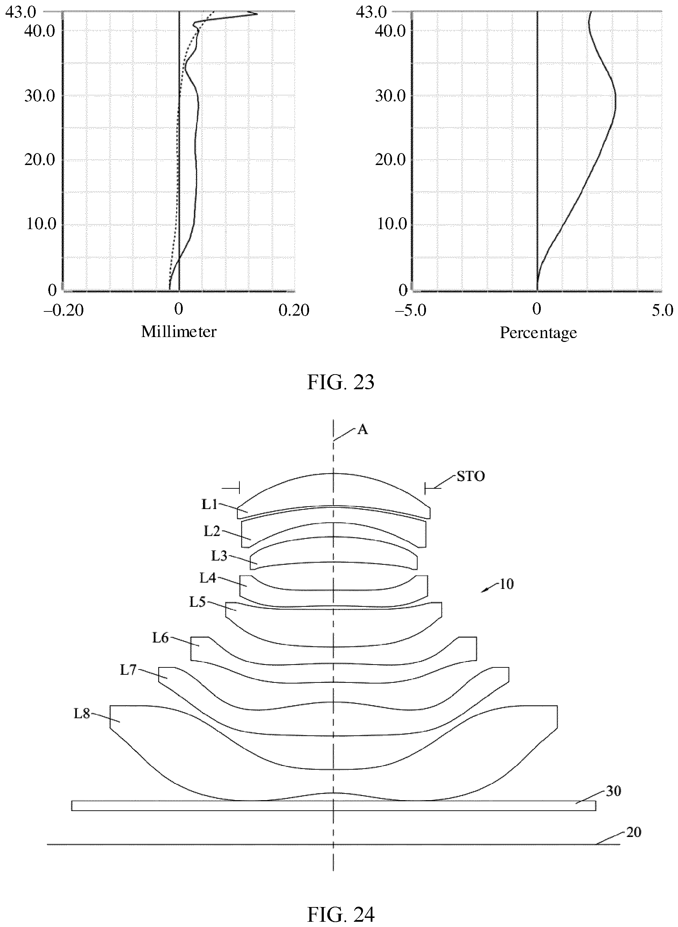

FIG. 22 and FIG. 23 are diagrams for representing optical properties of the optical lens 10 in the sixth implementation.

Specifically, FIG. 22 shows axial chromatic aberrations of the optical lens 10 obtained after light whose wavelengths are respectively 650 nm, 610 nm, 555 nm, 510 nm, and 470 nm passes through the optical lens 10 in the sixth implementation. In FIG. 22, a vertical coordinate represents normalized pupil coordinates, and a horizontal coordinate represents an axial chromatic aberration in a unit of millimeter. It can be learned from FIG. 22, in this implementation, axial chromatic aberrations of the optical lens 10 in various states are controlled within a small range.

In FIG. 23, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the sixth implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 23 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

FIG. 24 is a schematic diagram of a structure of the camera module 1 according to a seventh implementation of this application.

In this implementation, the optical lens 10 includes the stop STO and eight lens elements. Specifically, the optical lens 10 includes the stop STO, the first lens element L1, the second lens element L2, the third lens element L3, the fourth lens element L4, the fifth lens element L5, the sixth lens element L6, the seventh lens element L7, and the eighth lens element L8 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has the negative refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has the positive refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and further balance the spherical aberration and the chromatic aberration that are generated by the first lens element L1.

The fourth lens element L4 has the negative refractive power. A part that is of the object-side surface of the fourth lens element L4 and that is near the optical axis A is a convex surface. A part that is of the image-side surface of the fourth lens element L4 and that is near the optical axis A is a concave surface. The fourth lens element L4 helps correct the aberration of the optical lens 10, and balance the spherical aberration and the chromatic aberration that are generated by the first lens element L1.

In this implementation, the first lens element L1 has the positive refractive power, the second lens element L2 has the negative refractive power, the third lens element L3 has the positive refractive power, and the fourth lens element L4 has the negative refractive power. The refractive power of the first lens element L1 to the fourth lens element L4 is limited. In this way, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The fifth lens element L5 has positive refractive power. A part that is of the obj ect-side surface of the fifth lens element L5 and that is near the optical axis A is a concave surface. Apart that is of the image-side surface of the fifth lens element L5 and that is near the optical axis A is a convex surface. The fifth lens element L5 can facilitate light convergence of the optical lens 10, and effectively shorten a back focal length and the total track length.

The sixth lens element L6 has negative refractive power. A part that is of the object-side surface of the sixth lens element L6 and that is near the optical axis A is a convex surface. A part that is of the image-side surface of the sixth lens element L6 and that is near the optical axis Ais a concave surface. The sixth lens element L6 helps balance a distribution of negative refractive power of the optical lens 10, reduce sensitivity of the optical lens, and reduce a spherical aberration.

The seventh lens element L7 has positive refractive power. A part that is of the object-side surface of the seventh lens element L7 and that is near the optical axis A is a convex surface. A part that is of the image-side surface of the seventh lens element L7 and that is near the optical axis A is a convex surface. In addition, an off-axis part includes at least one concave surface. The seventh lens element L7 facilitates light convergence of the optical lens 10, and can effectively shorten the back focal length and the total track length.

The eighth lens element L8 has negative refractive power. A part that is of an object-side surface of the eighth lens element L8 and that is near the optical axis A is a concave surface. A part that is of an image-side surface S16 of the eighth lens element L8 and that is near the optical axis A is a concave surface. An off-axis part of the object-side surface S15 of the eighth lens element L8 includes at least one concave surface. An off-axis part of the image-side surface S16 of the eighth lens element L8 includes at least one convex surface. The eighth lens element L8 helps move a principal point of the optical lens 10 to a photographed object end, to effectively shorten the back focal length and the total track length, and help correct an aberration in an off-axis field of view.

The object-side surface and the image-side surface of the eighth lens element L8 each include at least one inflection point, to correct the aberration in the off-axis field of view. The inflection point is a conversion point at which a center of curvature of a curve from a part that is of the lens element and that is near the optical axis A to a surface of the lens element at an off-axis part is moved from the object side to the image side (or moved from the image side to the object side). The image-side surface of the eighth lens element L8 includes at least two critical points, to correct an off-axis aberration. The critical point is defined as a tangent point that is on the surface of the lens element and that is tangent to a tangent plane perpendicular to an optical axis other than an intersection point with the optical axis.

In this implementation, the sixth lens element L6 has the negative refractive power, and the part that is of the image-side surface of the sixth lens element L6 and that is near the optical axis is the concave surface. The seventh lens element L7 has the positive refractive power, and the part that is of the object-side surface of the seventh lens element L7 and that is near the optical axis is the convex surface. The eighth lens element L8 has the negative refractive power, and the part that is of the image-side surface of the eighth lens element L8 and that is near the optical axis is the concave surface. The sixth lens element L6, the seventh lens element L7, and the eighth lens element L8 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, the seventh lens element L7, and the eighth lens element L8 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.80, and a refractive index (Nmin) of a lens element with the smallest refractive index in all the lens elements is 1.54. The foregoing limit values ensure that a material that may be used for the lens elements is the resin material or the glass material. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, N7, and N8) of the third lens element L3, the fifth lens element L5, the seventh lens element L7, and the eighth lens element L8 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, the seventh lens element L7, and the eighth lens element L8 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 55.8, and a dispersion coefficient (Vmin) of a lens element with the smallest dispersion coefficient in all the lens elements is 19.5. The foregoing limit values ensure the chromatic aberration elimination capability of the optical lens 10, and improve the imaging quality of the optical lens 10.

In some implementations, the dispersion coefficient (V1) of the first lens element L1 is greater than or equal to 30 and less than or equal to 90. The dispersion coefficients (V3, V5, V7, and V8) of the third lens element L3, the fifth lens element L5, the seventh lens element L7, and the eighth lens element L8 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, the seventh lens element L7, and the eighth lens element L8 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.10. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is 0.37. The foregoing limit value helps correct the aberration of the optical lens 10, balance the spherical aberration and the chromatic aberration that are generated by the first lens element L1, and improve the imaging effect of the optical lens 10.

The ratio (|EFL/fi|) of the focal length of the optical lens 10 to the focal length of each lens element is 1.35. The ratio (|f1/fi|) of the focal length of the first lens element L1 to the focal length of each of the other lens elements is 2.61. The ratio (|f4/fi|) of the focal length of the fourth lens element L4 to the focal length of each of the other lens elements is 0.05. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. A radius of curvature of the object-side surface of the eighth lens element L8 is R15. A radius of curvature of the image-side surface of the eighth lens element L8 is R16. |R1/R2|=0.61, |R3/R4|=1.34, |R5/R6|=0.45, |R7/R8|=2.29, |R9/R10|=2.54, |R11/R12|=1.37, |R13/R14|=0.25, and |R15/R16|=8.70. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. R1, R2, R3, R4, R5, and R6 are limited to being all greater than 0, and at least one of R7 and R8 is limited to being greater than 0, so that the optical lens 10 can obtain the better imaging effect.

A ratio (CTmax/CTmin) of a largest value of a thickness for all of the first lens element L1 to the eighth lens element L8 on the optical axis A to a smallest value of the thickness for all of the first lens element L1 to the eighth lens element L8 on the optical axis A is 2.29. A ratio (Tmin/Tmax) of a largest value of a distance between any two adjacent lens elements in the first lens element L1 to the eighth lens element L8 to a smallest value of the distance between the any two adjacent lens elements in the first lens element L1 to the eighth lens element L8 is 0.08. The ratio (Dr5r10/TTL) of the distance between the object-side surface of the third lens element L3 and the image-side surface of the fifth lens element L5 on the optical axis A to the total track length is 0.29. A ratio (Dmax/Dmin) of a largest value of a light transmission hole on an object-side surface or an image-side surface for all of the lens elements to a smallest value of the light transmission hole on the object-side surface or the image-side surface for all of the lens elements is 2.89. A ratio (Tmax/CTmax) of the largest value of the distance between the any two adjacent lens elements in the first lens element L1 to the eighth lens element L8 to the smallest value of the thickness for all of the first lens element L1 to the eighth lens element L8 on the optical axis A is 1.447. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT1/MaxCT2L) of the thickness of the first lens element L1 on the optical axis A to the largest value of a thickness for all of the second lens element L2 to the eighth lens element L8 on the optical axis A is 1.10. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the seventh lens element L7 and the eighth lens element L8 on the optical axis A is T78. A distance between the image-side surface of the eighth lens element L8 and the image plane on the optical axis A is BL. Tmax is the largest value of the distance between the any two adjacent lens elements in the first lens element L1 to the eighth lens element L8. Tmax/T12=18.04, Tmax/T23=2.37, Tmax/T34=1.2, Tmax/T45=8.91, Tmax/T56=2.05, Tmax/T67=1.72, and Tmax/BL=0.53. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the seventh implementation of this application are shown in Table 25.

**Table 25: Basic parameters of the optical lens 10 in the seventh implementation in an operating state**

| Parameter (mm) | TTL | ImgH | EFL | f1 | f2 | f3 | f4 | f5 | f6 | f7 | f8 |
|---|---|---|---|---|---|---|---|---|---|---|---|
| Numeric value | 8.21 | 6.078 | 6.329 | 8.862 | -20.270 | 16.918 | -49.603 | 33.491 | -65.207 | 6.065 | -4.875 |

Detailed structural data of components of the camera module 1 in the seventh implementation of this application is shown in Table 26.

**Table 26: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.380 | | | |
| S1 | L1 | Aspheric surface | 3.217 | 0.687 | Glass | 1.8 | 41.4 |
| S2 | | Aspheric surface | 5.310 | 0.04 | | | |

(continued)

| Surface number | Note | Surface type | Radius of curvature | Thickness | Material | Refractive index | Dispersion coefficient |
|---|---|---|---|---|---|---|---|
| S3 | L2 | Aspheric surface | 4.117 | 0.326 | Resin | 1.675 | 19.5 |
| S4 | | Aspheric surface | 3.070 | 0.304 | | | |
| S5 | L3 | Aspheric surface | 5.217 | 0.547 | Resin | 1.545 | 5.6 |
| S6 | | Aspheric surface | 11.524 | 0.601 | | | |
| S7 | L4 | Aspheric surface | 42.966 | 0.337 | Resin | 1.671 | 2.3 |
| S8 | | Aspheric surface | 18.773 | 0.081 | | | |
| S9 | L5 | Aspheric surface | -28.545 | 0.811 | Resin | 1.544 | 5.6 |
| S10 | | Aspheric surface | -11.258 | 0.352 | | | |
| S11 | L6 | Aspheric surface | 13.464 | 0.404 | Resin | 1.573 | 37.6 |
| S12 | | Aspheric surface | 9.800 | 0.419 | | | |
| S13 | L7 | Aspheric surface | 4.110 | 0.730 | Resin | 1.546 | 55.8 |
| S14 | | Aspheric surface | -16.215 | 0.722 | | | |
| S15 | L8 | Aspheric surface | -26.060 | 0.502 | Resin | 1.546 | 55.8 |
| S16 | | Aspheric surface | 2.994 | 0.171 | | | |
| S17 | Infrared cut-off filter | Plane | Unlimited | 0.21 | Glass | 1.518 | 64.2 |
| S18 | | Plane | Unlimited | 0.858 | | | |
| S19 | | Plane | Unlimited | 0.112 | | | |

Table 27 shows the clear apertures of the object-side surface and the image-side surface of each lens element of the optical lens 10 in this implementation. Details are shown in Table 27.

**Table 27: Clear apertures of lens elements of the optical lens 10 in the seventh implementation**

| Surface number | S1 | S2 | S3 | S4 | S5 | S6 | S7 | S8 | S9 | S10 | S11 | S12 | S13 | S14 | S15 | S16 |
|---|---|---|---|---|---|---|---|---|---|---|---|---|---|---|---|---|
| Aperture | 4.41 | 4.29 | 4.14 | 3.77 | 3.71 | 3.30 | 3.46 | 3.94 | 4.12 | 4.56 | 5.25 | 6.04 | 6.75 | 7.45 | 8.85 | 9.52 |

Table 28 shows aspheric coefficients of the optical lens 10 in this implementation. The optical lens 10 in this embodiment has 16 aspheric surfaces. Details are shown in Table 28.

**Table 28: Aspheric coefficients of the optical lens 10 in the seventh implementation**

| Surface number | K | A4 | A6 | A8 | A10 |
|---|---|---|---|---|---|
| S1 | 8.95E-02 | -2.48E-03 | 4.71E-03 | -5.34E-03 | 3.89E-03 |
| S2 | -5.15E+00 | -3.68E-02 | 4.19E-02 | -2.39E-02 | 3.87E-03 |
| S3 | -4.80E+00 | -6.62E-02 | 1.08E-01 | -1.83E-01 | 2.96E-01 |
| S4 | -4.20E-01 | -6.94E-03 | -6.84E-02 | 3.24E-01 | -8.15E-01 |
| S5 | 1.69E+00 | -5.69E-03 | 1.52E-02 | -2.21E-02 | 2.16E-02 |
| S6 | 3.24E+00 | -1.48E-03 | 1.11E-03 | -4.98E-03 | 9.45E-03 |
| S7 | 0.00E+00 | -6.81E-03 | -4.24E-02 | 5.46E-02 | -4.86E-02 |
| S8 | 0.00E+00 | 4.35E-02 | -1.08E-01 | 1.10E-01 | -7.42E-02 |
| S9 | -6.60E+01 | 5.50E-02 | -7.24E-02 | 3.07E-03 | 1.06E-01 |
| S10 | -7.07E+00 | 1.73E-02 | -4.85E-02 | 6.50E-02 | -8.72E-02 |
| S11 | -1.52E+01 | 7.76E-04 | 4.11E-03 | -3.82E-02 | 5.66E-02 |
| S12 | -2.01E+00 | -3.35E-02 | 3.36E-03 | -5.45E-03 | 9.30E-03 |
| S13 | 2.57E-02 | -1.94E-02 | 1.99E-05 | -4.84E-03 | 4.66E-03 |
| S14 | 0.00E+00 | 1.85E-02 | -2.11E-03 | -7.71E-03 | 6.18E-03 |
| S15 | -2.41E+01 | -6.08E-02 | 1.61E-02 | -4.83E-03 | 1.94E-03 |
| S16 | -1.23E+01 | -2.47E-02 | 2.20E-03 | 1.17E-03 | -5.92E-04 |
| Surface number | A12 | A14 | A16 | A18 | A20 |
| S1 | -1.90E-03 | 6.10E-04 | -1.26E-04 | 1.51E-05 | -8.09E-07 |
| S2 | 3.37E-03 | -2.37E-03 | 6.68E-04 | -9.18E-05 | 5.01E-06 |
| S3 | -3.76E-01 | 3.46E-01 | -2.30E-01 | 1.10E-01 | -3.83E-02 |
| S4 | 1.34E+00 | -1.53E+00 | 1.25E+00 | -7.33E-01 | 3.12E-01 |
| S5 | -1.34E-02 | 5.33E-03 | -1.31E-03 | 1.79E-04 | -1.05E-05 |
| S6 | -9.43E-03 | 5.48E-03 | -1.83E-03 | 3.26E-04 | -2.39E-05 |
| S7 | 2.76E-02 | -1.01E-02 | 2.26E-03 | -2.83E-04 | 1.50E-05 |
| S8 | 3.24E-02 | -9.08E-03 | 1.56E-03 | -1.49E-04 | 5.86E-06 |
| S9 | -1.68E-01 | 1.50E-01 | -9.05E-02 | 3.92E-02 | -1.23E-02 |
| S10 | 9.28E-02 | -7.18E-02 | 4.00E-02 | -1.61E-02 | 4.71E-03 |
| S11 | -4.82E-02 | 2.71E-02 | -1.06E-02 | 2.96E-03 | -5.89E-04 |
| S12 | -8.01E-03 | 4.24E-03 | -1.50E-03 | 3.68E-04 | -6.39E-05 |
| S13 | -2.51E-03 | 9.14E-04 | -2.35E-04 | 4.35E-05 | -5.80E-06 |
| S14 | -2.70E-03 | 7.90E-04 | -1.65E-04 | 2.49E-05 | -2.74E-06 |
| S15 | -6.20E-04 | 1.33E-04 | -1.93E-05 | 1.93E-06 | -1.36E-07 |
| S16 | 1.47E-04 | -2.45E-05 | 2.95E-06 | -2.60E-07 | 1.69E-08 |
| Surface number | A22 | A24 | A26 | A28 | A30 |
| S1 | 0 | 0 | 0 | 0 | 0 |
| S2 | 0.00E+00 | 0.00E+00 | 0.00E+00 | 0.00E+00 | 0 |

(continued)

| Surface number | A22 | A24 | A26 | A28 | A30 |
|---|---|---|---|---|---|
| S3 | 9.58E-03 | -1.68E-03 | 1.96E-04 | -1.36E-05 | 4.26852E-07 |
| S4 | -9.52E-02 | 2.02E-02 | -2.85E-03 | 2.39E-04 | -9.0133E-06 |
| S5 | 0.00E+00 | 0.00E+00 | 0.00E+00 | 0.00E+00 | 0 |
| S6 | 0.00E+00 | 0.00E+00 | 0.00E+00 | 0.00E+00 | 0 |
| S7 | 0.00E+00 | 0.00E+00 | 0.00E+00 | 0.00E+00 | 0 |
| S8 | 0.00E+00 | 0.00E+00 | 0.00E+00 | 0.00E+00 | 0 |
| S9 | 2.81E-03 | -4.49E-04 | 4.81E-05 | -3.08E-06 | 8.92172E-08 |
| S10 | -9.86E-04 | 1.44E-04 | -1.40E-05 | 8.15E-07 | -2.1381E-08 |
| S11 | 8.30E-05 | -8.08E-06 | 5.13E-07 | -1.91E-08 | 3.12847E-10 |
| S12 | 7.80E-06 | -6.56E-07 | 3.62E-08 | -1.18E-09 | 1.71977E-11 |
| S13 | 5.55E-07 | -3.71E-08 | 1.65E-09 | -4.36E-11 | 5.20882E-13 |
| S14 | 2.17E-07 | -1.20E-08 | 4.44E-10 | -9.79E-12 | 9.75242E-14 |
| S15 | 6.70E-09 | -2.27E-10 | 5.03E-12 | -6.58E-14 | 3.84501E-16 |
| S16 | -7.96E-10 | 2.63E-11 | -5.78E-13 | 7.58E-15 | -4.4756E-17 |

K indicates a conical coefficient in an aspheric curve equation. A4, A6, A8, A10, A12, A14, A16, A19, A20, A22, A24, A26, A28, and A30 indicate 4th-order, 6th-order, 8th-order, 10th-order, 12th-order, 14th-order, 16th-order, 18th-order, and 20th-order, 22nd-order, 24th-order, 26th-order, 28th-order, and 30th-order aspheric coefficients of each surface. It should be noted that each parameter in the table is indicated through scientific notation. For example, -1.07E-01 means - $1.07\times10^{-1}$, and -4. 11E-02 means $-4.11\times10^{-2}$. It should be noted that meanings of symbols such as K, A4, A6, A8, A10, A12, A14, A16, A19, A20, 22, 24, 26, 28, and 30 are the same in this application, unless otherwise specified. When the symbols appear again subsequently, details are not described again.

The foregoing parameters are substituted into the following formula:

$$z = \frac{cr^2}{1 + \sqrt{1 - (1+k)c^2 r^2}} + \sum_{i=1}^{N} \alpha_i \rho^{2i},$$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the ith-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

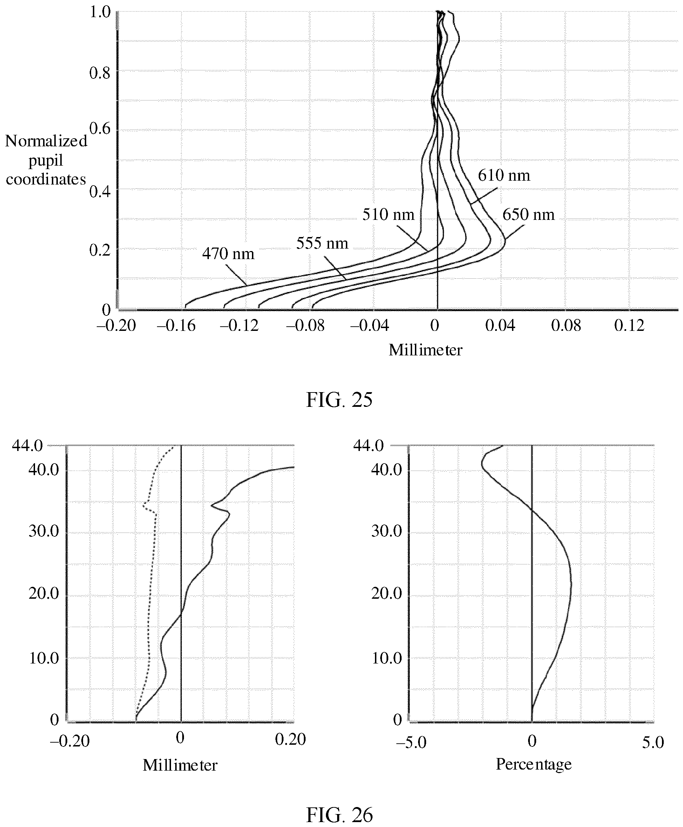

FIG. 25 and FIG. 26 are diagrams for representing optical properties of the optical lens 10 in the seventh implementation.

Specifically, FIG. 25 shows axial chromatic aberrations of the optical lens 10 obtained after light whose wavelengths are respectively 650 nm, 610 nm, 555 nm, 510 nm, and 470 nm passes through the optical lens 10 in the seventh implementation. In FIG. 25, a vertical coordinate represents normalized pupil coordinates, and a horizontal coordinate represents an axial chromatic aberration in a unit of millimeter. It can be learned from FIG. 25, in this implementation, axial chromatic aberrations of the optical lens 10 in various states are controlled within a small range.

In FIG. 26, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the seventh implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 26 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

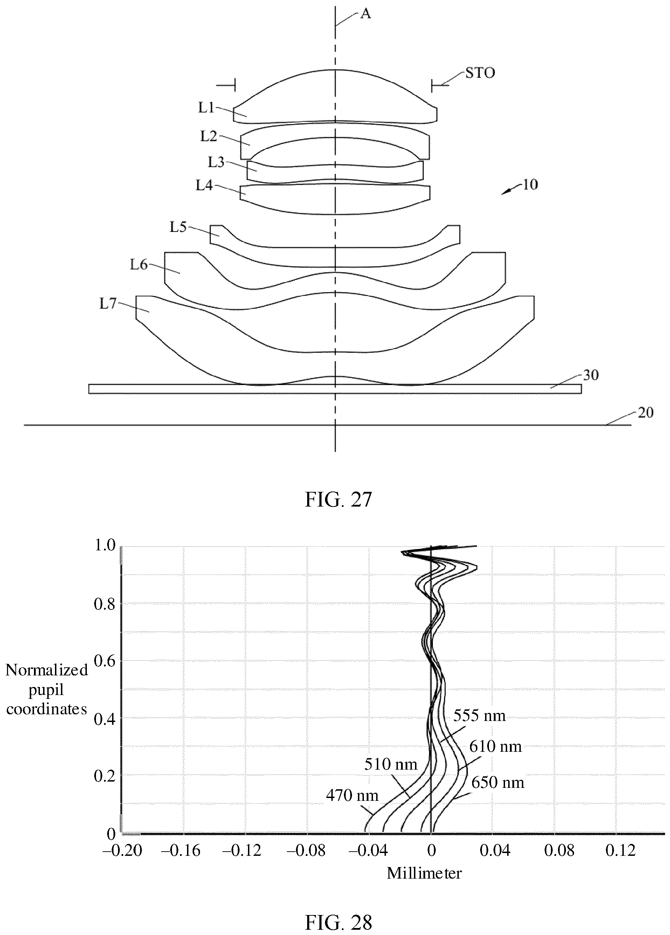

FIG. 27 is a schematic diagram of a structure of the camera module 1 according to an eighth implementation of this application.

In this implementation, the optical lens 10 includes the stop STO and seven lens elements. Specifically, the optical lens 10 includes the stop STO, the first lens element L1, the second lens element L2, the third lens element L3, the fourth lens element L4, the fifth lens element L5, the sixth lens element L6, and the seventh lens element L7 that are sequentially arranged from the object side to the image side.

In this implementation, the stop STO is the variable aperture. The f-number of the stop STO can be adjusted within the range of 1.2 to 5.0 (including 1.2 and 5.0), to implement the plurality of location features such as the large aperture and the small aperture. The luminous flux of the optical lens 10 can be controlled by adjusting the structural size of the variable aperture, to control the depth of field of the camera module 1, and improve the bokeh effect, so as to improve the image quality, and implement photographing in the "portrait mode" and the like.

In some implementations, the ratio (TTL/(ImgH×EPD)) of the total track length of the optical lens 10 to the product of the half diagonal length of the effective photosensitive area of the image plane of the optical lens 10 and the entrance pupil diameter of the optical lens 10 is greater than or equal to 0.10 and less than or equal to 1.10. The foregoing limit values ensure that the optical lens 10 has the total track length that is short enough, the large image plane, and the large change range of the f-number. This facilitates miniaturization of the optical lens 10 and improvement of the imaging quality.

In some implementations, the ratio (STL/TTL) of the distance between the object at infinity of the stop STO and the image plane on the optical axis A to the total track length falls within a range of 0.8 to 1.5 (including 0.8 and 1.5). The foregoing limit values ensure that the stop STO may be disposed on the object side of the first lens element L1, or may be disposed between the any two adjacent lens elements.

In this implementation, the first lens element L1 has the positive refractive power. A part that is of the object-side surface of the first lens element L1 and that is near the optical axis A is a convex surface. This provides a light convergence capability at an object-side end of the optical lens 10, shortens the total length of the optical lens 10, and facilitates miniaturization of the optical lens 10. A part that is of the image-side surface of the first lens element L1 and that is near the optical axis A is a concave surface. This can correct an astigmatism.

The second lens element L2 has the negative refractive power. A part that is of the object-side surface of the second lens element L2 and that is near the optical axis A is a convex surface. A part that is of the image-side surface of the second lens element L2 and that is near the optical axis A is a concave surface. The second lens element L2 helps balance a spherical aberration and a chromatic aberration that are generated by the first lens element L1, to reduce generation of a color cast and more sharpen an image.

The third lens element L3 has negative refractive power. A part that is of the object-side surface of the third lens element L3 and that is near the optical axis A is a convex surface. A part that is of the image-side surface of the third lens element L3 and that is near the optical axis A is a concave surface. The third lens element L3 helps correct an aberration of the optical lens 10, and balance the spherical aberration and the chromatic aberration that are generated by the first lens element L1.

In this implementation, the first lens element L1 has the positive refractive power, the second lens element L2 has the negative refractive power, the third lens element L3 has the negative refractive power. The refractive power of the first lens element L1 to the third lens element L3 is limited. In this way, when the f-number is 1.2, the large amount of light entering the lens elements through the stop STO can be modulated through cooperation between the first lens element L1 to the third lens element L3. This achieves the better light convergence effect, and effectively improves the imaging quality of the optical lens 10.

The fourth lens element L4 has the positive refractive power. A part that is of the object-side surface of the fourth lens element L4 and that is near the optical axis A is a convex surface. A part that is of the image-side surface of the fourth lens element L4 and that is near the optical axis A is a convex surface. The fourth lens element L4 can facilitate light convergence of the optical lens 10, and effectively shorten a back focal length and the total track length.

The fifth lens element L5 has negative refractive power. Apart that is of the object-side surface of the fifth lens element L5 and that is near the optical axis A is a concave surface. Apart that is of the image-side surface of the fifth lens element L5 and that is near the optical axis A is a concave surface. The fifth lens element L5 helps balance a distribution of negative refractive power of the optical lens 10, reduce sensitivity of the optical lens, and reduce a spherical aberration.

The sixth lens element L6 has positive refractive power. Apart that is of the object-side surface of the sixth lens element L6 and that is near the optical axis A is a convex surface. A part that is of the image-side surface of the sixth lens element L6 and that is near the optical axis A is a concave surface. In addition, an off-axis part includes at least one concave surface. The sixth lens element L6 helps adjust a field curvature and balance aberrations at different object distances.

The seventh lens element L7 has negative refractive power. A part that is of the object-side surface of the seventh lens element L7 and that is near the optical axis A is a convex surface. A part that is of the image-side surface of the seventh lens element L7 and that is near the optical axis A is a concave surface. An off-axis part of the object-side surface S13 of the seventh lens element L7 includes at least one concave surface. An off-axis part of the image-side surface S14 of the seventh lens element L7 includes at least one convex surface. The seventh lens element L7 helps move a principal point of the optical lens 10 to a photographed object end, to effectively shorten the back focal length and the total track length, and help correct an aberration in an off-axis field of view. The critical point is defined as a tangent point that is on the surface of the lens element and that is tangent to a tangent plane perpendicular to an optical axis other than an intersection point with the optical axis.

In this implementation, the fifth lens element L5 has the negative refractive power, and the part that is of the image-side surface of the fifth lens element L5 and that is near the optical axis is the concave surface. The sixth lens element L6 has the positive refractive power, and the part that is of the object-side surface of the sixth lens element L6 and that is near the optical axis is the convex surface. The seventh lens element L7 has the negative refractive power, and the part that is of the image-side surface of the seventh lens element L7 and that is near the optical axis is the convex surface. The fifth lens element L5, the sixth lens element L6, and the seventh lens element L7 are configured in appropriate surface shapes, to correct a peripheral aberration of the image, so as to improve the imaging quality, shorten the back focal length, and facilitate miniaturization of the camera module.

In this implementation, through cooperation between the different lens elements, the optical lens 10 with the large change range of the f-number has the good imaging effect, to implement miniaturization of the camera module.

In this implementation, all surfaces of the lens elements of the optical lens 10 are aspheric surfaces, that is, all the image-side surfaces and the object-side surfaces of the first lens element L1, the second lens element L2, the third lens element L3, the fourth lens element L4, the fifth lens element L5, the sixth lens element L6, and the seventh lens element L7 are the aspheric surfaces. The aspheric surface has a higher degree of freedom in configuration and the good aberration elimination effect, to shorten the total length of the optical lens 10, and facilitate miniaturization of the optical lens 10.

In this implementation, a refractive index (Nmax) of a lens element with the largest refractive index in all the lens elements of the optical lens 10 is 1.68, and a refractive index (Nmin) of a lens element with the smallest refractive index in all the lens elements is 1.54. The foregoing limit values ensure that a material that may be used for the lens elements is the resin material or the glass material. The different materials for the lens elements are appropriately configured. This facilitates miniaturization of the optical lens 10 and improvement of the imaging effect of the optical lens 10.

In some implementations, the first lens element L1 (N1) is greater than or equal to 1.40 and less than or equal to 2.0. The refractive indexes (N3, N5, and N7) of the third lens element L3, the fifth lens element L5, and the seventh lens element L7 are greater than or equal to 1.50 and less than or equal to 1.55. The refractive indexes (N2 and N4) of the second lens element L2 and the fourth lens element L4 are greater than or equal to 1.65 and less than or equal to 1.70. The refractive index (N6) of the sixth lens element L6 is greater than or equal to 1.57 and less than or equal to 1.58. In other words, the first lens element L1 is made of the material with the low refractive index, the medium refractive index, the high refractive index, or the ultra-high refractive index, the third lens element L3, the fifth lens element L5, and the seventh lens element L7 are made of the material with the low refractive index, the second lens element L2 and the fourth lens element L4 are made of the material with the high refractive index, and the sixth lens element L6 is made of the material with the medium refractive index. The foregoing limit values can ensure that the optical lens 10 has the good imaging effect on the basis of the large-range f-number of the optical lens 10.

A dispersion coefficient (Vmax) of a lens element with the largest dispersion coefficient in all the lens elements is 56, and a dispersion coefficient (Vmin) of a lens element with the smallest dispersion coefficient in all the lens elements is 20.4. The foregoing limit values ensure the chromatic aberration elimination capability of the optical lens 10, and improve the imaging quality of the optical lens 10.

In some implementations, the dispersion coefficient (V1) of the first lens element L1 is greater than or equal to 30 and less than or equal to 90. The dispersion coefficients (V3, V5, and V7) of the third lens element L3, the fifth lens element L5, and the seventh lens element L7 are greater than or equal to 52 and less than or equal to 60. The dispersion coefficients (V2 and V4) of the second lens element L2 and the fourth lens element L4 are greater than or equal to 15 and less than or equal to 21. The dispersion coefficient (V6) of the sixth lens element L6 is greater than or equal to 35 and less than or equal to 40. In other words, the first lens element L1 is made of the material with the low dispersion coefficient, the medium dispersion coefficient, the high dispersion coefficient, or the ultra-high dispersion coefficient, the third lens element L3, the fifth lens element L5, and the seventh lens element L7 are made of the material with the high dispersion coefficient, the second lens element L2 and the fourth lens element L4 are made of the material with the low dispersion coefficient, and the sixth lens element L6 is made of the material with the medium dispersion coefficient. The foregoing limit values can ensure that the optical lens 10 has the good imaging effect on the basis of the large-range f-number of the optical lens 10.

The sum (1/f1+1/f2+1/f3+1/f4) of the reciprocals of the focal lengths of the first lens element L1 to the fourth lens element L4 is 0.12. The foregoing limit value ensures that, when the f-number is 1.2, the large amount of light entering the lens elements through the stop STO can be modulated through cooperation between the first lens element L1 to the fourth lens element L4. This achieves the better light convergence effect, and effectively improves the imaging quality of the optical lens 10.

The sum (1/f1+1/f3+1/f5+1/f7) of the reciprocals of the focal lengths of the first lens element L1, the third lens element L3, the fifth lens element L5, and the seventh lens element L7 is -0.09. The foregoing limit value helps correct the aberration of the optical lens 10, balance the spherical aberration and the chromatic aberration that are generated by the first lens element L1, and improve the imaging effect of the optical lens 10.

The ratio (|EFL/fi|) of the focal length of the optical lens 10 to the focal length of each lens element is 1.40. The ratio (|f1/fi|) of the focal length of the first lens element L1 to the focal length of each of the other lens elements is 1.18. The ratio (|f4/fi|) of the focal length of the fourth lens element L4 to the focal length of each of the other lens elements is 0.43. The foregoing limit values ensure that the optical lens 10 has the good imaging quality in the scenario with the large aperture.

The radius of curvature of the object-side surface of the first lens element L1 is R1. The radius of curvature of the image-side surface of the first lens element L1 is R2. The radius of curvature of the object-side surface of the second lens element L2 is R3. The radius of curvature of the image-side surface of the second lens element L2 is R4. The radius of curvature of the object-side surface of the third lens element L3 is R5. The radius of curvature of the image-side surface of the third lens element L3 is R6. The radius of curvature of the object-side surface of the fourth lens element L4 is R7. The radius of curvature of the image-side surface of the fourth lens element L4 is R8. The radius of curvature of the object-side surface of the fifth lens element L5 is R9. The radius of curvature of the image-side surface of the fifth lens element L5 is R10. The radius of curvature of the object-side surface of the sixth lens element L6 is R11. The radius of curvature of the image-side surface of the sixth lens element L6 is R12. The radius of curvature of the object-side surface of the seventh lens element L7 is R13. The radius of curvature of the image-side surface of the seventh lens element L7 is R14. |R1/R2|=0.33, |R3/R4|=1.65, |R5/R6|=1.34, |R7/R8|=-1.05, |R9/R10|=-3.25, |R11/R12|=0.58, and |R13/R14|=3.38. The foregoing limit values ensure that the optical lens 10 can obtain the better imaging effect.

The optical lens 10 satisfies that R1, R2, R3, R4, R5, and R6 are all greater than 0 and at least one of R7 and R8 is greater than 0. With the foregoing limitations, the optical lens 10 can obtain the better imaging effect.

A ratio (CTmax/CTmin) of a largest value of a thickness for all of the first lens element L1 to the seventh lens element L7 on the optical axis A to a smallest value of the thickness for all of the first lens element L1 to the seventh lens element L7 on the optical axis A is 3.5. A ratio (Tmin/Tmax) of a largest value of a distance between any two adjacent lens elements in the first lens element L1 to the seventh lens element L7 to a smallest value of the distance between the any two adjacent lens elements in the first lens element L1 to the seventh lens element L7 is 0.04. The ratio (Dr5r10/TTL) of the distance between the object-side surface of the third lens element L3 and the image-side surface of the fifth lens element L5 on the optical axis A to the total track length is 0.28. A ratio (Dmax/Dmin) of a largest value of a light transmission hole on an object-side surface or an image-side surface for all of the lens elements to a smallest value of the light transmission hole on the object-side surface or the image-side surface for all of the lens elements is 2.36. A ratio (Tmax/CTmax) of the largest value of the distance between the any two adjacent lens elements in the first lens element L1 to the seventh lens element L7 to the smallest value of the thickness for all of the first lens element L1 to the seventh lens element L7 on the optical axis A is 1.176. The foregoing limit values ensure miniaturization of the optical lens 10.

A ratio (EPD/Dmax) of the entrance pupil diameter to the largest value of the light transmission hole on the object-side surface or the image-side surface for all of the lens elements falls within in a range of 0.25 to 1.35 (including 0.25 and 1.35). The ratio (EPD/Dr5r10) of the entrance pupil diameter to the distance between the object-side surface of the third lens element L3 and the image-side surface of the fifth lens element L5 on the optical axis A falls within a range of 0.55 to 3.15 (including 0.55 and 3.15). The foregoing limit values ensure miniaturization of the optical lens 10, and the change range of the f-number of the variable aperture is large.

A ratio (MaxCT1/MaxCT2L) of the thickness of the first lens element L1 on the optical axis A to the largest value of a thickness for all of the second lens element L2 to the seventh lens element L7 on the optical axis A is 1.10. The foregoing limit value ensures that the optical lens 10 can be appropriately configured with the lens elements made of different materials. This facilitates miniaturization and manufacturability of the optical lens 10.

The distance between the first lens element L1 and the second lens element L2 on the optical axis A is T12. The distance between the second lens element L2 and the third lens element L3 on the optical axis A is T23. The distance between the third lens element L3 and the fourth lens element L4 on the optical axis A is T34. The distance between the fourth lens element L4 and the fifth lens element L5 on the optical axis A is T45. The distance between the fifth lens element L5 and the sixth lens element L6 on the optical axis A is T56. The distance between the sixth lens element L6 and the seventh lens element L7 on the optical axis A is T67. A distance between the image-side surface of the seventh lens element L7 and the image plane on the optical axis A is BL. Tmax is the largest value of the distance between the any two adjacent lens elements in the first lens element L1 to the seventh lens element L7. Tmax/T12=25.44, Tmax/T23=2.19, Tmax/T34=13.59, Tmax/T45=1.80, Tmax/T56=10.76, Tmax/T67=1.00, and Tmax/BL=1.29. The foregoing limit values ensure miniaturization of the optical lens 10.

In this implementation, the optical lens 10 has the good imaging effect on the basis of the large-range f-number through cooperation between the different lens elements, and thinning of the electronic device 100 is implemented.

It may be understood that the foregoing different limitations on the different parameters of the optical lens may exist independently of each other, or may be combined with each other. When all of the foregoing limit values are combined with each other, the optical lens is thinner or can obtain the better imaging quality.

According to the foregoing relational expressions, basic parameters of the camera module 1 in the eighth implementation of this application are shown in Table 29.

**Table 29: Basic parameters of the optical lens 10 in the eighth implementation in an operating state**

| Parameter (mm) | TTL | ImgH | EFL | f1 | f2 | f3 | f4 | f5 | f6 | f7 |
|---|---|---|---|---|---|---|---|---|---|---|
| Numeric value | 8.389 | 6.148 | 6.943 | 7.864 | -22.804 | -32.845 | 13.975 | -29.270 | 9.140 | -6.661 |

Detailed structural data of components of the camera module 1 in the eighth implementation of this application is shown in Table 30.

**Table 30: Detailed structural data of the components of the camera module 1**

| Surface number | Note | Surface type | Radius of curvature | Thickness | Material | Refractive index | Dispersion coefficient |
|---|---|---|---|---|---|---|---|
| OBJ | Photographed object | Plane | Unlimited | Unlimited | | | |
| STO | Stop | Aspheric surface | Unlimited | -0.606 | | | |
| S1 | L1 | Aspheric surface | 3.091 | 1.179 | Resin | 1.548 | 55.66 |
| S2 | | Aspheric surface | 9.373 | 0.055 | | | |
| S3 | L2 | Aspheric surface | 9.814 | 0.337 | Resin | 1.68 | 20.4 |
| S4 | | Aspheric surface | 5.946 | 0.633 | | | |
| S5 | L3 | Aspheric surface | 6.861 | 0.337 | Resin | 1.67 | 20.4 |
| S6 | | Aspheric surface | 5.137 | 0.102 | | | |
| S7 | L4 | Aspheric surface | 15.487 | 0.717 | Resin | 1.544 | 55.66 |

(continued)

| Surface number | Note | Surface type | Radius of curvature | Thickness | Material | Refractive index | Dispersion coefficient |
|---|---|---|---|---|---|---|---|
| S8 | | Aspheric surface | -14.799 | 0.770 | | | |
| S9 | L5 | Aspheric surface | -71.070 | 0.449 | Resin | 1.568 | 38 |
| S10 | | Aspheric surface | 21.888 | 0.129 | | | |
| S11 | L6 | Aspheric surface | 2.279 | 0.461 | Resin | 1.544 | 55.66 |
| S12 | | Aspheric surface | 3.896 | 1.387 | | | |
| S13 | L7 | Aspheric surface | 8.370 | 0.569 | Resin | 1.544 | 56 |
| S14 | | Aspheric surface | 2.474 | 0.185 | | | |
| S17 | Infrared cut-off filter | Plane | Unlimited | 0.21 | Glass | 1.518 | 64.2 |
| S18 | | Plane | Unlimited | 0.851 | | | |
| S19 | | Plane | Unlimited | 0.019 | | | |

Table 31 shows the clear apertures of the object-side surface and the image-side surface of each lens element of the optical lens 10 in this implementation. Details are shown in Table 31.

**Table 31: Clear apertures of lens elements of the optical lens 10 in the eighth implementation**

| Surface number | S1 | S2 | S3 | S4 | S5 | S6 | S7 | S8 | S9 | S10 | S11 | S12 | S13 | S14 |
|---|---|---|---|---|---|---|---|---|---|---|---|---|---|---|
| Aperture | 4.71 | 4.65 | 4.37 | 3.90 | 3.90 | 4.07 | 4.12 | 4.38 | 5.22 | 5.78 | 6.63 | 7.88 | 8.52 | 9.21 |

Table 32 shows aspheric coefficients of the optical lens 10 in this implementation. The optical lens 10 in this embodiment has 16 aspheric surfaces. Details are shown in Table 32.

**Table 32: Aspheric coefficients of the optical lens 10 in the eighth implementation**

| Surface number | K | A4 | A6 | A8 | A10 |
|---|---|---|---|---|---|
| S1 | -0.296030029 | -3.05E-03 | 6.06E-03 | -5.55E-03 | 3.06E-03 |
| S2 | 0 | -3.76E-02 | 3.58E-02 | -2.86E-02 | 1.62E-02 |
| S3 | 17.46249936 | -4.17E-02 | 4.91E-02 | -4.23E-02 | 2.55E-02 |
| S4 | 5.841708742 | -1.07E-02 | 1.80E-02 | -1.66E-02 | 1.16E-02 |
| S5 | 1.9828811 | -2.10E-02 | -1.18E-02 | 1.76E-02 | -1.46E-02 |
| S6 | -27.23475027 | 6.32E-03 | -3.43E-02 | 3.79E-02 | -2.74E-02 |
| S7 | -53.96608992 | 3.65E-03 | -3.27E-02 | 4.02E-02 | -2.93E-02 |
| S8 | -4.256953413 | -1.19E-02 | 5.46E-03 | -9.98E-03 | 8.41E-03 |
| S9 | 0 | 1.21E-02 | -6.02E-03 | 7.06E-05 | 9.75E-04 |
| S10 | 0 | -4.65E-02 | 2.36E-02 | -9.76E-03 | 2.96E-03 |
| S11 | -5.217872775 | 1.65E-03 | -3.81E-03 | -3.12E-04 | 1.91E-04 |
| S12 | -11.02988152 | 4.14E-02 | -2.27E-02 | 5.93E-03 | -1.07E-03 |

(continued)

| Surface number | K | A4 | A6 | A8 | A10 |
|---|---|---|---|---|---|
| S13 | -0.098630828 | -8.33E-02 | 2.33E-02 | -5.76E-03 | 1.06E-03 |
| S14 | -8.774833232 | -3.21E-02 | 6.71E-03 | -1.11E-03 | 1.22E-04 |
| Surface number | A12 | A14 | A16 | A18 | A20 |
| S1 | -1.08E-03 | 2.41E-04 | -3.38E-05 | 2.71E-06 | -9.66E-08 |
| S2 | -6.14E-03 | 1.51E-03 | -2.28E-04 | 1.93E-05 | -6.90E-07 |
| S3 | -1.02E-02 | 2.66E-03 | -4.28E-04 | 3.87E-05 | -1.51E-06 |
| S4 | -5.88E-03 | 2.10E-03 | -4.92E-04 | 6.78E-05 | -4.09E-06 |
| S5 | 6.95E-03 | -2.02E-03 | 3.44E-04 | -2.92E-05 | 7.81E-07 |
| S6 | 1.24E-02 | -3.51E-03 | 5.94E-04 | -5.35E-05 | 1.86E-06 |
| S7 | 1.36E-02 | -3.96E-03 | 6.97E-04 | -6.75E-05 | 2.75E-06 |
| S8 | -4.14E-03 | 1.28E-03 | -2.41E-04 | 2.48E-05 | -1.05E-06 |
| S9 | -5.48E-04 | 1.40E-04 | -1.83E-05 | 1.13E-06 | -2.26E-08 |
| S10 | -6.64E-04 | 9.88E-05 | -8.55E-06 | 3.67E-07 | -5.39E-09 |
| S11 | -1.65E-05 | -4.61E-06 | 1.18E-06 | -9.79E-08 | 2.81E-09 |
| S12 | 1.36E-04 | -1.15E-05 | 6.08E-07 | -1.82E-08 | 2.33E-10 |
| S13 | -1.24E-04 | 8.95E-06 | -3.90E-07 | 9.39E-09 | -9.63E-11 |
| S14 | -8.24E-06 | 3.09E-07 | -4.43E-09 | -5.97E-11 | 1.95E-12 |

K indicates a conical coefficient in an aspheric curve equation. A4, A6, A8, A10, A12, A14, A16, A19, and A20 indicate 4th-order, 6th-order, 8th-order, 10th-order, 12th-order, 14th-order, 16th-order, 18th-order, and 20th-order aspheric coefficients of each surface. It should be noted that each parameter in the table is indicated through scientific notation. For example, -1.07E-01 means $-1.07 \times 10^{-1}$, and -4.11E-02 means $-4.11 \times 10^{-2}$. It should be noted that meanings of symbols such as K, A4, A6, A8, A10, A12, A14, A16, A19, and A20 are the same in this application, unless otherwise specified. When the symbols appear again subsequently, details are not described again.

The foregoing parameters are substituted into the following formula:

$$z = \frac{cr^2}{1 + \sqrt{1 - (1+k)c^2 r^2}} + \sum_{i=1}^{N} \alpha_i \rho^{2i},$$

In this way, each lens element of the optical lens 10 in this implementation can be designed and obtained, where z is the distance that is of the point whose distance from the optical axis A is r on an aspheric surface and that is relative to a tangent plane tangent to an intersection point between the aspheric surface and the optical axis A, r is the vertical distance between the point on an aspheric curve and the optical axis A, c is the curvature, k is the conical coefficient, and $a_i$ is the ith-order aspheric coefficient.

In this implementation, the lens elements of the optical lens 10 that are designed and obtained based on the foregoing parameters and that are different from each other can respectively have different functions. Consequently, the thin optical lens 10 having good bokeh effect and imaging quality is obtained through cooperation between all the lens elements on the basis of the large range of the f-number.

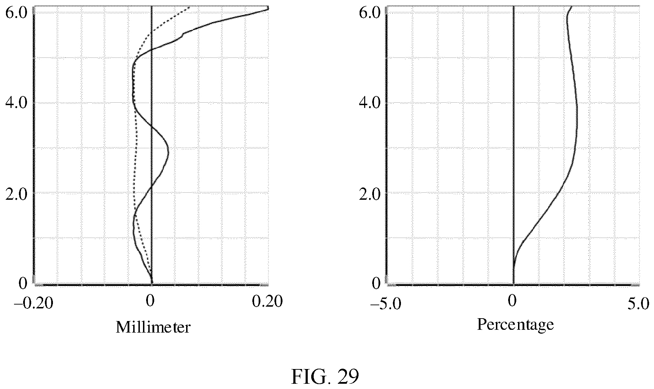

FIG. 28 and FIG. 29 are diagrams for representing optical properties of the optical lens 10 in the eighth implementation.

Specifically, FIG. 28 shows axial chromatic aberrations of the optical lens 10 obtained after light whose wavelengths are respectively 650 nm, 610 nm, 555 nm, 510 nm, and 470 nm passes through the optical lens 10 in the eighth implementation. In FIG. 28, a vertical coordinate represents normalized pupil coordinates, and a horizontal coordinate represents an axial chromatic aberration in a unit of millimeter. It can be learned from FIG. 28, in this implementation, axial chromatic aberrations of the optical lens 10 in various states are controlled within a small range.

In FIG. 29, the left figure is a schematic diagram of field curvature of the optical lens 10, and the right figure is a schematic diagram of an optical distortion of the optical lens 10. In the left figure, a solid line is a schematic diagram of a field curvature in a meridional direction after the light whose wavelength is 650 nm passes through the optical lens 10, and a dashed line is a schematic diagram of a field curvature in a sagittal direction after the light whose wavelength is 650 nm passes through the optical lens 10. The right figure is a schematic diagram of an optical distortion obtained after the light whose wavelength is 650 nm passes through the optical lens 10 in the eighth implementation. Vertical coordinates in the two figures are both from a perspective of an object. A horizontal coordinate in the left figure represents astigmatism values in the unit of millimeter in the meridional direction (the dotted line) and the sagittal direction (the solid line). The right figure shows optical distortion values corresponding to different fields of view, in a unit of percentage. It can be learned from FIG. 29 that, in this implementation, the optical system controls the distortion within a range that cannot be clearly identified by a naked eye.

According to the optical lens 10 provided in this implementation, the optical lens 10 can have the good bokeh effect and imaging effect on the basis of the large range of the f-number by using the configuration manner of each lens element and the combination of lens elements having the specific optical design in each lens element group. In addition, thinning of the electronic device 100 is implemented.

The foregoing descriptions are merely some embodiments and implementations of this application, and are not intended to limit the protection scope of this application. Any variations or replacements readily figured out by a person skilled in the art within the technical scope disclosed in this application shall fall within the protection scope of this application. Therefore, the protection scope of this application shall be subject to the protection scope of the claims.

**Claims**

1. An optical lens (10), comprising a stop (STO) and at least seven lens elements sequentially arranged from an object side to an image side, wherein the stop (STO) is a variable aperture, an f-number of the stop (STO) can be adjusted within a range of 1.2 to 5.0, and the optical lens (10) satisfies the following relational expressions:

$$0.10 \leq TTL/(ImgH \times EPD) \leq 1.10;$$

and

$$CTmax/CTmin \leq 3.5,$$

wherein
TTL is a total track length of the optical lens (10), ImgH is a half diagonal length of an effective photosensitive area of an image plane of the optical lens (10), EPD is an entrance pupil diameter of the optical lens (10), CTmax is a largest value of a thickness for all of the at least seven lens elements on an optical axis, and CTmin is a smallest value of the thickness for all of the at least seven lens elements on the optical axis.

2. The optical lens (10) according to claim 1, wherein the optical lens (10) satisfies the following relational expression:

$$Tmin/Tmax \leq 0.085,$$

wherein
Tmax is a largest value of a distance between any two adjacent lens elements in the at least seven lens elements, and Tmin is a smallest value of the distance between the any two adjacent lens elements in the at least seven lens elements.

3. The optical lens (10) according to claim 1 or 2, wherein the optical lens (10) satisfies the following relational expression:

$$0.55 \leq EPD/Dr5r10 \leq 3.15,$$

wherein

Dr5r10 is a distance between an object-side surface of a third lens element (L3) and an image-side surface of a fifth lens element (L5) on the optical axis.

4. The optical lens (10) according to any one of claims 1 to 3, wherein the at least seven lens elements comprise a first lens element (L1), a second lens element (L2), the third lens element (L3), a fourth lens element (L4), the fifth lens element (L5), a sixth lens element (L6), and a seventh lens element (L7) that are sequentially arranged from the object side to the image side, and the optical lens (10) satisfies the following relational expressions:

$$Tmax/T12 \geq 10.0;$$

$$Tmax/T23 \geq 2.0;$$

$$Tmax/T34 \geq 1.0;$$

$$Tmax/T45 \geq 1.5;$$

$$Tmax/T56 \geq 2.0;$$

$$Tmax/T67 \geq 1.0;$$

and

$$Tmax/BL \geq 0.5,$$

wherein
T12 is a distance between the first lens element (L1) and the second lens element (L2) on the optical axis, T23 is a distance between the second lens element (L2) and the third lens element (L3) on the optical axis, T34 is a distance between the third lens element (L3) and the fourth lens element (L4) on the optical axis, T45 is a distance between the fourth lens element (L4) and the fifth lens element (L5) on the optical axis, T56 is a distance between the fifth lens element (L5) and the sixth lens element (L6) on the optical axis, T67 is a distance between the sixth lens element (L6) and the seventh lens element (L7) on the optical axis, BL is a distance between an image-side surface of a lens element closest to the image plane and the image plane on the optical axis, and Tmax is the largest value of the distance between the any two adjacent lens elements in the at least seven lens elements.

5. The optical lens (10) according to claim 4, wherein the optical lens (10) satisfies the following relational expression:

$$0.1 \leq 1/f1 + 1/f2 + 1/f3 + 1/f4 \leq 0.15,$$

wherein
f1 is a focal length of the first lens element (L 1), f2 is a focal length of the second lens element (L2), f3 is a focal length of the third lens element (L3), and f4 is a focal length of the fourth lens element (L4).

6. The optical lens (10) according to claim 4 or 5, wherein the optical lens (10) satisfies the following relational expression:

$$-0.1 \leq 1/f1 + 1/f3 + 1/f5 + 1/f7 \leq 0.5,$$

wherein
f1 is the focal length of the first lens element (L1), f3 is the focal length of the third lens element (L3), f5 is a focal length of the fifth lens element (L5), and f7 is a focal length of the seventh lens element (L7).

7. The optical lens (10) according to any one of claims 1 to 6, wherein the optical lens (10) satisfies the following relational expressions:

$$|EFL/fi| \leq 1.5,$$

wherein i=1, 2, 3, 4, 5, 6, or 7, or i=1, 2, 3, 4, 5, 6, 7, or 8;

$$|f1/fi| \leq 3.0,$$

wherein i=2, 3, 4, 5, 6, or 7, or i=2, 3, 4, 5, 6, 7, or 8; and

$$|f4/fi| \geq 0.05,$$

wherein i=1, 2, 3, 5, 6, or 7, or i=1, 2, 3, 5, 6, 7, or 8; and
EFL is a focal length of the optical lens (10), f1 is the focal length of the first lens element (L1), f4 is the focal length of the fourth lens element (L4), and fi is a focal length of an i$^{th}$ lens element.

8. The optical lens (10) according to any one of claims 1 to 7, wherein the optical lens (10) satisfies the following relational expressions:

$$0.3 \leq |R1/R2| \leq 1.0;$$

$$1.0 \leq |R3/R4| \leq 2.0;$$

$$0.3 \leq |R5/R6| \leq 1.5;$$

$$0.1 \leq |R7/R8| \leq 15;$$

$$1.0 \leq |R9/R10| \leq 3.5;$$

$$0.5 \leq |R11/R12| \leq 5.0;$$

and

$$0.0 \leq |R13/R14| \leq 3.5,$$

wherein
R1 is a radius of curvature of an object-side surface of the first lens element (L1), R2 is a radius of curvature of an image-side surface of the first lens element (L1), R3 is a radius of curvature of an object-side surface of the second lens element (L2), R4 is a radius of curvature of an image-side surface of the second lens element (L2), R5 is a radius of curvature of the object-side surface of the third lens element (L3), R6 is a radius of curvature of an image-side surface of the third lens element (L3), R7 is a radius of curvature of an object-side surface of the fourth lens element (L4), R8 is a radius of curvature of an image-side surface of the fourth lens element (L4), R9 is a radius of curvature of an object-side surface of the fifth lens element (L5), R10 is a radius of curvature of the image-side surface of the fifth lens element (L5), R11 is a radius of curvature of an object-side surface of the sixth lens element (L6), R12 is a radius of curvature of an image-side surface of the sixth lens element (L6), R13 is a radius of curvature of an object-side surface of the seventh lens element (L7), and R14 is a radius of curvature of an image-side surface of the seventh lens element (L7).

9. The optical lens (10) according to claim 8, wherein the optical lens (10) satisfies that R1, R2, R3, R4, R5, and R6 are all greater than 0 and at least one of R7 and R8 is greater than 0.

10. The optical lens (10) according to any one of claims 1 to 9, wherein the optical lens (10) satisfies the following relational expression:

$$0.2 \leq Dr5r10/TTL \leq 0.4,$$

wherein
Dr5r10 is the distance between the object-side surface of the third lens element (L3) and the image-side surface of the fifth lens element (L5) on the optical axis.

11. The optical lens (10) according to any one of claims 1 to 10, wherein the optical lens (10) satisfies the following relational expression:

$$Dmax/Dmin \geq 2.3,$$

wherein
Dmax is a largest value of a clear aperture on an object-side surface or an image-side surface for all of the at least seven lens elements, and Dmin is a smallest value of the clear aperture on the object-side surface or the image-side surface for all of the at least seven lens elements.

12. The optical lens (10) according to claim 11, wherein the optical lens (10) satisfies the following relational expression:

$$0.25 \leq EPD/Dmax \leq 1.35.$$

13. The optical lens (10) according to any one of claims 1 to 12, wherein all the object-side surfaces and the image-side surfaces of all the lens elements in the optical lens (10) are aspheric surfaces.

14. The optical lens (10) according to any one of claims 2 to 13, wherein the optical lens (10) satisfies the following relational expression:

$$Tmax/CTmax \leq 1.5.$$

15. The optical lens (10) according to any one of claims 4 to 14, wherein the optical lens (10) satisfies the following relational expression:

$$0.8 \leq CT1/MaxCT2L \leq 2.0,$$

wherein
CT1 is a thickness of the first lens element (L1) on the optical axis, and MaxCT2L is a largest value of a thickness for lens elements other than the first lens element (L1) in the at least seven lens elements on the optical axis.

16. The optical lens (10) according to any one of claims 1 to 15, wherein the optical lens (10) satisfies the following relational expressions:

$$Vmin \geq 15;$$

and

$$Vmax \leq 90,$$

wherein
Vmax is a largest dispersion coefficient for all the lens elements of the optical lens (10), and Vmin is a smallest dispersion coefficient for all the lens elements of the optical lens (10).

17. The optical lens (10) according to any one of claims 1 to 16, wherein the optical lens (10) satisfies the following relational expressions:

$$1.65 \leq Nmax \leq 2.0;$$

and

$$1.30 \leq Nmin \leq 1.58,$$

wherein
Nmax is a largest refractive index for all the lens elements of the optical lens (10), and Nmin is a smallest refractive index for all the lens elements of the optical lens (10).

18. The optical lens (10) according to any one of claims 1 to 17, wherein the optical lens (10) satisfies the following relational expression:

$$0.8 \leq STL/TTL \leq 1.5,$$

wherein
STL is a distance between an object at infinity of the stop (STO) of the optical lens (10) and the image plane on the optical axis.

19. A camera module (1), comprising a photosensitive element (20) and the optical lens (10) according to any one of claims 1 to 18, wherein the photosensitive element (20) is located on an image side of the optical lens (10) and on an image plane of the optical lens (10), and the optical lens (10) is configured to project ambient light onto the photosensitive element (20).

20. An electronic device (100), comprising an image processor (2) and the camera module (1) according to claim 19, wherein the image processor (2) is communicatively connected to the camera module (1), the camera module (1) is configured to: obtain image data and input the image data to the image processor (2), and the image processor (2) is configured to process the image data output therefrom.

100

FIG. 1

FIG. 2

FIG. 3A

FIG. 3B

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

<div align="center">**INTERNATIONAL SEARCH REPORT**</div>

| International application No. |
|---|
| **PCT/CN2022/126430** |

| A. | CLASSIFICATION OF SUBJECT MATTER |
|---|---|

G02B 13/00(2006.01)i;  G02B 13/18(2006.01)i

According to International Patent Classification (IPC) or to both national classification and IPC

| B. | FIELDS SEARCHED |
|---|---|

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, VEN, CJFD: 光阑, 光圈, 光拦, 光栏, F数, 可调, 可变, 调节, 七, 7, 透镜, 镜片, stop+, apertur+, F, number+, variabl+, adjust+, chang+, seven+, 7th, lens+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114815168 A (ZHEJIANG SUNNY OPTICS CO., LTD.) 29 July 2022 (2022-07-29) description, paragraphs 63-186, and figures 1-40 | 1-10, 13-20 |
| X | CN 109752823 A (SAMSUNG ELECTRO-MECHANICS CO., LTD.) 14 May 2019 (2019-05-14) description, paragraphs 3-4 and 67-366, and figures 1-32 | 1-20 |
| X | CN 113341540 A (ZHEJIANG SUNNY OPTICS CO., LTD.) 03 September 2021 (2021-09-03) description, paragraphs 59-172, and figures 1A-12D | 1-10, 13-20 |
| X | CN 213276106 U (ZHEJIANG SUNNY OPTICS CO., LTD.) 25 May 2021 (2021-05-25) description, paragraphs 67-179, and figures 1-24C | 1-10, 13-20 |
| A | JP 0713078 A (RICOH K. K.) 17 January 1995 (1995-01-17) entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2023** | **28 January 2023** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/126430**

| Patent document cited in search report | | | Publication date (day/month/year) | Patent family member(s) | | | Publication date (day/month/year) |
|---|---|---|---|---|---|---|---|
| CN | 114815168 | A | 29 July 2022 | None | | | |
| CN | 109752823 | A | 14 May 2019 | US | 2021149156 | A1 | 20 May 2021 |
| | | | | US | 2019137736 | A1 | 09 May 2019 |
| CN | 113341540 | A | 03 September 2021 | None | | | |
| CN | 213276106 | U | 25 May 2021 | None | | | |
| JP | 0713078 | A | 17 January 1995 | US | 5576891 | A | 19 November 1996 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111234324